(19) Europäisches Patentamt
European Patent Office
Office européen des brevets

(11) **EP 2 263 103 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(51) Int Cl.:
*G01S 17/10* *(2006.01)*      *G01S 7/487* *(2006.01)*
*G01S 17/89* *(2006.01)*

(21) Anmeldenummer: **09731665.7**

(22) Anmeldetag: **07.04.2009**

(86) Internationale Anmeldenummer:
**PCT/EP2009/002570**

(87) Internationale Veröffentlichungsnummer:
**WO 2009/127347 (22.10.2009 Gazette 2009/43)**

(54) **OPTISCHER ABSTANDSMESSER UND VERFAHREN ZUR OPTISCHEN ABSTANDSMESSUNG**

OPTICAL DISTANCE METER AND METHOD FOR THE OPTICAL DISTANCE MEASUREMENT

TÉLÉMÈTRE OPTIQUE ET PROCÉDÉ DE TÉLÉMÉTRIE OPTIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008 DE 102008018718**

(43) Veröffentlichungstag der Anmeldung:
**22.12.2010 Patentblatt 2010/51**

(73) Patentinhaber: **Fraunhofer-Gesellschaft zur Förderung der angewandten Forschung e.V.
80686 München (DE)**

(72) Erfinder:
• **SCHREY, Olaf
40878 Ratingen (DE)**
• **BROCKHERDE, Werner
47259 Duisburg (DE)**
• **HOSTICKA, Bedrich
45478 Mühlheim (DE)**

• **ULFIG, Wiebke
25468 Mühlheim (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**WO-A-99/34235      WO-A-2005/052633
WO-A-2007/031102    US-A- 4 129 780
US-A- 5 852 492**

• **SCHREY O M ET AL: "A 4x64 pixel cmos image sensor for 3d measurement applications" EUROPEAN SOLID-STATE CIRCUITS, 2003. ESSCIRC '03. CONFERENCE ON 16-18 SEPT. 2003, PISCATAWAY, NJ, USA,IEEE, 16. September 2003 (2003-09-16), Seiten 333-336, XP010677477 ISBN: 978-0-7803-7995-4**

**Beschreibung**

Die vorliegende Erfindung bezieht sich auf einen optischen Abstandsmesser und ein Verfahren zur optischen Abstandsmessung, wie sie beispielsweise bei 3D-Kameras zum Einsatz kommen.

Das technische Einsatzgebiet der vorliegenden Erfindung ist wie im Folgenden beschrieben wird vielfältig. Die Complementary Metal Oxide Semiconductor (CMOS) Bildsensorik bietet effektive Möglichkeiten, Messsignale in hoher Geschwindigkeit in Echtzeit aufzunehmen. Dies ist von großer Wichtigkeit bei der Aufnahme von dreidimensionalen (3D) Distanzbildern. Pulslaufzeitverfahren und Verfahren mit kontinuierlich moduliertem Licht dienen hierbei der berührungslosen Tiefenerfassung. Dazu wird die Restintensität eines Infrarotlaserlichtes, das von einem Objekt reflektiert wird, gemessen. Man spricht in diesem Zusammenhang auch von 3D-Abstandsmessung.

Typische Anwendungen, bei denen eine optische Abstandsmessung zum Einsatz kommen kann, sind beispielsweise dreidimensionale Inspektions-/Positiönierungssysteme, eindimensionale Positionierungssysteme, wie z.B. Hochregallager oder Befilllungssysteme, im Automotivbereich: Systeme zur KFZ-Innenraumüberwachung, zur Airbagsteuerung, Diebstahlsicherungssysteme, Fahrspurenerkennungssysteme, so genannte Pre-Crash-Sensorik Systeme, Fußgängerschutz oder Einparkhilfen. Denkbar ist auch, dass die optische Abstandsmessung zur Topographievermessung oder zur Personenerkennung bzw. für die Präsenzsensorik verwendet wird. Weitere Anwendungsgebiete liegen in der Verkehrsüberwachung / -zählung, im Logistikbereich, der Industrieautomation oder der Überwachung verschiedener (Gefahren-) Bereiche.

Speziell in der intelligenten Airbagauslösung und bei der Fahrbahnerkennung sind an das Abstandsmesssystem hohe Zuverlässigkeitsanforderungen gestellt. So ist beispielsweise bei intelligenten Airbagsteuerungssystemen die Aufgabe zu lösen, den Airbag in Abhängigkeit vom Abstand des Fahrgastes mit verzögerter Stärke auszulosen. Eine Fahrbahnerkennung muss auch bei Nebel, Dunkelheit, schlechten Witterungsverhältnissen und extremen Gegenlichtsituationen sicher arbeiten. Mit 3D-CMOS-Bildsensoren ist dies möglich. Da aufgrund des zu erwartenden gesetzlichen Druckes, Seitens der Automobilindustrie eine große Nachfrage nach solchen intelligenten Systemen besteht bzw. zu erwarten sein wird, ergibt sich für diese Anwendungsgebiet ein erhebliches Marktpotential.

Der vorteilhafte Einsatz einer aktiven Beleuchtung bei dreidimensionalen (3D) CMOS- Kameras zur Aufnahme eines dreidimensionalen Abstandsbildes, das beispielsweise im Automotivbereich eingesetzt werden kann, sind in den Patentschriften DE 19833207 A1, EP 104366 B1 und WO2007/031102 A1 beschrieben.

Existierende 3D-CMOS-Bildsensoren zur Abstands- bzw. Tiefenmessung basieren in weiten Teilen auf dem Funktionsprinzip eines aktiven Bildpunktsensors bzw. eines aktiven Pixelsensors (APS). Hierbei wird die zeitliche Öffnung eines Belichtungsfensters des Pixels mit der gepulsten Auslösung einer aktiven Szenenbeleuchtung synchronisiert. Mit dem gewünschten Pulslicht zur aktiven Szenenbeleuchtung wird jedoch auch immer ein Anteil eines unerwünschten Hintergrundlichtes mitdetektiert. Außerdem beeinflusst auch die Reflektivität der Szenenobjekte den Anteil des zurückgestrahlten Lichts. Diese Faktoren verfälschen das Nutzsignal, je nach Entfernung des Objekts, zum Teil erheblich. Um eine genügend genaue Abstandsinformation zu erreichen, werden daher mehrere Bilder bei ein- bzw. ausgeschaltetem Laser (Pulslicht), sowie bei zwei verschiedenen effektiven

Belichtungs- oder Shutterzeiten aufgenommen. Diese Verfahrensweise hat einige Nachteile. Zum einen wird durch die Aufnahme der Reihenbildfolgen (serielle Aufnahme) die Bandbreite limitiert, wodurch 3D-Applikationen im Hoch- und Höchstgeschwindigkeitsbereich nicht möglich sind. Des Weiteren ist durch die serielle Reflektanzkorrektur ein zweimaliges Pulsen der Laserquelle notwendig, was eine unnötige Energieverdoppelung bedeutet, die in bestimmten Anwendungsfällen, wie z.B. der KFZ-Außenüberwachung mit den Anforderungen an die Augensicherheit gegenüber Laserstrahlung kollidieren kann.

Die Aufgabe der vorliegenden Erfindung besteht darin, einen optischen Abstandsmesser und ein Verfahren zur optischen Abstandsmessung zu schaffen, wodurch die Messgeschwindigkeit erhöht werden kann und eine zur optischen Abstandsmessung nötige Strahlungsenergie reduziert werden kann.

Diese Aufgabe wird durch den optischen Abstandsmesser gemäß Anspruch 1 bzw. gemäß der Vorrichtung nach Anspruch 10 und den Verfahren gemäß den Ansprüchen 19 und 24 gelöst.

Die mit der Erfindung gelöste Aufgabe besteht in der Schaffung eines optischen Abstandsmessers bzw. einer Vorrichtung und eines Verfahrens zur optischen Abstandsmessung, die sowohl die störenden Hintergrundlichtkomponenten, als auch die Reflektanzkomponenten in einem einzigen Messzyklus erfassen kann. Damit kann also ein zweimaliges Pulsen der Strahlungs- bzw. Laserquelle pro 3D-Aufnahme vermieden werden. Das Problem der Augensicherheit bezüglich der Laserenergie wird dadurch deutlich entschärft, da nur noch die Hälfte der ursprünglich eingesetzte Laserenergie nötig ist. Des Weiteren wird durch den Wegfall einer zweiten Pulssequenz die Einhaltung einer Wartezeit zur Erholung des Lasers von typischerweise einigen Mikrosekunden vereinfacht, da der gesamte Messzyklus pro 3D-Aufnahme bzw. 3D-Abstandsmessung auf lediglich eine Laserpulssequenz reduziert werden kann. Vorteilhaft wird damit die Messzeit gegenüber der Reihenbildaufnahme in erster Näherung halbiert.

Ein optischer Abstandsmesser gemäß der vorliegenden Erfindung umfasst eine gepulste Strahlungsquelle, die ausgebildet ist, um in einem zeitlich zusammenhängenden Strahlungspulszeitraum einen Strahlungspuls mit einer Pulsdauer tp, die kürzer ist als der Strahlungspulszeitraum, zu senden bzw. aktiviert zu sein und in einem zeitlich zusammenhängenden Dunkelzeitraum keinen Strahlungspuls zu senden bzw. deaktiviert zu sein. Ferner umfasst der optische Abstandsmesser gemäß der vorliegenden Erfindung eine Erfassungseinrichtung zur Erfassung unterschiedlicher Strahlungstriengen in zwei überlappenden Erfassungszeiträumen, während des Strahlungspulszeitraumes, um Reflexionen des Strahlungspulses an einer Objektoberfläche und Hintergrundstrahlung aufzunehmen und/oder während des Dunkelzeitraums, um eine Hintergrundstrahlung aufzunehmen. Außerdem umfasst der optische Abstandsmesser eine Auswerteeinrichtung, die basierend auf den erfassten Strahlungsmengen ein Signal ermittelt, das von einem Abstand des optischen Abstandsmessers zu einem Objekt abhängt.

Die vorliegende Erfindung schafft ferner ein Verfahren zur optischen Abstandsmessung durch Aussenden eines Strahlungspulses mit einer gepulsten Strahlungsquelle, die ausgebildet ist, um in einem zeitlich zusammenhängenden Strahlungspulszeitraum einen Strahlungspuls mit einer Pulsdauer tp, die kürzer ist, als der Strahlungspulszeitraum, zu senden und in einem zeitlich zusammenhängenden Dunkelzeitraum keinen Strahlungspuls zu senden. Ferner weist das Verfahren ein Erfassen unterschiedlicher Strahlungsmengen mit einer Erfassungseinrichtung, die ausgebildet ist, um in zwei überlappenden Erfassungszeiträumen, während des Strahlungspulszeitraums, Reflexionen an einer Objektoberfläche des Strahlungspulses und Hintergrundstrahlung aufzunehmen, und/oder während des Dunkelzeitraums eine Hintergrundstrahlung aufzunehmen auf und ferner ein Ermitteln von Signalen, die von dem zu messenden Abstand abhängen, basierend auf den erfassten Strahlungsmengen.

Ausführungsbeispiele der vorliegenden Erfindung bieten den Vorteil, dass eine Erfassungseinrichtung zur Erfassung unterschiedlicher Strahlungsmengen in zwei überlappenden Erfassungszeiträumen in paralleler Weise ausgebildet ist, so dass in einem einzigen Strahlungspulszeitraum, die in einem reflektierten Strahlungspuls enthaltenen Informationnen über Abstands-, und Reflektanz- , sowie Hintergrundanteile, aufgenommen werden können und in einem zweiten Dunkelzeitraum ein Hintergrundsignalanteil ohne reflektierten Strahlungspuls erfasst werden kann. In einer in einem Ausführungsbeispiel in paralleler Weise ausgelegten Auswerteeinrichtung kann dann basierend auf den erfassten Strahlungsenergien ein Signal ermittelt werden, das von einem Abstand des optischen Abstandsmessers zu einem Objekt abhängt.

Der erfindungsgemäße optische Abstandsmesser bzw. das erfindungsgemäße Verfahren zur optischen Abstandsmessung kann somit die Möglichkeit bieten, die Messgeschwindigkeit überproportional zu erhöhen und eine zur Messung benötigte Strahlungsenergie zu halbieren.

Ausführungsbeispiele der vorliegenden Erfindung und Erläuterungen dazu werden nachfolgend Bezug nehmend auf die beiliegenden Zeichnungen näher erläutert. Es zeigen:

Fig. 1        eine schematische Darstellung der Messanordnung zur Tiefen- bzw. Abstandserfassung;

Fig. 2        den Schaltplan eines analogen Auslesepfades für eine 3D-Kamera;

Fig. 3a       das zeitliche Schema zur Entfernungsmessung mit Störlichtkorrektur für eine Schaltung gemäß Fig. 2;

Fig. 3b       eine Darstellung des Zusammenhangs zwischen dem Pixel-Reset und dem Shüttersignal aus der Fig. 3a;

Fig. 4        eine schematische Darstellung eines optischen Abstandsmessers gemäß einem Ausführungsbeispiel der vorliegenden Erfindung;

Fig. 5        eine Schaltung für einen optischen Abstandsmesser bzw. einer Vorrichtung zur Distanzmessung mit Doppelabtastung gemäß einem Ausführungsbeispiel der vorliegenden Erfindung;

Fig. 6        ein Taktschema zur Erläuterung der Funktionsweise der Vorrichtung zur Distanzmessung mit Doppelabtastung gemäß Fig. 5;

Fig. 7        ein simuliertes Zeitdiagramm zur Erläuterung der Funktionsweise von Ausführungsbeispielen der vorliegenden Erfindung;

Fig. 8        eine Schaltung für einen optischen Abstandsmesser bzw. einer Vorrichtung zur Distanzmessung mit Doppelabtastung gemäß einem weiteren Ausführungsbeispiel der vorliegenden Erfindung;

Fig. 9        eine weitere Schaltung für einen optischen Abstandsmesser bzw. einer Vorrichtung zur Distanzmessung mit Doppelabtastung gemäß einem weiteren Ausführungsbeispiel der vorliegenden Erfindung;

Fig. 10       ein schematisches Spannungs-Zeitdiagramm zur Darstellung der Extrapolation des Hintergrundlichtanteils mit Hilfe der in Fig. 9 und Fig. 8 erläuterten Schaltung;

Fig. 11a    ein weiteres schematisches Spannungs-Zeitdiagramm zur Darstellung der Extrapolation des Hintergrundlichtanteils mit Hilfe der in Fig. 9 und Fig. 8 dargestellten Schaltung;

Fig. 11b    eine schematische Darstellung zu den Rücksetzphasen für eine Vorrichtung gemäß Ausführungsbeispielen der vorliegenden Erfindung;

Fig. 12    Blockdiagramm eines Doppelabtastabstandsmesssystems gemäß einem Ausführungsbeispieles der vorliegenden Erfindung, das eine Vielzahl von Abstandsmessern in einer Matrix angeordnet aufweist; und

Fig. 13    ein Flussdiagramm zum Verfahren zur optischen Abstandsmessung gemäß einem Ausführungsbeispiel der vorliegenden Erfindung;

Bezüglich der nachfolgenden Beschreibung der Ausführungsbeispiele der vorliegenden Erfindung sollte beachtet werden, dass in den unterschiedlichen Figuren für funktional identische bzw. gleichwirkende oder funktionsgleiche, äquivalente Elemente zur Vereinfachung in der gesamten Beschreibung die gleichen Bezugszeichen verwendet werden.

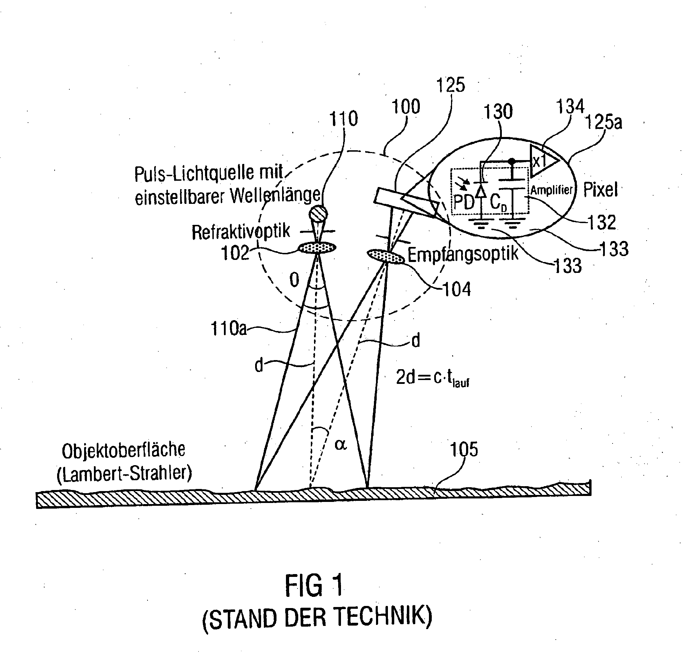

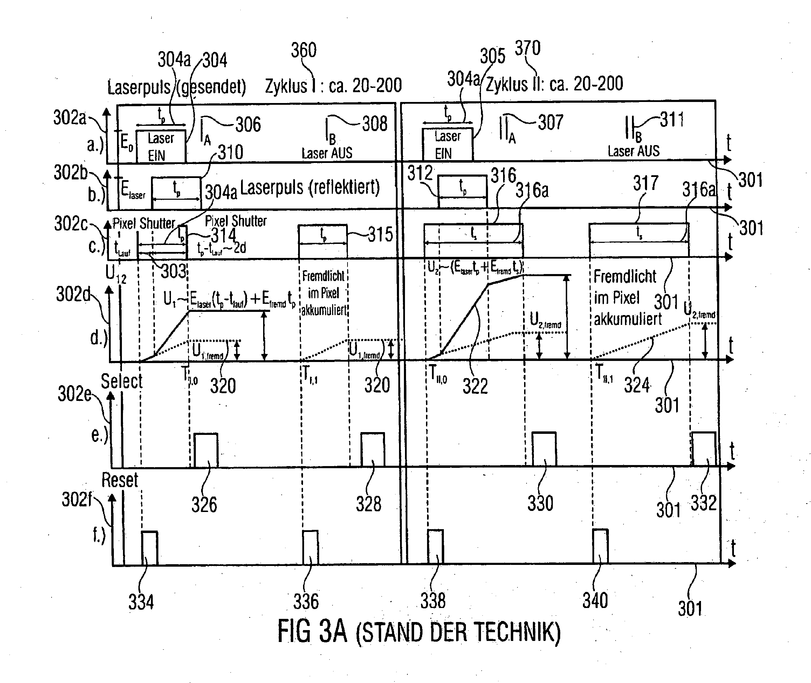

In Fig. 1 ist eine schematische Anordnung eines Messsystems 100 zur optischen Abstandsmessung und eine mögliche Bildpunkt- (Pixel-) Architektur 125a eines Bildsensor dargestellt. Zur Erfassung einer Abstands- bzw. Tiefeninformation wird ein Zielobjekt 105 mit einer gepulsten Laserquelle 110 bestrahlt. Phasenstarr dazu gekoppelt beginnt die Belichtung eines integrierenden Photoempfängerarrays im Bildsensor 125. Die Entfernung d des Sensors zum bestrahlten Objekt 105 ist maßgebend für die Laufzeit des von der Laserquelle 110 ausgesandten Lichtpulses 110a und damit für die vom Empfänger 125 gemessene Lichtleistung in einem festgelegten Belichtungszeitfenster. Der optische Abstandsmesser 100 kann beispielsweise eine Refraktivoptik 102 und eine Empfangsoptik 104 aufweisen, durch die der Laserpuls auf das Zielobjekt bzw. der reflektierte Strahl auf den Empfänger 125 abgebildet wird. Der Laserpuls kann nach der Refraktivoptik 102 einen Öffnungswinkel $\theta$ aufweisen. Die Pulslichtquelle bzw. Laserlichtquelle 110 kann gegenüber dem Empfänger 125 einen vernachlässigbaren kleinen Winkel $\alpha$ aufweisen, weshalb die gesamte Wegstrecke des ausgesandten und reflektierten Lichtpulses 2d beträgt. Bei einem bekannten festen Winkel $\alpha$ und einem bekannten Abstand d kann dieser örtliche Unterschied auch rechnerisch kompensiert werden. Der Laserpuls wird an der bestrahlten Oberfläche 105, wobei die Objektoberfläche ein Lambertstrahler sein kann, reflektiert und trifft dann nach einer Laufzeitverzögerung $t_{Lauf}$ = 2d/$c_{Licht}$ mit der Restenergie $E_{Laser}$ auf die photoempfindliche Fläche der Empfangseinheit 125. Die Empfangseinheit kann beispielsweise ein CMOS-Bildsensor sein. Der Laserpuls aus der Pulslichtquelle 110 und die Belichtungsmessung im Empfänger starten phasenstarr einstellbar gekoppelt bzw. einstellbar zeitlich gekoppelt, also in diesem Ausführungsbeispiel z.B. gleichzeitig zu einem Zeitpunkt t = $T_{1,0}$ (siehe Fig.3a). Je nachdem, wie groß die Entfernung d ist, ist die Laufzeit bis der reflektierte Puls im Empfänger 125 detektiert wird, also kürzer oder länger und der Zeitraum $t_{Lauf}$ 303 verschiebt sich entlang einer Zeitachse t in Fig.3a nach links oder rechts. Mit wachsender Entfernung nimmt also die Verzögerungszeit zu und der Zeitraum $t_{Lauf}$ verschiebt sich nach rechts. Im Empfänger 125 erfolgt die Messung integrativ in einem kurzen Zeitintervall $t_p$ bzw. in einem längeren Zeitintervall $t_s$, der so genannter "Shutter"-Zeit. In dieser Anordnung ist das vom Photoempfänger 125 gemessene Signal linear proportional zur Entfernung. Wie in Fig. 1 schematisch dargestellt ist, kann der Photoempfänger 125 aus einer Reihe von Bildpunkten (Pixel) 125a bestehen. Bei dem Pixel 125a kann es sich beispielsweise um eine PN-Photodiode 130 handeln. Die PN-Photodiode 130 kann durch Beleuchtung einen Photostrom bzw. eine Photoladung erzeugen. Das Pixel 125a kann beispielsweise eine N-Wannen/P-Substrat-Photodiode mit einer parallelen Sperrschichtkapazität $C_D$ 132 sein, die mit einem Anschluss auf Masse 133 liegen kann und mit einem weiteren Anschluss an einem Pufferverstärker 134, der als ein Spannungsfolger (Source-Folger) ausgebildet sein kann, angeschlossen ist.

Bei dem Empfänger 125 kann es sich also beispielsweise um einen aus aktiven Pixelelementen (active pixel sensor (APS)) aufgebauten Sensor handeln, der beispielsweise in CMOS-Technologie gefertigt ist und deshalb oft auch als CMOS-Sensor bezeichnet wird. Durch die Verwendung der CMOS-Technologie wird es möglich, weitere Funktionen, wie z.B. eine freie Auswahl des auszulesenden Sensor-Bereiches, eine Belichtungskontrolle, eine Kontrastkorrektur oder eine Analog-Digitalwandlung zu integrieren.

Es ist auch denkbar, dass es sich bei dem Pixel 125a um ein passives Pixel handelt, bei dem das Pixel keinen Verstärker 134 aufweist, der das von der Photodiode hervorgerufene Signal verstärkt bzw. aufbereitet. Beispielhaft sollen hier zwei Prinzipien zur Pixelauslese erwähnt werden. Bei einem ersten Prinzip der Ladungsauslese wird eine auf einer Sperrschichtkapazität 133 akkumulierte Ladung, die aufgrund des inneren Photoeffektes bei der Wechselwirkung einer Strahlung mit der Photodiode erzeugt wird, ausgelesen. Bei einem anderen Pixelprinzip weist das Pixel einen Pufferverstärker in Form eines Spannungsfolgers 134 auf. Bei Bildpunkten, die nach diesem Prinzip funktionieren, wird eine über dem Pixel anliegende Spannung ausgelesen. Die Spannung wird dabei durch die Ladungen, der aufgrund des inneren Photoeffektes erzeugten Elektronen und Löcher, reduziert.

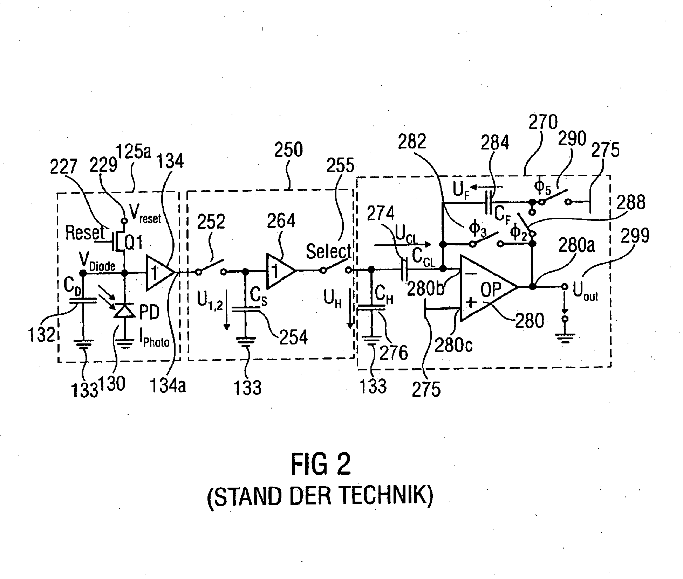

Im Folgenden soll die Funktionsweise eines Empfängers 125 beispielhaft anhand einer Schaltung (Fig. 2), für ein Pixel 125a des Bildaufnehmers 125 und ein dazugehöriges Zeitdiagramm (Fig. 3a), mit dem die Messvorschrift zur Entfernungsmessung mit Störlichtkorrektur veranschaulicht wird, dargestellt werden.

Fig. 2 zeigt den schematischen Aufbau eines Standard 3D-Laufzeit-Analogauslesepfades für ein Pixel 125a. Das Pixel 125a in Fig. 2 besitzt als Detektionseinheit z. B. eine N-Wannen/P-Substrat-Photodiode PD 130 mit der Sperrschichtkapazität $C_D$ 132. Die Photodiode PD 130 wird zu Beginn jedes Belichtungsvorgangs über einen Rücksetz- (Reset-) Schalter 227, der als Transistor Q1 ausgebildet sein kann, mit einem Rücksetzpotential $V_{Reset}$ 229 vorgespannt. Das Pixel 125a weist außerdem einen Pufferverstärker 134, beispielsweise einen so genannten Sourcefolger bzw. Spannungsfolger auf. Der Pufferverstärker 134 ist in der Regel als Source-Folger ausgeführt und puffert die über der Kapazität $C_D$ 132 anliegende Spannung ab. Der Ausgang des Spannungsfolgers 134 ist mit einer Abtasthalteschaltung 250 über einen Schalter bzw. Shutter 252 mit einer Abtastkapazität $C_S$ 254 (Sample-Kapazität) und einem weiteren Pufferverstärker 264 der Abtasthalteschaltung 250 verbindbar. Der Ausgang des Pufferverstärkers 264 kann über einen Auswahl- bzw. Selecttransistor 255 mit einer sich anschließenden Schaltung zur (korrelierten) Doppelabtastung - (C)DS-Schaltung (Correlated Double Sampling) 270 verbunden werden.

Zu Beginn eines Belichtungsvorganges wird die Photodiode 130 und damit die Sperrschichtkapazität $C_D$ 132 und die Abtastkapazität $C_S$ 254 nach dem Schließen des Reset-Transistor $Q_1$ 227 und des Schalters 252 auf das definierte Startpotential $U_{ref}$ 229 aufgeladen. Wenn anschließend der Reset-Schalter 227 geöffnet und damit die Photodiode 130 mit der Sperrschichtkapazität 132 von der Spannung $U_{Ref}$ 229 entkoppelt wird, entladen die durch die auf die Photodiode einfallende Strahlung entstehenden Elektron(en)-Loch-Paare die Kapazitäten $C_D$ 132 und $C_S$ 254 so lange, bis der Shutter 252 deaktiviert, also geöffnet wird. Eine Spannung, die den zeitlichen Entladevorgang durch die einfallende Strahlung wiedergibt, wird also über den Pufferverstärker 134 auf die Kapazität $C_S$ 254 übertragen. Nach einer Integrationszeit $\tau_{int}$ wird dieser Vorgang unterbrochen. Das heißt, nach dem Öffnen des Schalters 252 weist die Abtastkapazität 254 der Abtasthalteschaltung 250 (Sample and Hold) eine Restspannung $U_1$ auf, die den Entladevorgang der Sperrschichtkapazität der Photodiode aufgrund der einfallenden Strahlung in einem Zeitraum beschreibt. Eine räumliche Abstandserfassung bzw. Abstandsmessung wird durch die Anordnung der Pixel in einer Matrix (Array) und mittels synchroner Belichtung aller Empfangselemente (Pixel) und dem Shuttersignal an der Photodiode möglich. Das Öffnen des Shutters, also das Beenden der Integration, unterbricht den Stromfluss zur Abtast- (Sample-) Kapazität $C_S$ 254, so dass der Momentanwert der auf den Kapazitäten $C_D$ 232 und $C_S$ 254 aufakkumulierten lichtproportionalen Elementarladungen "eingefroren" wird. Überlappen der reflektierte Laserpuls und die Integrationszeit während des Shuttersignals teilweise, so enthält die an $C_S$ 254 anliegende Spannung $U_1$ Informationen zum Abstand d und zu Fremdlichtanteilen. Ist die Dauer des Shuttersignals und damit die Integrationszeit größer als die Pulsbreite $t_p$ des Lasers, so ist die Spannung $U_2$, die an der Abtastkapazität 254 anliegt ein Maß für die komplett akkumulierte Laserleistungsdichte, die ferner Informationen zu Fremdlichtanteilen, zu Reflektanzanteilen r und zur Empfindlichkeit R der verwendeten Photodiode aufweist. Dieser Umstand wird ausgenutzt, um Fremdlicht bzw. Hintergrundlichtanteile zu kompensieren. Das durch die Integration in einem Zeitfenster, welches mit dem reflektierten Laserpuls teilweise überlappt, gewonnene Messergebnis enthält zusätzlich zum Abstand d und den Fremdlichtanteilen noch Informationen zur Reflektanz r des belichteten Objekts, zur Empfindlichkeit R der verwendeten Photodiode. welche durch unvermeidliche Einflüsse der Umgebungsbeleuchtung hervorgerufen werden.

Zur Gewinnung des reinen Abstandswertes, also zur Abstandsmessung, werden bei der bisherigen Methode hintereinander zwei Messzyklen ausgeführt, welche sich durch die Integrationszeit bzw. die Zeitdauer des Shuttersignals, also die Zeit, in der der Shutter bzw. der Schalter 252 geschlossen ist und der Entladevorgang der Sperrschichtkapazität 232 und der Abtastkapazität 254 durch ein auf die Photodiode einfallendes Licht abläuft, unterscheiden. Ein erstes Integrationsfenster mit einer ersten Integrationszeit, die dem Shuttersignal entspricht, kann also der Zeitdauer und der Pulsbreite $t_p$ des zur Abstandsmessung verwendeten Laserpulses entsprechen und eine zweite Integrationszeit $t_s$ bzw. $t_{int2}$ eines zweiten Integrationsfenster kann größer sein als die Pulsbreite $t_p$ des Laserpulses.

Das zeitliche Schema bzw. die Messvorschrift zur Entfernungsmessung, mit der in Fig. 2 dargestellten Schaltung, ist schematisch in den Zeitdiagrammen der Fig. 3a veranschaulicht. Die x-Achse 301 der Diagramme a-f in Fig. 3a stellen Zeitachsen t dar, auf der der zeitliche Verlauf des Zusammenwirkens der einzelnen Komponenten der Schaltung zur Entfernungsmessung mit Störlichtkorrektur dargestellt ist. Sowohl die Zeitachsen t 301, als auch die entsprechenden y-Achsen 302a - 302f sind in willkürlichen Einheiten dargestellt und dienen lediglich zur Veranschaulichung der zeitlichen Vorgänge. Auf der y-Achse ist in Fig. 3a in dem Diagramm a der Laserpuls, in dem Diagramm b der reflektierte Laserpuls, in dem Diagramm c das Schaltverhalten des Pixel-Shutters, in dem Diagramm d die Spannung an der Abtastkapazität, in dem Diagramm e das Selectsignal und in dem Diagramm f das Rücksetz- bzw. Resetsignal dargestellt.

Wie in Fig. 3a dargestellt ist, wird in einem ersten Zyklus I 360, der zwei Unterzyklen $I_A$ 306 und $I_B$ 308 aufweist und beispielsweise 20 - 2000 Nanosekunden dauern kann, auf ein Reset-Signal 334 hin (Diagramm f), wie oben beschrieben, eine Photodiode definiert vorgespannt, also eine vorgespannte Sperrschichtkapazität aufgebaut. Beim Reset des Pixels durch den Schalter 227 (Fig.2) kann der Schalter 252, also der Shutter, zeitgleich geschlossen werden. Die Integrationszeit startet, wenn der Reset auf "0" ist, also der Resetschalter 227 wieder geöffnet wird und stoppt, wenn das Shuttersignal anschließend auf "0" ist, also der Schalter 252 wieder geöffnet wird.

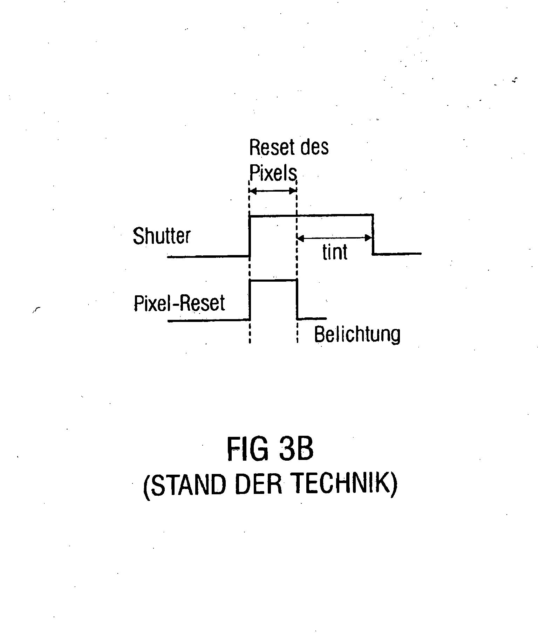

Fig. 3b zeigt diesen zeitlichen Zusammenhang zwischen dem Shuttersignal, welches in Diagramm c in Fig. 3a dargestellt ist und dem Pixelresetsignal, wie es in Diagramm f dargestellt ist detaillierter. Während des Pixelresets 334, 336, 338 und 340 sollten jeweils, wie in Fig. 3a dargestellt ist, der Pixelshutter 314, 312, 316 und 317 geschlossen sein. D.h. der Pixelreset und das Shuttersignal starten gleichzeitig und überlappend. Die Integrationszeit $t_{int}$ startet jedoch erst, nachdem der Pixelreset beendet ist, also wieder auf "0" ist. Die Integration stoppt, wenn der Shutter bzw. der Schalter 252 geöffnet wird, also das Shuttersignal auf "0" zurückgeht.

Während des Resets oder nach dem Reset wird ein Laserpuls 304 (Diagramm a, Fig 3a) mit einer Pulsdauer $t_p$ 304a von einer Laserquelle ausgeschickt. Zeitgleich zu dem Reset des Pixels wird der Pixel-Shutter 252, wie in Fig. 2 beschrieben, für eine Zeitdauer 314, die mindestens der Zeitdauer des Laserpulses 304 entspricht, geschlossen. Dies ist in Diagramm c dargestellt. Während des ersten Zeitfensters 314 wird, abhängig vom erfassten Fremdlichtanteil und von dem erfassten reflektierten Laserpuls, die Abtastkapazität 254 entladen und damit die Spannung $U_1$ über der Abtastkapazität 254 verringert, wie in Diagramm d dargestellt ist. Der von einem Objekt reflektierte Laserpuls 304 (Fig. 3a), Diagramm b) mit seiner Pulsbreite 304a benötigt eine gewisse Laufzeit zu dem Objekt und von dem Objekt zurück zu dem Sensor. Der reflektierte Laserpuls 312 ist deshalb auf der Zeitachse 301 gegenüber dem Pulsfenster 304 um die Laufzeit $t_{Lauf}$ 303 nach rechts verschoben. Das Pixel erfasst, wie in den Diagrammen c und d dargestellt ist, während der Laufzeit $t_{Lauf}$ 303 des Laserpulses nur Fremdlichtanteile, wodurch sich ein Spannungssignal $U_{1,\,fremd}$ 320 an der Abtastkapazität 254 einstellt. In einem zweiten Zeitbereich $t_p - t_{Lauf}$ des Integrationsfensters 314 ergibt sich eine überlagerte Spannung $U_1$, die sowohl den Fremdlichtanteil, als auch den von dem Objekt reflektierten Laserlichtanteil enthält. Der zweite zeitliche Anteil des Integrationsfensters 314 (mit $t_{int} \geq t_p$) entspricht dem Überlappungszeitraum des reflektierten Laserpulses 312 mit dem ersten Integrationsfenster des Pixelshutters 314. Das heißt, dies entspricht für dieses Beispiel einer Zeitdauer $t_p - t_{Lauf}$, in der neben den Fremdlicht- bzw. Hintergrundlichtanteilen, der Reflektanz und der Empfindlichkeit auch die Abstandsinformation zu dem Objekt enthalten ist. Wie in Diagramm d gezeigt ist, gilt für die Spannung $U_1$: $U_1 \sim E_{laser}\,(t_p - t_{lauf}) + E_{fremd}\,t_p$. Durch Schließen 326 des Select- oder Auswahlschalters 255 (siehe Fig. 2) wird das Spannungssignal $U_1$ an die Schaltung zur (korrelierten) Doppelabtastung 270 weitergegeben. Diese Schaltung zur (korrelierten) Doppelabtastung und ihre Funktionsweise werden weiter unten genauer erläutert.

Durch einen weiteren Reset-Puls 336 wird, wie in Diagramm f dargestellt, ein erster Unterzyklus $I_A$ 306 während des ersten Zyklus 360 beendet und der zweite Unterzyklus $I_B$ 308, in dem kein Laserpuls ausgesandt wird, beginnt. In diesem zweiten Unterzyklus $I_B$ 308 wird für eine Zeitdauer $t_{int} \geq t_p$, die mindestens der Pulsdauer 304 entspricht, integriert. Dazu wird der Pixelschalter wieder geschlossen, so wie in einem Zeitfenster 315 mit der Zeitdauer $t_{int} \geq t_p$ ein Fremdlichtanteil 320 ohne Reflexionsanteile durch den Laserpuls integriert bzw. Ladungen akkumuliert. Das heißt, nach Ablauf der Integrationszeit, wird der Pixelschalter 252 geöffnet, so dass an der Abtastkapazität 254 (Fig.2) eine Spannung $U_{1,fremd}$ 320 anliegt, die dem Hintergrund bzw. Fremdlichtanteil entspricht. Die an der Abtastkapazität 254 anliegende Spannung kann dann wieder durch Schließen des Selekt-Schalters 255 an die Schaltung zur (korrelierten) Doppelabtastung 270 weitergegeben werden. Damit ist der erste Zyklus I 360, der aus dem ersten Unterzyklus $I_A$ 306 und dem zweiten Unterzyklus $I_B$ 308 besteht, beendet. Um eine korrekte Korrektur bezüglich Reflektanz und abstandsbedingter Abschwächung des Laserpulses für die Entfernungsmessung durchführen zu können, folgt nun ein zweiter Zyklus II 370, der sich ebenfalls in zwei Unterzyklen $II_A$ 307 und $II_B$ 311 aufteilt. Der zweite Zyklus II 370 kann beispielsweise wieder einen Zeitraum von 20 bis 2000 Nanosekunden umfassen. Analog zur Beschreibung des ersten Zyklus I 360 wird auf ein Resetsignal hin das Pixel mit der Abtastkapazität 254 auf eine definierte Referenzspannung vorgespannt. Beispielsweise kann, wie in Fig. 3a dargestellt ist, auch ein zweiter Laserpuls 305 mit der Laserpulsdauer 304a $t_p$ zeitgleich zu dem zweiten Zeitfenster 316 zur Integration des Photodiodensignals ausgesendet werden.. Das zweite Zeitfenster 316 weist eine Zeitdauer $t_s$ bzw. $t_{int2}$ 316a auf, die größer ist als die Pulsbreite bzw. Zeitdauer 304a ($t_p$) des Laserpulses 304. Wie im Diagramm b in Fig. 3 dargestellt ist, wird analog zum ersten Zyklus 360 der reflektierte Laserpuls 312 mit seiner Pulsbreite $t_p$ um die Laufzeit $t_{Lauf}$ versetzt am Pixelsensor eintreffen. Wie im Diagramm c in Fig. 3 dargestellt ist, weist in dem zweiten Zyklus II 370 das zweite Integrationszeitfenster 316 eine Zeitdauer $t_s$ 316a auf, die größer ist als die Zeitdauer $t_p$ des Laserpulses. Aus diesem Grunde wird das Photodiodensignal für den gesamten Laserpuls $t_p$ und den entsprechenden Fremdlichtanteil aufintegriert. Dies ist in der Spannungskurve 322 in Diagramm d veranschaulicht. An der Abtastkapazität 254 liegt eine Spannung $U_2$ an, für die gilt: $U_2 \sim (E_{Laser}\,t_p + E_{fremd}\,t_s)$. Die Spannung $U_2$ enthält also, sowohl Fremdlichtanteile als auch, die vollständig aufintegrierte reflektierte Laserpulsleistung. Die nach dem Öffnen des Shutters bzw. Schließen des Zeitfensters 316, an der Abtastkapazität 254 anliegende Spannung $U_2$ kann dann wieder durch Schließen 330 des Auswahlschalters 254 an die Schaltung zur (korrelierten) Doppelabtastung 270 übergeben werden. Damit ist der erste Unterzyklus $II_A$ 307 aus dem zweiten Zyklus II 370 beendet. Durch ein Zurücksetzen 340 der Photodiode durch Schließen eines Resetschalters 227 (Fig. 2) kann das Pixel und damit verbunden die Sperrschichtkapazität wieder auf einen vordefinierten Ausgangswert gesetzt werden. Der Reset 340 des Pixels mit dem Schalter 227 kann wieder zeitgleich mit dem Schließen des Shutterschalters 252 erfolgen. Die Integrationszeit des Zeitfensters 316 startet dann wieder, wenn der Reset auf "0" ist, also der Resetschalter 227 geöffnet wird und stoppt, wenn das Shuttersignal danach auf "0" ist, also der Schalter 252 wieder geöffnet wird. Im zweiten Unterzyklus $II_B$ 311 des zweiten Zyklus II, wird ebenfalls kein Laserpuls ausgesendet. Aber es wird wieder über einen zweiten Zeitraum 317 mit der Zeitdauer $t_s$ 316a, die durch das Öffnen des Resetschalters 227 und dem Zeitraum in dem der Shutterschalter 252 geschlossen ist gegeben ist integriert. Dadurch wird das Hintergrundlicht bzw. der Fremdlichtanteil an dem Signal $U_2$ in einem zum ersten Unterzyklus 308 identischen Zeitfenster, jedoch ohne reflektierten Laserpuls, aufintegriert. Das heißt, die an der Abtastkapazität 254 anliegende Spannung $U_{2,fremd}$ 324 enthält nur bzw. entspricht nur dem Fremdlichtanteil der akkumulierten Ladung bzw. Spannung an der Kapazität. Nach dem Öffnen des Pixel-Shutters 252 bzw. dem Schließen des Zeitfensters 317 kann dann beispielsweise wieder durch ein Ansteuern 332 des Auswahl- / Selectschalters 255 (Fig.2) das Spannungssignal $U_{2,fremd}$ 324 an die Schaltung zur (korrelierten) Doppelabtastung 270 übergeben werden. Denkbar ist auch eine kontinuierliche Übertragung des Spannungssignals während der Integrationszeit $t_{int}$ an die Schaltung zur (korrelierten) Doppelabtastung.

Wie in Fig. 2 gezeigt ist, weist die Schaltung zur (korrelierten) Doppelabtastung (correlated double sampling (CDS)) einen Operationsverstärker 280 auf, wobei der Ausgang 280a des Operationsverstärkers über einen Rücksetzschalter 282 mit dem "nicht invertierenden" Eingang 280b des Operationsverstärkers 280 verbindbar ist. Der "invertierende" Eingang 280c des Operationsverstärkers 280 kann auf einem Offset-Potential 275 liegen. Die korrelierte Doppelabtastschaltung 270 kann über den Selectschalter 255 mit der Abtastkapazität $C_s$ 254, welche auf einer Anschlussseite auf Masse 133 liegen kann und dem Pufferverstärker 264, verbunden werden. Der Pufferverstärker 264 kann beispielsweise eine Verstärkung von 1 aufweisen.

Die Schaltung zur (korrelierten) Doppelabtastung 270 weist ferner eine Abtastkapazität $C_{CI}$ 274 und eine Haltekapazität $C_H$ 276 auf, die auf einer Anschlussseite auf Masse 133 liegt. Die Abtastkapazität $C_{CI}$ 274 ist auf einer Seite mit $C_H$ und auf ihrer anderen Anschlussseite mit dem "nicht invertierenden" Eingang 280b des Operationsverstärkers und mit einem Rückkopplungskondensator $C_F$ 284 verbunden. Der Rückkopplungskondensator 284 kann entweder über einen Rückkopplungsschalter $\Phi_2$ 288 mit dem Ausgang 280a des Operationsverstärkers verbunden werden, oder aber über einen Referenzpotentialschalter $\Phi_5$ 290 mit einem Referenzpotential 275 verbunden werden. Eine Ausgangsspannung der korrelierten Doppelabtastschaltung 270 kann dann an dem Ausgang 299 anliegen.

Das Funktionsprinzip der Schaltung zur (korrelierten) Doppelabtastung 270 basiert darauf, dass zwischen zwei Spannungswerten, nämlich dem einem ersten Spannungswert V1 und einem zweiten Spannungswert V2 eine Spannungsdifferenz gebildet werden kann, die an dem Ausgang 299 anliegt. Der erste Spannungswert V1 kann beispielsweise der Rücksetzspannungswert 275 sein und der zweite Spannungswert V2 kann beispielsweise ein Signalspannungswert sein. Der erste Spannungswert V1 und der zweite Spannungswert V2 werden zu zwei aufeinander folgenden Zeitpunkten, die um eine Taktphase verschoben sind, abgetastet. Dabei wird ein Spannungswert zuerst auf der Abtastkapazität 254, 274 zwischengespeichert, so dass sich in einer zweiten Taktphase an der Rückkopplungskapazität 284, die auf dem Rücksetzspannungswert 275 liegt ein Differenzsignal bzw. eine Differenzspannung zwischen den zwei Spannungssignalen ausbilden kann. Dabei wird ein eventuell vorhandener Offset und ein niederfrequentes Rauschen der durch den Verstärker 280 oder durch den vorhergehenden Pufferverstärker bzw. der Abtasthalteschaltung 250 oder das Pixelelement 125a auftreten kann, und der sich auf beide Spannungswerte (den ersten Spannungswert V1 und den zweiten Spannungswert V2) auswirken kann, unterdrückt. Zudem ermöglicht die korrelierte Doppelabtastschaltung 270 eine im Vergleich zur CDS-Frequenz niederfrequente Rauschunterdrückung.

Im Folgenden soll die Funktionsweise der korrelierten Doppelabtastschaltung 270 näher erläutert werden. In einer ersten Phase, in der der Schalter 282 $\Phi_3$ geschlossen ist, ist der Eingang 280b und der Ausgang 280a des Operationsverstärkers 280 über den Schalter 282 kurzgeschlossen. Der Schalter $\Phi_5$ 290 ist offen und nur vor den Integrationsphasen 306, 308, 307 und 311 (Fig.3a) bzw. vor allen Mehrfachbelichtungen zum einmaligen Vorspannen auf eine Referenzspannung 275 geschlossen. Der Schalter $\Phi_2$ 288 ist offen, also nicht leitend. Während dieser Phase wird der Rückkopplungskondensator 284 bis zu einer Offsetspannung des Operationsverstärkers 280 aufgeladen. Die Abtastkapazität 274 rund die Haltekapazität 276 werden bis zu einer Differenzspannung, welche nach dem Schließen des Auswahltransistors 255 an der CDS-Schaltung 270 anliegt und der Referenzspannung 275 abzüglich der Operationsverstärker-Offsetspannung entspricht, aufgeladen. Diese erste Zeitphase entspricht dem ersten Unterzyklus 306 in Fig. 3a. Während einer zweiten Phase wird der Schalter 288 $\Phi_2$ geschlossen und der Schalter $\Phi_3$ 282 geöffnet. Dadurch wird der Operationsverstärker 280 in seine rückgekoppelte Verstärkung geschaltet. Nach dem zweien Unterzyklus 308 liegt an dem Eingang der korrelierten Doppelabtastschaltung 270 die Spannung 320 $U_{1,fremd}$ an und die Differenz der Spannungen $U_{1,Laser,fremd}$ - $U_{1,fremd}$ zuzüglich einer Referenzspannung 275 liegt an dem Ausgang 280a des Operationsverstärkers an. In analoger Weise wird in aufeinander folgenden Takten die Differenzspannung $U_{2,diff} = U_{2,laser,fremd}$ - $U_{2,fremd}$ zuzüglich der Referenzspannung 275 am Ausgang 299 der korrelierten Doppelabtastschaltung 270 bereitgestellt.

Zur Gewinnung des reinen Abstandswertes werden bei bisherigen Methoden hintereinander zwei Messzyklen 360, 370 ausgeführt, welche sich durch die Zeitdauer eines Shuttersignals $t_{int}$, also beispielsweise $t_p$ bzw. $t_s$ unterscheiden. In einem ersten Messzyklus ist die Shutterdauer bzw. das Zeitfenster für die Integration größer oder gleich der Dauer des Laserpulses und zugleich mit dem reflektierten Laserpuls teilweise überlappend. Dadurch wird neben dem Hintergrundlichtanteil bzw. dem Fremdlichtanteil, dem Leckstromanteil der Photodiode und der Reflektanz auch die Abstandsinformation, die in der Spannung $U_1$ enthalten ist, erfasst. Jeder Zyklus ist noch einmal in einen Unterzyklus $I_a$ 306 und $I_b$ 308 unterteilt. Im ersten Unterzyklus 306 wird die Laserquelle eingeschaltet, damit kann die am Ausgang des Pixels anliegende Spannung $U_{1,laser,fremd}$ durch folgende Gl.1 beschrieben werden:

$$U_{1,Laser,fremd} = R \cdot r [E_{Laser} \cdot (t_{int} - t_{Lauf}) + E_{fremd} \cdot t_{int}] \quad (1)$$

In Gl.1 entspricht R der Empfindlichkeit der Photodiode, r der Reflektanz des belichteten Objekts, $E_{Laser}$ der Leistung /Bestrahlungsstärke des Laserpulses, $E_{fremd}$ der Fremdlichtleistung /-Bestrahlungsstärke und $t_{int}$ der Integrationszeit $t_{int}$, welche in diesem Beispiel der Laserpulsdauer $t_p$ entspricht und $t_{Lauf}$ der Laufzeit des Laserpulses. Allgemein gilt $t_{int} \geq t_p$.

Gl.1 enthält einen laufzeitabhängigen und einen vom Fremdlicht abhängigen Anteil. Im Unterzyklus 308 wird die Messung wiederholt, allerdings ohne Laserlichtpuls. Es gilt dann:

$$U_{1,fremd} = R \cdot r \cdot E_{fremd} \cdot t_{int} \quad (2)$$

In Gl.2 enthält $U_{1,fremd}$ lediglich den Fremdlicht- bzw. Hintergrundlichtanteil.

In der CMOS-Technik ist es möglich, Analogsignale direkt auf dem Bildsensorchip mit sehr hoher Genauigkeit voneinander zu subtrahieren, dies geschieht üblicherweise in einer so genannten Schaltung zur korrelierten Doppelabtastung (correlated double sampling stage, CDS-Stufe), wie sie oben beschrieben ist. Eine Differenzbildung der beiden Spannungen mit Hilfe der CDS-Stufe, wie es weiter oben beschrieben wurde, liefert also:

$$U_{1,diff} = U_{1,Laser,fremd} - U_{1,fremd} = R \cdot r \cdot E_{Laser} (t_{int} - t_{Lauf}) \quad (3)$$

Da die Messungen in den Unterzyklen 306 und 308 zeitlich sehr nahe beieinander liegen, sind die Fremdlichtanteile nahe zu 100% korreliert, weshalb Gl.3 in der dargestellten Form gültig ist. Gl.3 enthält aber noch die Reflektanz r, die von Bildpunkt zu Bildpunkt erheblich schwenken kann - im äußersten Fall bis zu einem Faktor 1:40 für die Reflexion- und die Empfindlichkeit R der Photodiode, welche herstellungsbedingt von Pixel zu Pixel ebenfalls schwenken kann. Diese Parameter können nun im zweiten Messzyklus 370 kompensiert werden. Vorher wird jedoch der Differenziert $U_{1,diff}$ im Kamerasystem gespeichert, da die Pixel und die CDS-Schaltung für den nächsten Messzyklus zurückgesetzt werden. Der nun folgende zweite Messzyklus II 370 ist identisch mit Messzyklus I 360 bis auf die Dauer des Schuttersignals. Das zweite Shutterzeitfenster 316 besitzt nun eine deutlich längere Zeitdauer $t_s$ 316a als die Dauer des Laserpulses $t_p$, so dass die gesamte Pulsform des reflektierten Laserpulses in dem Pixel während des zweiten Zeitfensters aufintegriert wird. Aus diesem Grund ist keine Information über den Abstand d zu dem zu vermessenden Objekt im Spannungssignal $U_2$ enthalten. Diese Information wird durch das "Abschneiden" des empfangenen Laserpulses, wie es im Zusammenhang mit dem ersten Zyklus beschrieben wurde, gewonnen. Für den Untermesszyklus $II_A$ 308 des zweiten Zyklus 370 gilt folgende Gleichung:

$$U_{2,Laser,fremd} = R \cdot r (E_{Laser} \cdot t_{int} + E_{fremd} \cdot t_s) \quad (4)$$

Es wird also, wie im Zyklus $I_A$ 306, ein Laser- und ein Fremdlicht- bzw. Hintergrundanteil aufgenommen. Der zweite Unterzyklus $II_B$ 311 liefert wieder den erforderlichen Fremdlichtänteil $U_{2,fremd}$ zur Kompensation:

$$U_{2,fremd} = R \cdot r \cdot E_{fremd} \cdot t_s \quad (5)$$

In einer nachfolgenden Spannungsdifferenzbildung, die analog, wie im Zusammenhang mit dem ersten Zyklus beschrieben wurde, in der korrelierten Doppelabtastschaltung (CDS-Stufe) 270 durchgeführt wird, ergibt sich für die Spannung $U_{2,diff}$ folgende Gleichung:

$$U_{2,diff} = R \cdot r \cdot E_{Laser} \cdot t_{int} \qquad (6)$$

Im Kamerasystem (nicht gezeigt in den Figuren) kann nun der Quotient aus den Gl.3 und Gl. 6 berechnet werden. Es gilt dann:

$$\frac{U_{1,diff}}{U_{2,diff}} = \frac{(t_{int} - t_{Lauf})}{t_{int}} \qquad (7)$$

Mit dem Zusammenhang für die Laufzeit $t_{Lauf} = 2d/C_{Licht}$ und der Voraussetzung, dass die Laserpulsquelle sowie der CMOS-Bildsensor, die Entfernung bzw. die räumliche Lage von der Laserpulsquelle und dem Bildsensor bekannt und rechnerisch kompensierbar ist, gilt schließlich für den Abstand $d_{x,y}$ eines Pixels (x, y) in einem Pixelarray mit x mal y Pixel von seinem korrespondierenden Objektpunkt in der Szene:

$$d_{x,y} = \frac{c_{Licht}}{2} \cdot t_{int} \left( \left[ 1 - \frac{U_{1,diff}}{U_{2,diff}} \right]_{x,y} \right) \qquad (8)$$

In der Praxis kann die Empfindlichkeit und damit die Abstandsauflösung dadurch gesteigert werden, dass die Zyklen I 360 und II 370 jeweils mehrmals hintereinander ausgeführt werden und in der Schaltung zur (korrelierten) Doppelabtastung die Differenzen $U_{1,diff}$ und $U_{2,diff}$ aufaddiert und jeweils in einem Analogspeicher auf dem Chip abgelegt werden. Bei N Wiederholungszyklen des Zyklus I verbessert sich damit die Abstandsauflösung $\Delta d$ um den Faktor Wurzel(N). Zur Erläuterung der Messvorschrift genügt jedoch die Betrachtung eines Einzelzyklus. Neben dem Fremdlichtanteil und der Reflektanz werden durch die hier beschriebene Messvorschrift effizient Dunkelstromanteile und tief frequente Rauschanteile, die vom CMOS-Sensor herrühren, kompensiert, da sie durch die unmittelbare Messung nach der Beleuchtung mit der Laserpulsquelle hochkorreliert sind. Der große Nachteil der hier beschriebenen konventionellen Messmethode liegt in der Lasererholzeit, die zwischen den Zyklen I und II eingehalten werden muss. Des Weiteren wird für die hier zur Erläuterung beschriebene Standardmethode zur Abstandsmessung sowohl im ersten Zyklus I 360, als auch im zweiten Zyklus II 370 jeweils ein Laser- bzw. Strahlungspuls benötigt. Die serielle Reflektanzkorrektur macht ein zweimaliges Pulsen der Laserquelle notwendig, was eine unnötige Laserenergieverdopplung bedeutet, die in bestimmten Anwendungsfällen (Kfz-Außenüberwachung) mit den Anforderungen an die Augensicherheit kollidieren kann.

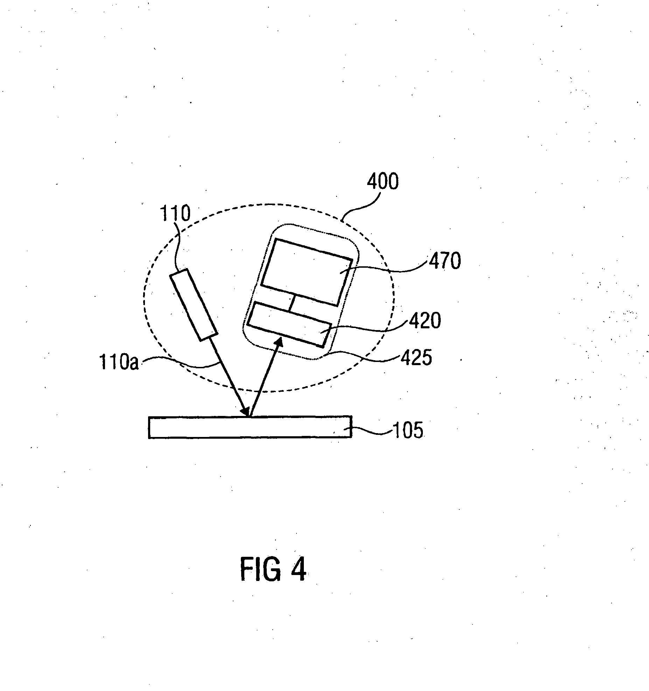

In Fig. 4 ist ein optischer Abstandsmesser 400 gemäß einem Ausführungsbeispiel der vorliegenden Erfindung dargestellt. Der optische Abstandsmesser 400 weist eine gepulste Strahlungsquelle 110 auf, die ausgebildet ist, um in einem zeitlich zusammenhängenden Strahlungspulszeitraum einen Strahlungspuls mit einer Pulsdauer $t_p$, die kürzer ist als der Strahlungspulszeitraum zu senden und in einem zeitlich zusammenhängenden Dunkelzeitraum keinen Strahlungspuls zu senden. Der optische Abstandsmesser 400 weist ferner eine Erfassungseinrichtung 420 zur Erfassung unterschiedlicher Strahlungsmengen in zwei überlappenden Erfassungszeiträumen und zwar während des Strahlungspulszeitraums, um Reflexionen des Strahlungspulses an einer Objektoberfläche und eine Hintergrundstrahlung aufzunehmen und/oder in zwei überlappenden Erfassungszeiträumen und zwar während des Dunkelzeitraumes, um eine Hintergrundstrahlung aufzunehmen. Der optische Abstandsmesser 400 weist ferner eine Auswerteeinrichtung 470 auf, die basierend auf den erfassten Strahlungsmengen ein Signal ermittelt, das von einem Abstand des optischen Abstandsmessers zu einem Objekt 105 abhängt. Ein Empfänger 425 kann eine oder mehrere Erfassungseinrichtungen 420 und Auswerteeinrichtungen 470 aufweisen.

Bei der gepulsten Strahlungsquelle kann es sich beispielsweise um einen gepulsten Laser handeln, der einen Strahlungspuls im ultravioletten (UV), sichtbaren oder im infraroten (IR) Spektralbereich emittiert. Bei dem emittierten Strahlungspuls kann es sich auch um einen modulierten Strahlungspuls handeln. In diesem Fall wird ein Objekt, dessen Abstand ermittelt werden soll, mit moduliertem Licht bestrahlt werden, wobei das vom Pixel empfangene Signal empfangsseitig demoduliert wird, so dass die Phasendifferenz zwischen dem gesendeten und dem reflektierten Signal die Auskunft über die Distanz zu dem Objekt liefert.

Die Erfassungseinrichtung 420 kann beispielsweise so ausgebildet sein, dass die zwei überlappenden Erfassungszeiträume, während des Strahlungspulszeitraumes, mit dem Strahlungspuls der gepulsten Strahlungsquelle synchronisiert starten, wobei ein erster Erfassungszeitraum mit einer zeitlichen Dauer $t_{int}$ beispielsweise der Pulsdauer $t_p$ entspricht und ein zweiter Erfassungszeitraum eine zeitliche Dauer $t_{int2}$ aufweist, die länger ist als die Strahlungspulsdauer $t_p$ und/oder, dass die zwei überlappenden Erfassungszeiträume, während des Dunkelzeitraums, nach Ablauf des Strahlungspulszeitraumes synchron zueinander starten, wobei ein dritter Erfassungszeitraum beispielsweise der Pulsdauer $t_p$ entspricht, und ein vierter Erfassungszeitraum eine zeitliche Dauer $t_{int2}$ aufweist, die länger ist als die Pulsdauer $t_p$.

In einem anderen Ausführungsbeispiel kann die Erfassungseinrichtung 420 so ausgebildet sein, dass die zwei überlappenden Erfassungszeiträume zur Erfassung der Reflexionen des Strahlungspulses den Strahlungspulszeitraum definieren und die Erfassungszeiträume phasenstarr gekoppelt und zeitlich versetzt mit dem Strahlungspuls der gepulsten Strahlungsquelle starten. Der erste Erfassungszeitraum kann dabei kleiner, größer oder gleich $t_p$ sein ($t_{int} \geq t_p$). Der zweite Erfassungszeitraum kann eine zeitliche Dauer $t_{int2}$ aufweisen, die länger ist als die Strahlungspulsdauer $t_p$ ($t_{int2} > t_p$). Die zwei überlappenden Erfassungszeiträume, während des Dunkelzeitraums, können synchron oder phasenstarr gekoppelt zueinander starten, wobei ein erster Erfassungszeitraum, des Dunkelzeitraums eine zeitlichen Dauer $t_{int3}$ und ein zweiter Erfassungszeitraum, des Dunkelheitraums eine zeitliche Dauer $t_{int4}$ aufweisen kann. Die zeitliche Dauer des ersten und zweiten Erfassungszeitraumes im Dunkelzeitraum kann unterschiedlich lang sein. In Ausführungsbeispielen kann die zeitliche Dauer des ersten und des zweiten Erfassungszeitraumes, des Dunkelzeitraums der zeitlichen Dauer des ersten und zweiten Erfassungszeitraumes des Strahlungspulszeitraums entsprechen. Der Dunkelzeitraum kann vor oder nach einem Strahlungspulszeitraums liegen. Die Erfassungszeiträume werden auch als Integrationsfenster mit einer Integrationszeit oder als Shutter bzw. Shuttersignal mit einer entsprechenden Shutter- oder Integrationszeit bezeichnet.

In Ausführungsbeispielen kann die Erfassungseinrichtung 420 ferner einen optischen Sensor zur Erfassung unterschiedlicher Strahlungsmengen aufweisen, der ein Signal, beispielsweise ein elektrisches Signal, basierend auf einer Ladung oder Spannung bereitstellt, das dann in den überlappenden Erfassungszeiträumen detektiert werden kann.

In anderen Ausführungsbeispielen der vorliegenden Erfindung kann die Auswerteeinrichtung 470 des optischen Abstandsmessers 400 beispielsweise so ausgebildet sein, dass es sich bei dem von der Auswerteeinrichtung 470 zu ermittelnden Signals um Differenzsignale handelt. Diese Differenzsignale können von der Auswerteeinrichtung durch eine Differenzbil-dung von in der Auswerteeinrichtung 470 zwischengespeicher-ten Signalen erzeugt werden. Diese zwischengespeicherten Signale stehen in Abhängigkeit zu den von der Erfassungs-einrichtung 420 in zwei überlappenden Erfassungszeiträumen während des Strahlungspulszeitraumes und des Dunkelzeitraumes erfassten unterschiedlichen Strahlungsmengen. In anderen Worten ist die Auswerteeinrichtung 470 so ausgebildet, dass Differenzsignale durch eine Differenzbildung zwischen den beiden, in dem Strahlungspulszeitraum und in dem Dunkelzeitraum, in den jeweils zwei überlappenden Erfassungszeiträumen erfassten Signale gebildet werden, die eine definierte Abhängigkeit zu der von der Erfassungseinrichtung erfassten Strahlungsmenge aufweisen.

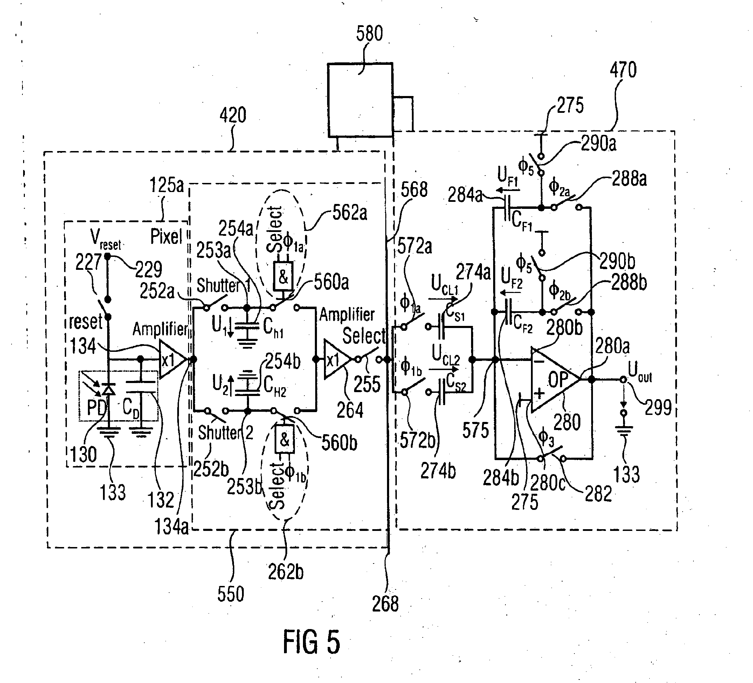

In Fig. 5 ist in einem weiteren Ausführungsbeispiel eine Erfassungseinrichtung 420 und eine Auswerteeinrichtung 470 in Form eines Schaltungsplans dargestellt. Die Erfassungseinrichtung 420 weist in einem Ausführungsbeispiel ein Pixelelement 125a, sowie eine Abtasthalteschaltung 550 auf. Das Pixelelement 125a weist eine Photodiode 130 und eine dazu parallel angeordnete Sperrschichtkapazität 132 der Photodiode auf, wobei die Anode der Photodiode und ein Anschluss der Sperrschichtkapazität 132 auf einem Massepotential 133 liegen. Die Photodiode und die Sperrschichtkapazität sind über einen Rücksetzschalter 227 mit einer Rücksetzspannung $V_{reset}$ 229 kuppelbar. Wie in Fig. 5 dargestellt, ist die Kathode und der zweite Anschluss der Sperrschichtkapazität an einem Pufferverstärker 134 angeschlossen. Der Ausgang des Pufferverstärkers 134, bei dem es sich beispielsweise um einen Spannungsfolger (Source-Folger) mit einer Verstärkung von 1 handeln kann, ist mit einer in paralleler Weise aufgebauten Abtasthalteschaltung 550 verbunden. Die Abtasthalte- (Sample and Hold) Schaltung 550 weist in zwei parallelen Zweigen je eine Abtaska-pazität 254a und 254b auf, wobei jeweils ein Anschluss der Abtastkapazitäten 254a und 254b auf dem Massepotential 133 liegt und der jeweils andere Anschluss der Abtastkapazitäten über je einem Schalter 252a und 252b in jedem Parallelzweig mit dem Ausgang des Pufferverstärkers 134 verbunden ist. Die Abtastkapazitäten 254a und 254b sind des Weiteren über einen Schaltungsknoten 253a bzw. 253b und über ein logisches UND-Gatter mit einem weiteren Schalter 560a und 560b verbunden. In dem Ausführungsbeispiel können die Schalter 560a und 560b durch eine Ansteuerlogik 562a, 562b angesteuert werden. Das Öffnen und Schließen der Schalter 562a und 562b hängt in diesem Ausführungsbeispiel von einem Auswahlbzw. Selectsignal und dem $\Phi_{1a}$ bzw. $\Phi_{1b}$ Signal ab. Die Abtasthaltekapazitäten 254a bzw. 254b sind über die Schalter 560a bzw. 560b mit einem weiteren Pufferverstärker 264 und über diesen mit dem Auswahlschalter 255 und damit den Ausgang der Abtasthalteschaltung 250 verbindbar.

In Fig. 5 ist des Weiteren eine Leseleitung 568 dargestellt, über die in Ausführungsbeispielen der vorliegenden Erfindung Pixel, bzw. Erfassungseinrichtungen 420, welche beispielsweise in Zeilen und Spalten angeordnet sind, bei entsprechender Ansteuerung durch eine Steuerlogik mit der nachgeschalteten Auswerteeinrichtung 470 verbunden werden können.

Die Auswerteeinrichtung 470 kann beispielsweise einen Operationsverstärker 280 aufweisen, wobei ein "invertierender Eingang" 280b des Operationsverstärkers 280 mit dem Ausgang 280a des Operationsverstärkers über einen Schalter 282, der mit einem Signal $\Phi_3$ angesteuert werden kann, verbindbar ist. Der nicht invertierende Eingang 280c des Operationsverstärkers 280 kann auf einem Referenzpotential 275 liegen. Eine in paralleler Weise verschaltete erste 274a und zweite 274b Abtastkapazität der Auswerteeinrichtung 470 ist über einen ersten 572a und einen zweiten 572b Abtastschalter mit dem Eingang der Auswerteeinrichtung 470 verbunden. Der erste 572a und der zweite 572b Abtastschalter können jeweils auf ein Signal $\Phi_{1a}$ bzw. $\Phi_{1b}$ hin geöffnet oder geschlossen werden. Die beiden Abtastkapazitäten 274a und 274b sind an ihrer anderen Anschlussseite mit einem Knoten 575 verbunden, über dem zum einen eine elektrische Verbindung zu dem "invertierenden" Eingang 280b des Operationsverstärkers 280 gegeben ist und zum anderen eine elektrische Verbindung zu zwei parallele verschalteten Rückkopplungskapazitäten $C_{F1}$ 284a und $C_{F2}$ 284b. Der Knoten 575 kann außerdem über den Schalter 282 mit dem Ausgang des Operationsverstärkers 280a gekoppelt werden. Die beiden Rückkopplungskapazitäten 284a und 284b sind mit dem Eingang 280a des Operationsverstärkers 280 über die Verstärkerschalter 288a bzw. 288b verbunden. Die beiden Rückkopplungskapazitäten 284a und 284b, die in paralleler Weise verschaltet sind, sind zudem jeweils über einen Referenzspannungsschalter 290a und 290b mit einem Referenzpotential 275 elektrisch gekoppelt. Die Referenzspannungsschalter 290a und 290b lassen sich auf ein Signal $\Phi_5$ hin schließen oder öffnen. Die beiden Verstärkerschalter 288a und 288b lassen sich auf ein Signal $\Phi_{2a}$ bzw. $\Phi_{2b}$ hin öffnen oder schließen. Der Ausgang 280a des Operationsverstärkers ist mit dem Ausgang 299 der Auswerteeinrichtung verbunden, wobei der Ausgang 299 der Auswerteeinrichtung 299 gleichzeitig einem Ausgang des erfindungsgemäßen optischen Abstandsmessers bzw. der erfindungsgemäßen Vorrichtung entsprechen kann. An diesem Ausgang kann das Auswerteergebnis bzw. ein Teil des Auswerteergebnisses in Form einer Spannung $U_{out}$ ausgegeben oder zu einer Weiterverarbeitung weitergegeben werden. Dabei kann es sich um ein Differenzspannungssignal handeln.

In einem weiteren Ausführungsbeispiel der vorliegenden Erfindung kann die Vorrichtung bzw. der optische Abstandsmesser, wie er in Fig. 5 angedeutet ist, eine Steuerlogik 580 aufweisen, die so ausgebildet sein kann, dass die oben erwähnten Shutter und Schalter 227, 252a, 252b, 560a, 560b, 255, 572a, 572b, 282, 288a, 288b, 290a, 290b so angesteuert werden, dass ein Funktionieren der Erfassungseinrichtung und der Auswerteeinrichtung, wie in Ausführungsbeispielen dieser Erfindung beschrieben ist, ermöglicht wird.

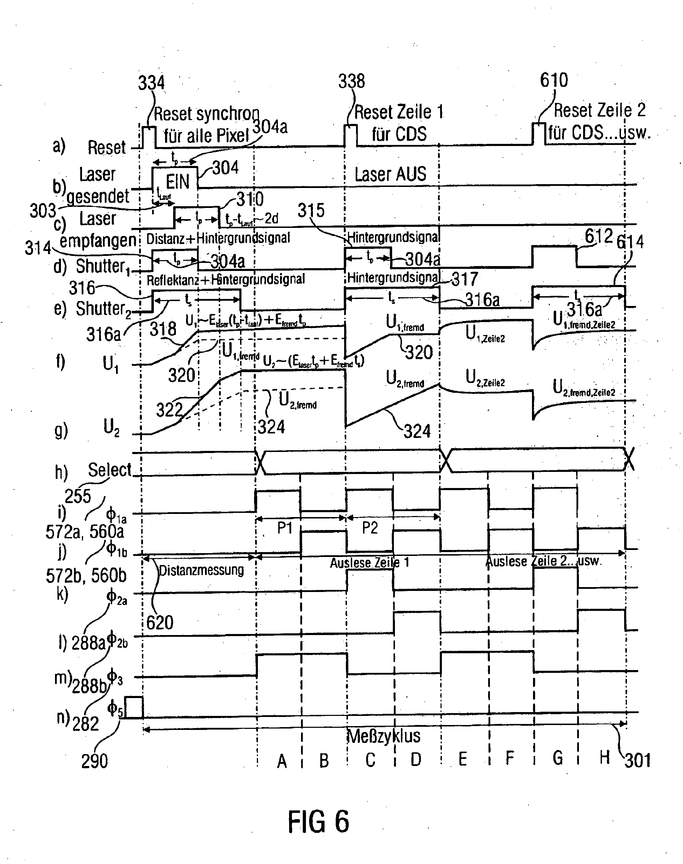

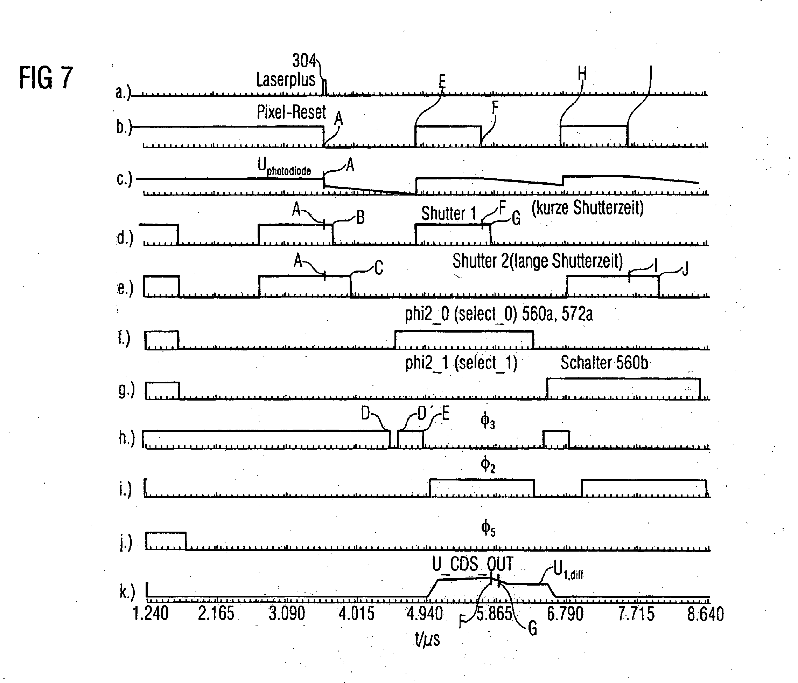

Die Funktionsweise des obigen Ausführungsbeispiels.aus Fig. 5 ist in dem schematischen Zeitschaltungsdiagramm in Fig. 6 dargestellt. In den Schaltungsdiagrammen a - n in Fig. 6 ist auf der x-Achse jeweils die Zeit t in willkürlichen Einheiten aufgetragen und auf den y-Achsen der Diagramme a - n Signalimpulse, Lichtimpulse, Spannungen oder Schaltzustände in willkürlichen Einheiten. In dieser Beschreibung der Funktionsweise der Schaltung aus Fig.5 wird davon ausgegangen, dass Erfassungseinrichtungen 420 bzw. erfindungsgemäße Vorrichtungen in einer Matrix in Zeilen und Spalten angeordnet sein können, wobei jeder Spalte eine Auswerteeinrichtung 470 zugeordnet sein kann, und die Erfassungseinrichtungen 420 zeilenweise über diese spaltenweise zugeordneten Auswerteeinrichtungen 470 ausgelesen bzw. ausgewertet werden kann. Ein Ausführungsbeispiel zu einer Gesamtanordnung wird weiter unten im Zusammenhang mit Fig. 7 gegeben.

Auf ein Resetsignal 334 hin wird an alle Pixel 125a eine definierte Resetspannung $V_{reset}$ 229 angelegt, so dass deren Photodioden auf eine definierte Spannung gelegt werden. Nachdem sämtliche Pixel auf einen vordefinierten Zustand zurückgesetzt wurden, erfolgt mit zeitlich bekannter Kopplung, z.B. zeitgleich, wie in diesem Ausführungsbeispiel dargestellt mit dem Aussenden eines Laserpulses 304 mit einer Pulsdauer 304a (Diagramm b) ein Schließen des Shutters 252a und 252b (Fig. 5). Das Schließen des Shutters 252a, also das elektrische Verbinden des Pixelelementes mit der Abtasthalteschaltung 550 für den ersten Shutter 252a (Fig.5) kann für einem ersten Zeitraum 304a, der der Pulsbreite $t_p$ des Laserpulses 304 entspricht erfolgen. Die Integrationszeit $t_{int1}$ für dieses erste Zeitfenster 314 bzw. für den ersten Erfassungszeitraum kann also der Pulsdauer $t_p$ des ausgesandten Laserpulses 304 entsprechen. Allgemein gilt jedoch $t_{int1} \geq t_p$. Das zweite Zeitfenster 316, des gleichzeitig mit dem ersten Shutter 252a geschlossenen zweiten Shutters 252b weist in diesem Ausführungsbeispiel eine zeitliche Dauer $t_{int2}$ 316a auf, die länger ist als der erste Erfassungszeitraum 314 mit der zeitlichen Dauer $t_{int1}$ 304a.

Wie in den Diagrammen f und g in Fig. 6 dargestellt ist, bilden sich nach dem Öffnen der Zeitfenster 314 bzw. 316 und damit nach dem elektrischen Verbinden des Pixelelements 125a mit den Abtastkapazitäten 254a bzw. 254b der Abtasthalteschaltung 550 an den beiden Abtastkapazitäten die Spannungen $U_1$ 318 bzw. $U_2$ 322 aus. Da der erste Erfassungszeitraum 314, der zeitlichen Dauer des Laserpulses entsprechen kann und damit kürzer ist, als der zweite Erfassungszeitraum 316, weist die Abtastkapazität 254a nach dem Schließen des Zeitfensters 314 bzw. dem Öffnen des Shutters 252a eine Spannung $U_1$ auf, die unterschiedlich ist zu der Spannung $U_2$, die an der parallel geschalteten zweiten Abtastkapazität 254b nach dem Schließen des zweiten Zeitfensters 316 anliegt. Da der an einem Objekt reflektierte Laserpuls 310 mit der Pulsdauer 304a um die Laufzeit 303 verzögert bei dem Pixelelement 125a auftrifft, ist in der, an der Abtastkapazität 254a anliegenden Spannung $U_1$ 318, nach dem Schließen des ersten Zeitfensters 304 eine Information über die Distanz bzw. den Abstand von dem Objekt enthalten. Die Spannung $U_1$ 318 enthält zudem Fremdlicht bzw. Hintergrundlichtanteile, sowie Informationen zur Reflektanz r und der Empfindlichkeit R der Photodiode. Für die Spannung $U_1$ gilt der in Gl. (1) gezeigte Zusammenhang. Die zweite Spannung $U_2$ enthält, da das zweite Zeitfenster 316 eine zeitliche Dauer $t_{int2}$ besitzt, die größer als die Pulsbreite $t_p$ ist, also beispielsweise größer ist, als die Pulsdauer $t_p$ und die Laufzeit 303 $t_{Lauf}$, Informationen über den gesamten an dem Objekt reflektierenden Laserpuls 310. Da der gesamte reflektierte Laserpuls aufintegriert bzw. erfasst wurde, ist in der Spannung $U_2$ keine Information mehr über den Abstand bzw. die Distanz zu dem Objekt enthalten. Die an der zweiten Abtastkapazität 254b anliegende zweite Spannung $U_2$ enthält aber dafür Informationen über die Reflektanz r bzw. die Sensibilität oder Empfindlichkeit R des Pixels. Zusätzlich enthält sie auch Informationen zu dem Hintergrundsignal bzw. zu einem Fremdlichtanteil 324.

In anderen Worten ausgedrückt können durch die parallele Auslegung der Abtasthalteschaltung 550 und einer entsprechenden Steuerung, der sich überlappenden unterschiedlichen Zeitfenstern 314 und 316, die beiden Unterzyklen $I_A$ 306 und $II_A$ 307 aus Fig. 3 parallel, also mit einem einzelnen Laserpuls, aufgenommen werden.

In den Diagrammen h - n in Fig. 6 wird die Funktionsweise der verschiedenen Schalter, der in Fig. 5 dargestellten Schaltung während der Abstandsmessung erläutert. Vor dem gesamten Akkumulationszyklus werden die Schalter 290a und 290b einmalig mit Hilfe des Steuersignals $\Phi_5$ geschlossen, um die Rückkopplungskapazitäten 284a und 284b auf eine Referenzspannung 275 aufzuladen. Die Schalter 290a und 290b werden vor dem synchronen Reset 334 für alle Pixel der Erfassungseinrichtung 420 wieder geöffnet. Nach dem Erfassen des reflektierten Laserpulses in den zwei überlappenden Erfassungszeiträumen 314 und 316 wird der Auswahlschalter 255 (Fig. 5) geschlossen (Diagramm h), wodurch eine Verbindung der Erfassungseinrichtung 420 mit der Auswerteeinrichtung 470 hergestellt wird. In einer Phase A wird das Steuersignal $\Phi_{1a}$ zusammen mit dem Selectssignal logisch auf "1" gesetzt, so dass der Schalter 560a geschlossen wird. Der Schalter 572a in der Auswerteeinrichtung 470 wird ebenfalls über das Steuersignal $\Phi_{1a}$ geschlossen, so dass sich eine leitende Verbindung zwischen der ersten Abtastkapazität 254a in der Abtasthalteschaltung 550 und der ersten Abtastkapazität 274a in der Auswerteeinrichtung 470 ausbildet. In der Phase A wird durch das Steuersignal $\Phi_3$ der Schalter 282 geschlossen. Dadurch wird zum einen der Operationsverstärker 280 kurzgeschlossen und zum anderen die Rückkopplungskapazitäten 284a und 284b auf eine Offsetspannung des Operationsverstärkers aufgeladen. Der Abtastkondensator 274a lädt sich in dieser Phase auf eine Differenzspannung zwischen der Eingangsspannung $U_1$ 318 und der Referenzspannung 275 des Operationsverstärkers 280, abzüglich einer Offsetspannung des Operationsverstärkers auf.

Während einer zweiten Phase B wird in analoger Weise durch Öffnen der Schalter 560a und 572a und durch Schließen der Schalter 560b und 572b auf ein Steuersignal $\Phi_3$ und $\Phi_{1b}$ hin, die zweite Abtastkapazität 274b auf eine Differenzspannung gelegt, welche durch die Eingangsspannung $U_2$ 322 abzüglich der Referenzspannung 275 minus der Offsetspannung des Operationsverstärkers 280 gegeben ist. In einer dritten Phase C wird dann der Schalter 282 auf das Steuersignal $\Phi_3$ hin wieder geöffnet, d.h. eine leitende Verbindung wird unterbrochen. In dieser Phase wird auch der Schalter 560a und 572a durch das Steuersignal $\Phi_{1a}$ geschlossen und die Rückkopplungskapazität 284a durch Schließen des Schalters 288a auf ein Steuersignal $\Phi_{2a}$ hin, in Rückkopplung mit dem Operationsverstärker 280 gebracht.

In dieser Phase wird eine erste Pixelzeile durch ein Resetsignal 338 auf einen definierten Ausgangszustand gebracht, um in dem sich anschließenden Dunkelzeitraum die Hintergrundsignale zu detektieren. Mit dem Anlegen des Rücksetzbzw. Resetpulses 338 ist gleichzeitig der Strahlungspulszeitraum, der in diesem Ausführungsbeispiel mit dem Start der Integration in den Integrationsfenstern 314 und 316 beginnt und in dem mit einem einzigen Laserpuls 304, sowohl die Distanz als auch die Reflektanz und das Hintergrundsignal aufgenommen werden kann, beendet. In diesem Ausführungsbeispiel fällt der Start des Laserpulses mit dem Integrationsbeginn zusammen, allgemein kann jedoch der Startzeitpunkt des Laserpulses unterschiedlich zum Startzeitpunkt der Integration sein. In dem sich anschließenden Dunkelzeitraum wird nun ein gleichzeitiges Schließen des Shutters 252a für einen ersten Erfassungszeitraum 315 des Dunkelzeitraums mit einer Zeitdauer $t_{int3}$ 304a und ein Schließen des zweiten Shutters 252b für einen zweiten Erfassungszeitraum des Dunkelzeitraums 317 mit einer Zeitdauer $t_{int4}$ 316a durchgeführt. Die Zeitdauer $t_{int3}$ entspricht in diesem Ausführungsbeispiel wieder der Pulsdauer $t_p$ des Laserpulses im Strahlungspulszeitraum und die Zeitdauer $t_{int4}$ des Zeitfensters 317 entspricht der Zeitdauer 316a des Zeitfensters 316 zur Aufintegration des gesamten reflektierten Laserpulses. Allgemein kann aber die Zeitdauer des Integrationsfensters 314, 315 unterschiedlich zur Pulsdauer $t_p$ sein. An den Abtastkapazitäten 254a und 254b bildet sich dann, analog wie oben beschrieben, eine Spannung aus, die im Dunkelzeitraum jedoch nur den Hintergrundlichtanteil zusammen mit der Reflektanz r und der Empfindlichkeit R der Photodiode in den jeweiligen Integrationszeiträumen entspricht. In anderen Worten werden also, während dieses Dunkelzeitraums, die im Zusammenhang mit Fig. 3 erwähnten Unterzyklen $I_B$ 308 und $II_B$ 310 in paralleler Weise durchgeführt. In diesem Zusammenhang kann sich der zusammenhängende Strahlungspulszeitraum, also der Zeitraum in dem die Integration zur Erfassung des reflektierten Strahlungspulses durchgeführt wird bis zu dem sich in diesem Ausführungsbeispiel anschließenden Beginn des zusammenhängenden Dunkelzeitraums erstrecken. Der Dunkelzeitraum kann mit dem Öffnen zumindest eines der beiden überlappenden Zeitfenster, während des Zeitraums in dem kein Strahlungspuls gesendet wird beginnen und nach der Erfassung des Hintergrundlichtanteils zusammen mit der Reflektanz r und der Empfindlichkeit R des Sensors beendet sein. Der Strahlungspulszeitraum kann also in anderen Worten mit dem Öffnen zumindest eines der beiden überlappenden Zeitfenster, zur Erfassung des reflektierte Strahlungspuls beginnen und nach dem Schließen des letzten, der beiden überlappenden Zeitfenster, zum Erfassen des gesamten reflektierten Laserpulses beendet sein.

Während der Phase C bildet sich eine Spannung $U_{1,fremd}$ 320 die dem Hintergrundsignal während des Zeitfensters 315 entspricht an dem Abtastkondensator 274a der Auswerteeinrichtung 470 aus. In dieser Phase kompensiert die Offsetspannung, die wieder an dem Rückkopplungskondensator 284a anliegt, die Kompensationsspannung bzw. Offsetspannung des Operationsverstärkers 280 und eine Differenzspannung zwischein $U_1$ und $U_{1,fremd}$ zuzüglich einer möglichen Referenzspannung 275 liegt am Ausgang 299 der Auswerteeinrichtung 470 an.

Während der sich anschließenden Phase D wird in analoger Weise am Ausgang 299 der Auswerteeinrichtung 470 ein Spannungssignal ausgegeben, das der Differenz der Spannungen $U_2$ und $U_{2, fremd}$, zuzüglich einer Referenzspannung 275 entspricht. Liegt der Eingang 280c des Operationsverstärkers 280 auf Masse, entspricht also die Referenzspannung 275 der Masse, so ergeben sich für die in den Phasen C und D am Ausgang 299 anliegenden Differenzspannungen, die in Gl. 3 bzw. Gl. 6 hergeleiteten Beziehungen. Diese Differenzspannungswerte können dann beispielsweise in einem Kamerasystem - oder auf dem Chip bzw. Sensor, also "On-Chip" so weiter verarbeitet werden, dass der Quotient aus den beiden Differenzspannungen $U_{1,diff}$ und $U_{2,diff}$ gebildet wird, und daraus wie in Gl. 7 und Gl. 8 dargestellt, der Abstand eines Pixels zu einem korrespondierenden Objektpunkt errechnet werden kann.

Damit ist das parallele Auswerten aller in einer ersten Zeile angeordneten Pixelelemente, in den parallel dazu spaltenweise zugeordneten Auswerteeinrichtung 470 abgeschlossen und durch einen Wechsel des Selectsignals (Diagramm h) am Ende der Phase D kann eine zweite Zeile in dem Pixelarray in die zugeordneten Auswerteeinrichtung 470 eingelesen werden. Da das anfängliche Resetsignal 334 für sämtliche Pixel des Arrays durchgeführt wurde, befinden sich auf den Abtastkapazitäten 254a und 254b der Erfassungseinrichtungen 420 noch die entsprechenden Spannungswerte $U_{1,zeile2}$ 630 und $U_{2,zeile2}$ 632 für die Distanz, Reflektanz, Empfindlichkeit und Hintergrundanteile während des Strahlungspulses. Diese Spannungssignale der Pixel werden in der neu ausgewählten 2. Zeile in den Phasen E und F in analoger Weise zu den Phasen A und B in der Auswerteeinrichtung 470 weiter verarbeitet. Ddurch ein Zeilenresetsignal 610 für die CDS-Stufe werden die Spannungen $U_{1,fremd, Zeile2}$ 635 und $U_{2,fremd,Zeile2}$ 637 zu dem Hintergrundlichtanteil, der Reflektanz r und der Empfindlichkeit R in entsprechenden Zeitfenstern 612 und 614 in den Phasen G und H erfasst und wie oben beschrieben weiter verarbeitet. Sukzessive können dann die restlichen Zeilen des Pixelarrays in analoger Weise ausgelesen werden.

In dem in Fig. 5 dargestellten Ausführungsbeispiel zur vorliegenden Erfindung ist die Abtasthalteschaltung 550 zur gleichzeitigen Aufnahme der Distanz - und Reflektanzkomponenten doppelt ausgelegt. Ebenso sind die Abtastkapazitäten 274a und 274b und die Rückkopplungskapazitäten 284a und 284b der Auswerteeinrichtung 470 doppelt vorhanden. In diesem Ausführungsbeispiel sind die Zwischenverstärker bzw. die Pufferverstärker 134 und 264 jeweils nur einmal vorhanden. In einem anderen Ausführungsbeispiel können diese Zwischenverstärker auch doppelt bzw. parallel ausgelegt sein, wohingegen die Abtastkapazität 274a und 274b auch zu einer Abtastkapazität 274 zusammengefasst sein können.

Im Gegensatz zu der konventionellen Vorrichtung und dem Verfahren, wie es im Zusammenhang mit den Fig. 2 und 3 dargestellt wurde, bei denen die Shuttersignale zum Schließen und Öffnen der Zeitfenster hintereinander angelegt wurden, können mit dem in Fig. 5 und 6 dargestellten Ausführungsbeispiel Shuttersignale für die Zeitfenster zur Aufintegration eines in Abhängigkeit des empfangenen Lichtes ausgebildeten Signals parallel angelegt werden. Die über der Photodiode 130 aktuell anliegende Spannung wird im gesamten Messzyklus viermal erfasst. Zuerst wird mittels Shutter 1 252a das der Distanz proportionale Signal für das Signal, welches den Laserpuls abschneidet auf $C_{H1}$ 254a gespeichert. Danach wird nach einer Maximalwartezeit, die sich nach der Messbereichstiefe richtet, mit Hilfe des Shutters 2 252b das dem kompletten reflektierten Laserpuls entsprechende, der Reflektanz und Empfindlichkeit proportionale Signal auf $C_{H2}$ 254b gespeichert. Für die Gewinnung der verschiedenen Signalanteile und die Korrektur des additiven Hintergrundlichtes und die Komponenten des multiplikativen Fehlers durch die Objektreflektanzen gelten die Gl. 1 - 8. Die Gewinnung der Distanz- und Reflektanzsignale erfolgt zeitlich parallel und nicht mehr hintereinander. Die Spannungen $U_1$ 318 und $U_2$ 322 enthalten jeweils einen additiven Fremdlichtanteil $E_{fremd}$ und einen multiplikativen Anteil, der von der Reflektanz r des detektierten Objektpunktes abhängt (siehe Gl.1 und Gl.2). Diese Analogsignale werden direkt auf dem Bildsensorchip, in der Auswerteeinrichtung 470, mit sehr hoher Genauigkeit voneinander subtrahiert. Dies geschieht in der Auswerteeinrichtung 470, bei der es sich um eine Schaltung zur korrelierten Doppelabtastung (correlated double sampling, CDS-Stufe) handelt. Der in Fig. 6 dargestellte Messzyklus beinhaltet die Aufnahme einer kompletten dreidimensionalen Tiefenkarte. Sie beginnt mit der gleichzeitigen Belichtung aller Pixel in einer Distanzmessphase. Stellvertretend für alle Pixelsignale sind die Spannungen $U_{1,2}$ für ein ausgebildetes Pixel der Sensormatrix gezeigt. Nach dem Abschalten bzw. Öffnen des Shutters 1 252a und des Shutters 2 252b liegen auf den Kapazitäten $C_{H1,H2}$ (254a und 254b) die dem jeweils detektierten Signal entsprechenden Distanz- bzw. Reflektanz proportionalen Spannungen an. Danach erfolgt das zeilenweise Auslesen der Pixelmatrix auf die zugehörigen Kopplungs-bzw. Speicherkapazität $C_{F1,F2}$ in der CDS-Stufe in der Phase Auslese-Zeile 1, Auslese-Zeile 2, ... bis zur Auslese-Zeile K bei K Sensorzeilen. Dies gilt in diesem Ausführungsbeispiel (Fig.6) bei einer spaltenparallelen Anordnung der CDS-Stufen, da hier alle Werte einer Zeile K zeitgleich auf die entsprechend zugeordneten Spaltenverstärker übertragen werden. Die Taktsignale $\Phi_{1a,1b}$ und $\Phi_3$ übertragen die zum Laser proportionalen Signale auf die Spalten- bzw. Abtastkapazitäten $C_{S1,S2}$ 274a, 274b in den Phasen A und B. Danach werden in den Phasen C und D die Pixel der jeweils selektierten Zeile mittels Reset 338 zurückgesetzt, um die additiven Hintergrundlichtanteile sowohl des Distanz- als auch Reflektanzproportionalsignals zu gewinnen. In den Phasen C und D werden diese Signale auf den Sample bzw. Abtastkapazitäten $C_{S1,S2}$ 274a, 274b gespeichert. Gleichzeitig wird durch Aktivierung der Taktsignale $\Phi_{2a,2b}$ die Differenz der Spannungen aus den Phasen A und C und B und D auf die Halte- bzw. Rückkopplungskapazitäten $C_{F1,F2}$ 284a, 284b gespeichert. Hierzu wurden $C_{F1,F2}$ mittels des Taktsignals $\Phi_5$ vorher zurückgesetzt. Bei einer Mehrfachakkumulation kann das Rücksetzen einmal zu Beginn der Akkumulationssequenz in oder vor dem dem Strahlungspulszeitraum in der Distanzmessungsphase 620 erfolgen. In der sich anschließenden Akkumulationssequenz erfolgt kein Rücksetzen mehr. In Fig. 6 ist der Fall für eine einfache Akkumulation gezeigt, ohne Beschränkung ist das vorgestellte Doppelshutterverfahren aber auch für eine Mehrfachakkumulation geeignet. Da die Messung bei den erfindungsgemäßen Verfahren bzw. bei der erfindungsgemäßen Vorrichtung auch für die Reflektanzwerte zeitgleich erfolgt, sind die Fremdlichtanteile aufgrund des Hintergrundlichtes mit nahezu 100% und die Anteile aufgrund der Reflektanz mit nahezu 100% korreliert. Diese der Reflektanz r proportionalen Spannungen können im weiteren Verlauf seriell ausgelesen werden und extern im Kamerassstem oder On-Chip der Quotient aus den Spannungen $U_{1,diff}$ und $U_{2,diff}$ gemäß GI. 7 berechnet werden.

In Fig. 7 ist ein simuliertes Zeitschaltungsdiagramm dargestellt, welches anhand des Ausführungsbeispiels aus Fig. 5 erläutert werden soll. In den Schaltungsdiagrammen a-k ist in Fig. 7 auf der x-Achse jeweils die Zeit t in Nlikrosekunden aufgetragen. Die Zeitachsen sind also in dieser Simulation beispielsweise von 1,24 μs bis 8,64 μs aufgetragen. Die entsprechenden y-Achsen der Diagramme a-k geben Lichtimpulse, Signalimpulse, Spannungen oder Schaltzustände in willkürlichen Einheiten wieder.

Vor Beginn des Akkumulationszyklus werden, wie in Diagramm j dargestellt, die Schalter 290a und 290b (Fig. 5) geschlossen, um die Rückkopplungskapazität 284a und 284b auf eine definierte Referenzspannung 275 aufzuladen. In einem anderen Ausführungsbeispiel kann die Schaltung nur einen Schalter 290 aufweisen, um die Rückkopplungskapazitäten auf ein Steuersignal Φ5 hin auf eine definierte Referenzspannung 275 aufzuladen. Vor dem Aussenden des Laserpulses (Diagramm a) findet ein synchroner Pixelreset für alle Pixel statt. Dies ist in Fig. 7 in Diagramm b durch den Pixelresetwert, der auf einer logischen "1" liegt, angedeutet. Durch den Pixelreset wird, wie weiter oben bereits beschrieben, die zur Photodiode parallel geschaltete Sperrschichtkapazität 132 (Fig. 5) auf einen definierten Rücksetzspannungswert 229 gesetzt. In den Diagrammen d und sind der Shutter 1 252a und der Shutter 2 252b zeitlich teilweise überlappend zu dem Pixelresetsignal geschlossen. D.h. sie sind auf einen logischen "1" Pegel. Ab dem Zeitpunkt A, nachdem der Pixelreset beendet ist und damit auf einen logischen Wert "0" geht, also der entsprechende Resetschalter 227 geöffnet wird, sinkt der Spannungswert an der Sperrschichtkapazität 132 und ebenso, da die Shutter 1 und 2 geschlossen sind, an den entsprechenden Abtastkapazitäten $C_{H1}$ 254a und $C_{H2}$ 254b. Ab dem Zeitpunkt A beginnt also die Integrationsphase bzw. das Öffnen des ersten und zweiten Zeitfensters zur Integration des Laserpulses 304. Zu einem Zeitpunkt B wird der erste Integrationszeitraum, welcher von dem Zeitpunkt A bis zu einem Zeitpunkt B geht und eine erste zeitlich Dauer $t_{int1}$ aufweist, geschlossen und eine entsprechende Spannung $U_1$ auf einer Abtastkapazität, beispielsweise 254a zwischengespeichert. Die zwischengespeicherte Spannung $U_1$ enthält, wie bereits oben erwähnt, Informationen zum Abstand, zur Reflektanz, zur Empfindlichkeit des Sensors und zum Hintergrundlichtanteil. Die erste zeitliche Dauer $t_{int1}$, welche durch den Zeitraum zwischen dem Zeitpunkt A und B gegeben ist, ist dabei so zu wählen, dass der aufintegrierte reflektierte Laserpuls teilweise abgeschnitten ist, um eine Abstandsinformation zu dem zu messenden Objekt zu erhalten. Der zweite Schalter 252b (Fig. 5) kann dann, wie in Diagramm e dargestellt ist, zu einem Zeitpunkt C geschlossen werden. Die zeitliche Dauer der zweiten Integrationszeit $t_{int2}$ ist dabei länger als die erste zeitliche Dauer $t_{int1}$ des ersten Erfassungszeitraumes und ist lang genug, um den gesamten reflektierten Laserpuls zu integrierern. D.h. die Integrationszeit $t_{int2}$, welche durch den Zeitraum zwischen den Zeitpunkten A und C gegeben ist, ist länger als eine Pulsbreite des ausgesandten Laserpulses. Nach dem Schließen des zweiten Fensters, also dem Öffnen des zweiten Shutters 252b, ist dann eine entsprechende Spannung $U_2$ beispielsweise auf der Abtastkapazität $C_{H2}$ 254b "eingefroren". In diesem Spannungswert $U_2$ sind, da das Shutterfenster eine zeitliche Dauer $t_{int2}$ aufweist, die länger als die Dauer des Laserpulses ist, und somit die gesamte Pulsform des Lasers aufintegriert ist, keine Abstandsinformationen mehr, da diese durch das "Abschneiden" des empfangenen Laserpulses gewonnen werden. Vielmehr wird wieder der Hintergrundlichtanteil und der Läseranteil zusammen mit Informationen zur Reflektanz und der Empfindlichkeit des Sensors aufgenommen. Nach dem Schließen des zweiten Zeitfensters bzw. dem Öffnen des zweiten Shutters ist der Strahlungspulszeitraum in diesem Ausführungsbeispiel beendet. Auf den Abtastkapazitäten 254a und 254b sind die entsprechenden Spannungswerte $U_1$ und $U_2$ zwischengespeichert.

Wie in Diagramm f (Fig.7) dargestellt ist, kann dann durch Schließen des Schalters 560a, der abweichend zu dem Ausführungsbeispiel in Fig. 5 kein UND-Logikgatter aufweist, mit der CDS-Stufe verbunden werden. In Ausführungsbeispielen ist es also auch nicht nötig, dass die Schaltung einen Selectschalter 255 aufweist. Simultan mit dem Schalter 560a wird der Schalter 572a geschlossen, so dass sich die Spannung $U_1$ an der Abtastkapazität 274a der Auswerteeinrichtung 470 ausbilden kann. Wie in Diagramm h dargestellt ist, wird der Schalter 282 durch das Steuersignal Φ₃ vor und während der Integration geschlossen, um den Spannungswert auf den Rückkopplungskapazitäten 284a und 284b auf eine Offsetspannung des Operationsverstärkers 280 aufzuladen und zu stabilisieren. Das in Diagramm h dargestellte Öffnen des Schalters 282 zum Zeitpunkt D und nochmalige Schließen des Schalters 282 zum Zeitpunk D' kann auch unterlassen werden. Zum Zeitpunkt E wird der Schalter 282 auf ein Steuersignal Φ₃ hin geöffnet, der logische Wert beträgt also "0". In dieser Phase findet wieder ein Pixelreset statt (Diagramm b) und auch der Shutter 1 252a wird wieder geschlossen (Diagramm d), so dass sich an der Sperrschichtkapazität 132 des Pixels 125 und der Abtastkapazität 254a wieder die Rücksetz-oder Resetspannung $V_{Reset}$ 229 ausbilden kann. Durch Schließen des Schalters 288 auf ein Steuersignal Φ₂ hin, wie es in Diagramm i dargestellt ist, wird dann die Rückkopplungskapazität 284a in Rückkopplung mit dem Operationsverstärker 280 gebracht. Dadurch lädt sich der Rückkopplungskondensator 284a auf eine Differenzspannung auf, die durch die im Abtastkondensator 274a und der Referenzspannung 275 des Operationsverstärkers 280, abzüglich einer Aufsetzspannung des Operationsverstärkers, gegeben ist. Diese Spannung liegt am Ausgang der CDS-Stufe 299 an, wie in Diagramm k zu sehen ist. Nach Beendigung des Pixelresets zum Zeitpunkt F und dem Öffnen des Shutters 1 252a zum Zeitpunkt G ist dann die Integration des ersten Zeitfensters ohne Laserpuls, also im Dunkelzeitraum beendet. Da die Schalter 560a und 572a noch geschlossen sind, wie in Diagramm f zu sehen ist, liegt die Spannung $U_{1,fremd}$, also die Spannung ohne Laserpulsanteil, an dem Abtastkondensator 274a der Auswerteeinrichtung 470 an, so dass sich am Ausgang der CDS-Stufe, wie in Diagramm k zu sehen ist, zum Zeitpunkt G die Differenz der Spannungen $U_{1,diff} = U_1 - U_{1,fremd}$ ausbildet.

Im Folgenden wird die CDS-Stufe durch Öffnen des Schalters 288 durch ein Steuersignal $\Phi_2$ und durch Schließen des Schalters 282 auf ein Steuersignal $\Phi_3$ hin zurückgesetzt. Zuvor wurde durch Öffnen der Schalter 560a und 572a die Abtastkapazität 274a der CDC-Stufe von der Abtastkapazität 254a der Abtasthalteschaltung abgekoppelt. Durch Schließen des Schalters 560b und 572a wird nun analog zu dem Spannungswert $U_1$ auch der Spannungswert $U_2$, der immer noch in der Abtastkapazität 254b zwischengespeichert ist, an die CDS-Stufe übergeben. Durch Schließen des Schalters 227 wird in dem Zeitraum H bis I wieder ein Pixelreset durchgeführt und analog dazu der zweite Shutter 252b geschlossen, so dass der Hintergrundlichtanteil ohne Laserpuls in dem zweiten Erfassungszeitraum $t_{int2}$, der hier vom Zeitpunkt I-J geht, erfasst wird. Das entsprechende Spannungssignal wird dann bei immer noch geschlossenen Schaltern 560b und 572a an die CDS-Stufe übertragen und dort wird analog zur Spannungsdifferent $U_{1,diff}$ die Differenzspannung $U_{2,diff}$ gebildet, die dann ab dem Zeitpunkt J an dem ausgang 299 der CDS-Stufe anliegt. Die Ausbildung dieses Spannungswertes $U_{2,diff}$ ist nicht mehr in der Simulation gezeigt.

Die Differenzbildung der entsprechenden Spannungswerte findet in diesem Ausführungsbeispiel der CDS-Stufe seriell statt. Es wird also zuerst der Differenzspannungswert $U_{1,diff}$ mit und ohne Laserpulsanteil für das Zeitfenster, welcher eine kürzere Integrationszeit $t_{int1}$ aufweist gebildet und anschließend wird seriell die Differenzspannung $U_{2,diff}$ für das zweite Zeitfenster mit dem längeren Integrationszeitraum $t_{int2}$, mit und ohne Laserpuls, gebildet. Aus diesem Grunde kann die CDS-Stufe in diesem Ausführungsbeispiel seriell anstatt parallel ausgelegt sein, also nur einen Schalter 572 und eine Abtastkapazität 274 sowie einen Schalter $\Phi_2$ und $\Phi_5$ und nur eine Rückkopplungskapazität 284 aufweisen.

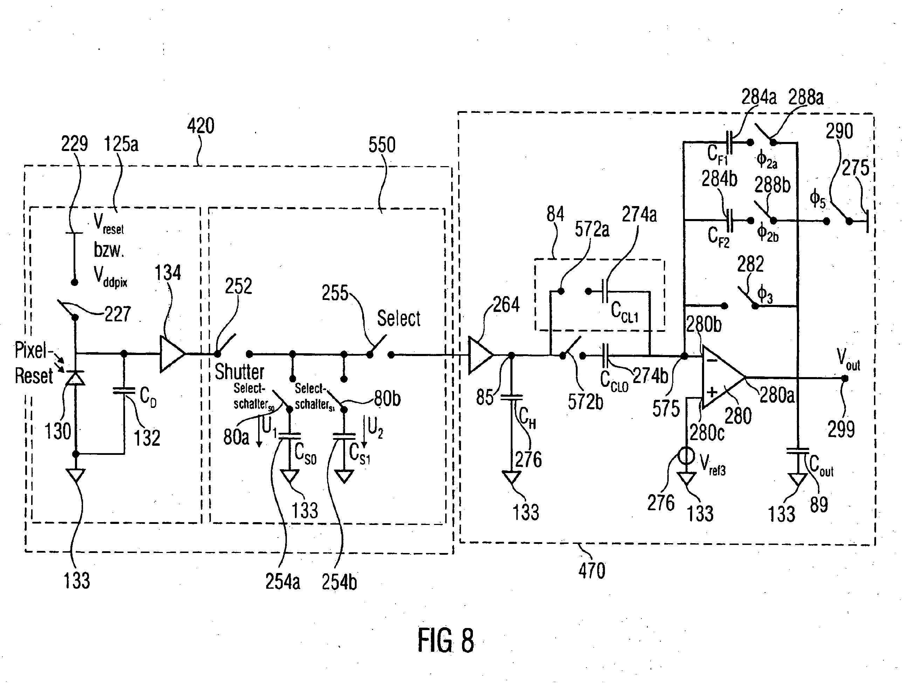

Fig. 8 zeigt als weiteres Ausführüngsbeispiel den Schaltplan einer Erfassungseinrichtung 420 und einer dazugehörigen Auswerteeinrichtung 470. Die Erfassungseinrichtung 420 besteht in diesem Ausführungsbeispiel wieder aus einem Pixelelement 125a, das aufgebaut ist, wie es bereits im Zusammenhang mit Fig. 5 beschrieben wurde. D.h. eine Photodiode 130 mit einer parallel dazu geschalteten Sperrschichtkapazität 132 liegt mit einem Anschluss auf Masse 133 und ist mit dem anderen Anschluss mit einem Pufferverstärker 134 und dem Pixelresetschalter 227 verbunden. Der Pixelresetschalter 227, in dieser Anmeldung auch Rücksetzschalter 227 genannt, lädt die Pixelkapazität im geschlossenen Zustand auf die vordefinierte Rücksetzspannung $V_{reset}$ 229 auf. Bei dem Puffer 134 kann es sich um einen Spannungsfolger mit einer Verstärkung von mal 1 handeln oder auch um einen Puffer, der ggf. eine höhere Verstärkung als mal 1 aufweist. Die Erfassungseinrichtung 420 weist daneben eine Abtasthalteschaltung 550 auf, die über den Schalter 252, den Shutter, mit dem Ausgang des Puffers 134 und damit mit dem Pixelelement 125a verbunden ist. Die Abtasthalteschaltung 550 weist in diesem Ausführungsbeispiel zwei Abtastkapazitäten 254a und 254b auf, die mit einem Anschluss jeweils auf Masse 133 liegen und mit ihrem anderen Anschluss jeweils über Schalter 80a und 80b über den Shutter 252 mit dem Eingang der Abtasthalteschaltung verbunden sind. Die Abtastkapazitäten 254a und 254b sind in diesem Ausführungsbeispiel also nicht parallel angeordnet, sondern, wie dem Schaltplan in Fig. 8 zu entnehmen ist, über Knoten an einen gemeinsamen Signalpfad gekoppelt. Die beiden Abtastkapazitäten 254a und 254b sind außerdem wieder über einen Auswahl- bzw. Selectschalter 255 mit einer sich anschließenden Schaltung zur korrelierten Doppelabtastung (CDS-Stufe) 470 verbunden.

Die Schaltung zur (korrelierten) Doppelabtastung 470 weist eine Haltekapazität 276 auf, welche einerseits auf Masse 133 liegt und andererseits mit dem Pufferverstärker 264 am Eingang der GDS-Stufe 470 verbunden ist. Die Schaltung zur (korrelierten) Doppelabtastung 470 weist eine Abtastkapazität $C_{C10}$ 274b auf, die über einen Schalter 572b über den Knoten 85 einerseits mit der Haltekapazität 276 und andererseits mit dem Ausgang des Pufferverstärkers 264 verbunden ist. Optional kann dazu ein zweiter paralleler Zweig mit einem Schalter 572a und einer zweiten Abtastkapazität 274a angeordnet sein. Dieser parallele Zweig 84 ist jedoch optional, da die Auswertung in der CDS-Stufe 970 seriell erfolgt, falls nur ein Operationsverstärker 280 pro Doppelshutterpixel 420 verwendet wird. Falls die CDS-Stufe nur eine Abtastkapazität aufweist kann die Erfassung der Hintergrundlichtanteile im Dunkelzeitraum nur seriell erfolgen. Das heißt, die entsprechenden Erfassungszeiträume überlappen nicht, so wie es in Diagram f und g in Fig. 7 gezeigt ist. Bei zwei überlappenden Erfassungszeiträumen, während des Dunkelzeitraums sind, wie in Fig. 5 und in Fig. 8 (optional) dargestellt zwei Abtastkapazitäten 274a und 274b zur Zwischenspeicherung der Spannungswerte in der CDS-Stufe nötig. Des Weiteren weist die Auswerteeinrichtung 470 wieder zwei Rückkopplungskapazitäten 284a und 284b auf, die parallel angeordnet sind und über einen Knoten 575 mit den Abtastkapazitäten 274a (optional) und 274b verbunden sind. Der Knoten 575 ist des Weiteren mit dem "nicht invertierenden" Eingang 280b des Operationsverstärkers 280 verbunden. Über den Schalter 282 kann der Operationsverstärker auf ein Steuersignal $\Phi_3$ hin kurzgeschlossen

werden. Die Rückkopplungskapazitäten 284a und 284b können über die Rückkopplungsschalter 288a und 288b zum einen mit dem Ausgang 280a des Operationsverstärkers verbunden werden oder über einen Referenzpotentialschalter 290 auf ein Steuersignal $\Phi_5$ hin mit dem Referenzpotential 275 verbunden werden. Die Ausgangsspannung $V_{out}$ der Auswerteeinrichtung 470 liegt am Ausgang 299 an, wobei das Ausgangssignal über einen Ausgangskondensator $C_{out}$ 89 geglättet werden kann. Der invertierende Eingang 280c des Operationsverstärkers 280 kann auf einem Offsetpotential 276 liegen.

Dieses Ausführungsbeispiel zeichnet sich durch einen um ca. 50% geringeren Platzbedarf und eine um ca. 50% geringere Leistungsaufnahme pro Doppel-Shutterpixel gegenüber herkömmlichen Pixeln mit Abtasthalteschaltung aus. In diesem Ausführungsbeispiel werden nach dem Schließen des Shutters 252 in den Abtastkapazitäten 254a und 254b, während des Strahlungspulszeitraums einmal in einer kürzeren Integrationszeit $t_{int1}$, also in einer ersten Shutterzeit, die Reflexionen des Strahlungspulses an einer Objektoberfläche und einer Hintergrundstrahlung zusammen mit den Reflektanz- und Empfindlichkeitsanteilen aufgenommen, und in einer zweiten Integrationszeit $t_{int2}$, die länger ist als die erste Integrationszeit und mit dieser überlappend ist, der Einfluß des gesamten reflektierten Strahlungspuls auf die Spannung aufgenommen. D.h. eine kurze und eine lange Shutterzeit werden in einem Pixelpfad, der im Gegensatz zu dem Ausführungsbeispiel in Fig. 5 nicht parallel ausgelegt ist, realisiert. Ein Vorteil dieses Ausführungsbeispiels liegt, wie oben bereits genannt, in dem reduzierten Platz- und Leistungsbedarf, sowie in einem verbeserten Rauschverhalten, da das Resetrauschen und das SF1 Rauschen, für beide Shutterzeiten (Integrationszeit $t_{int1}$, $t_{int2}$) gleich ist. Die an den Abtastkapazitäten 254a und 254b anliegenden Spannungswerte $U_1$ und $U_2$ können an der CDS-Stufe 470, wie oben beschrieben ist, ausgewertet werden. Die gesamte Abstandsmessung mit kurzer und langer Shutterzeit, jeweils mit und ohne Laserpuls, kann in diesem Ausführungsbeispiel in einem Pixelpfad erfasst werden . Zudem kann das Hintergrundlicht für alle Pixel eines Pixelarrays innerhalb einer Shutterzeit erfasst werden und braucht nicht, wie in anderen Ausführungsbeispielen, zeilenweise seriell durchgeführt werden, was zu einer Verkürzung der Messzeit für die Abstandsmessung führen kann. Da, wie weiter unten genauer erläutert wird, die Laser- und Hintergrundlichtanteile innerhalb einer Shutterzeit erfasst werden, ist die Korrelation erhöht und kann dadurch fast 100 % betragen. Zudem ist die Messzeit verkürzt gegenüber anderen Ausführungsbeispielen und konventionellen Verfahren.

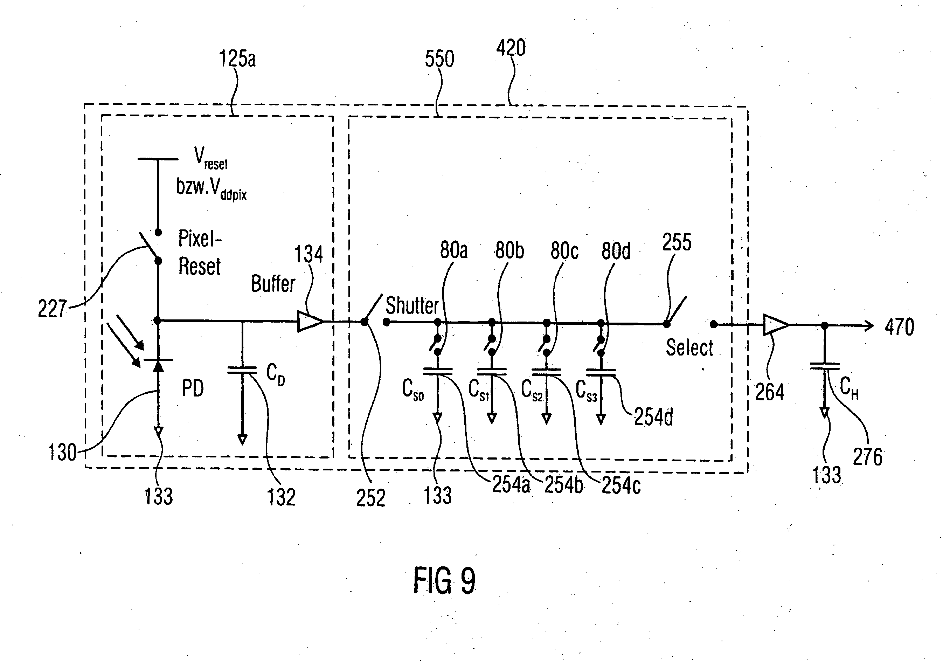

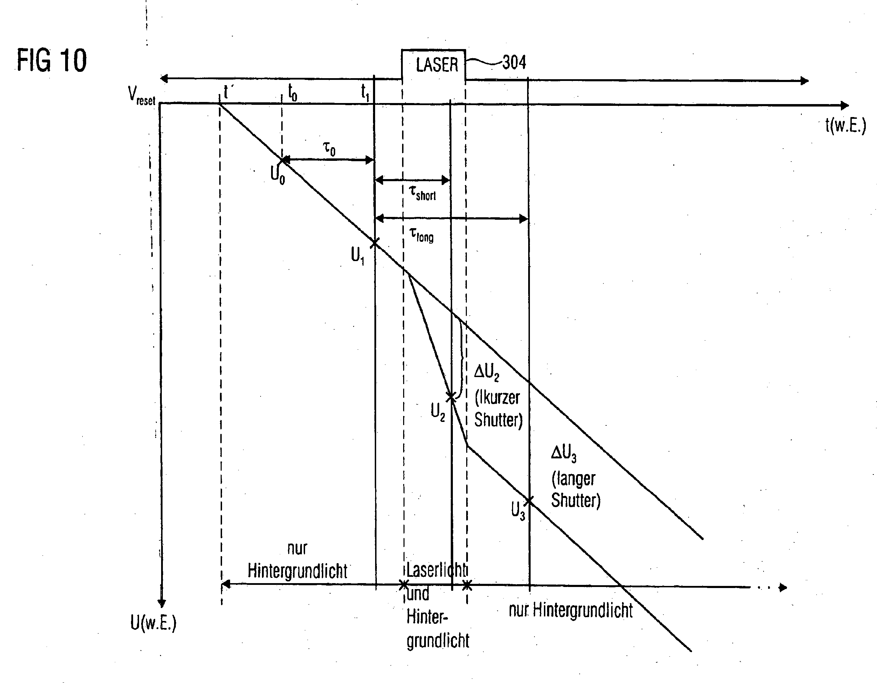

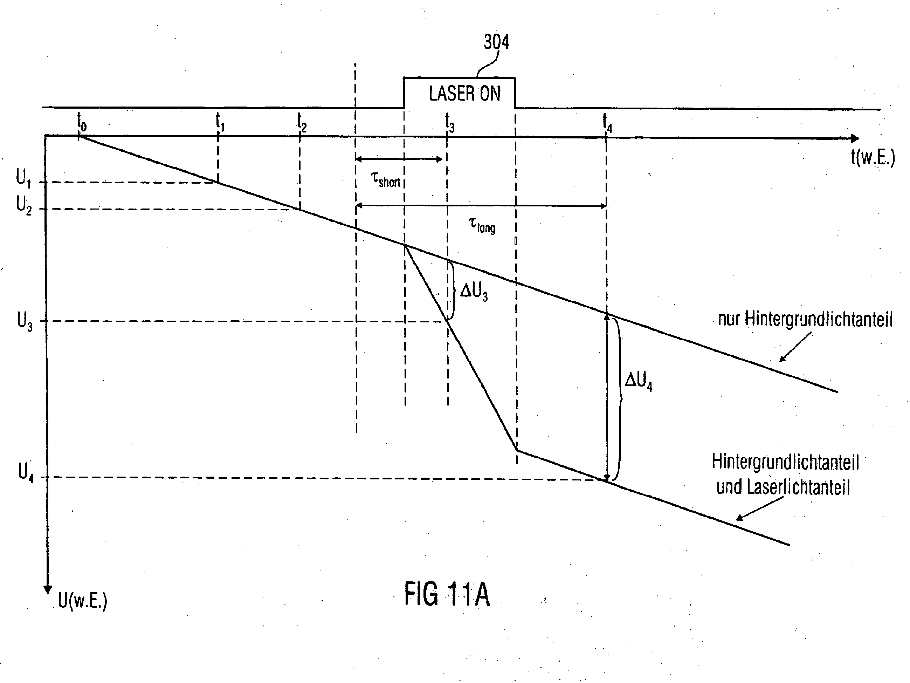

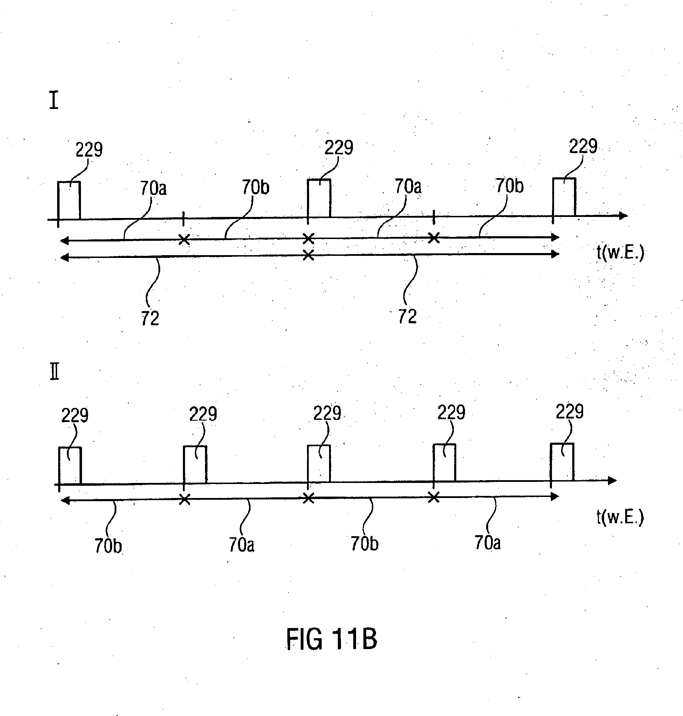

In Fig. 9 ist in einem weiteren Ausführungsbeispiel eine Erfassungseinrichtung 420 in Form eines Schaltungsplans dargestellt. Die Erfassungseinrichtung 420 weist wieder ein Pixelelement 125a auf, sowie eine Abtasthalteschaltung 550. In diesem Ausführungsbeispiel weist die Abtasthalteschaltung 550 vier Abtastkapazitäten $C_{S0}$, $C_{S1}$, $C_{S2}$ und $C_{S3}$ mit den entsprechenden Nummerierungen 254a-254d auf. Diese sind mit einer Anschlussseite auf Masse gelegt und mit der anderen Anschlussseite jeweils über Selectschalter 80a-80d über Knoten des Pixelpfades mit den Shutter 252 verbunden. Dieser ist über den Pufferverstärker 134 an das Pixelelement 125a gekoppelt. Des Weiteren weist die Abtasthalteschalung 550 wieder einen Selectschälter 255 auf, der die Abtastkapazitäten über ihre jeweiligen Auswahlschalter 80a-80d mit einer nachgeschalteten Auswerteeinrichtung 470 koppeln kann. Die Auswerteeinrichtung 470 kann wieder eine CDS-Stufe ein, wie sie in Ausführungsbeispielen, beispielsweise in Fig. 8, beschrieben wurde. Mit dieser Schaltungsanordnung für die Abtastschaltung ist es möglich, den Platz- und Leistungsbedarf gegenüber konventionellen Abtasthalteschaltungen zur Abstandsmessung zu reduzieren und zusätzlich ist sowohl das Resetrauschen als auch das Rauschen SF1 für alle abgetasteten Spannungen sowohl für die Hintergrund- als auch für die Laserbelichtung gleich. Wie im Folgenden in den Fig. 10 und 11 gezeigt wird, kann mit diesem Ausführungsbeispiel auch das Hintergrundlicht in einem Dunkelzeitraum für alle Pixel innerhalb einer Shutterzeit erfasst werden und braucht nicht zeilenweise seriell ausgelesen werden. Dadurch kann die Messzeit verkürzt werden und die Korrelation der Laser- und Hintergrundlicht innerhalb einer Shutterzeit auf fast 100 % erhöht werden. Die gesamte Messung mit kurzer und länger Shutterzeit, mit und ohne Laserpuls, kann in einem Pixelpfad und innerhalb einer Shutterzeit realisiert werden. Dazu kann der Hintergrundlichtanteil mit einer Extrapolationsmethode subtrahiert werden, wie es im Folgenden näher beschrieben wird.

In Fig. 10 ist in einem Diagramm veranschaulicht, wie gemäß einem weiteren Ausführungsbeispiel der vorliegenden Erfindung das Hintergrundlicht mit einer Extrapolationsmethode ermittelt werden kann. In Fig. 10 ist auf der x-Achse die Zeit t in willkürlichen Einheiten aufgetragen und auf der y-Achse das Spannungssignal U an der Sperrschichtkapazität 132 der Photodiode 130. Nach Beendigung eines Pixel-Resets zum Zeitpunkt t' liegt an der Sperrschichtkapazität des Pixelelements 125a ein vordefinierten Spannungswert $V_{reset}$ an. In dem sich in diesem Ausführungsbeispiel anschließenden Dunkelzeitraum, in dem kein Laserpuls ausgesandt wird, sinkt die Spannung alleine durch das Hintergrundlicht ab. Zur Extrapolation des Hintergrundlichts wird der zeitliche Verlauf dieser Spannung an vier Messpunkten $U_0$, $U_1$, $U_2$ und $U_3$ gemessen und auf entsprechenden Abtastkapazitäten $C_{S0}$ 254a, $C_{S1}$ 254b, $C_{S2}$ 254c tind $C_{S3}$ 254d (Fig. ) zwischengespeichert. Wie in Fig. 10 weiterhin dargestellt ist, wird dazu zu einem Zeitpunkt $t_0$ die Spannung $U_0$ auf einer ersten Abtastkapazität, beispielsweise 254a zwischengespeichert. Die Speicherung der einzelnen Werte verläuft, wie bereits beschrieben, durch entsprechendes Schließen der zu den Abtastkapazitäten zugeordneten Schaltern 80a-80d. Zu einem zweiten Zeitpunkt $t_1$ wird dann der Spannungswert $U_2$ auf einer zweiten Abtastkapazität 254b zwischengespeichert. Zwischen den Zeitpunkten $t_0$ und $t_1$ ist ein Zeitintervall einer Länge $\tau_0$ vergangen. Die einzelnen Spannungswerte werden dann, mit Hilfe einer Sensorsteuerung oder Steuereinrichtung zwischengespeichert indem die entsprechenden Auswahlschalter 80a - 80d zum entsprechenden Zeitpunkt angesteuert und geöffnet werden und die entsprechenden Spannungen auf den jeweiligen Abtastkapazitäten "eingefroren" werden.

Nach der Zwischenspeicherung des Spannungswertes $U_1$ ist der Dunkelzeitraum beendet. Für den sich anschließenden Strahlungspulszeitraum, in dem der reflektierte Laserpuls 304 detektiert wird, werden durch Schließen, beispielsweise des Schalters 80c ein kurzer Integrationszeitraum $\tau_{short}$ und durch Schließen des Schalters 80d ein langer Integrationszeitraum $\tau_{long}$ phasenstarr zum Laserpuls 304 gekoppelt, gestartet. Der kürzere der beiden Erfassungszeiträume in diesem Strahlungspulszeitraum wird nach einer Integratioszeit $\tau_{short}$ geschlossen, so dass der reflektierte Laserpuls teilweise "abgeschnitten" wird, um dadurch die gewünschte Abstandsinformation zu gewinnen. Dazu wird ferner die Spannung $U_2$ beim Schließen des Schalters 80c beispielsweise auf der Abtastkapazität $C_{S2}$ zwischengespeichert. Das zweite Zeitfenster mit einer Integrationszeit $\tau_{long}$ ist länger als die Dauer des Laserpulses, so dass die gesamte Pulsform des Lasers aufintegriert wird. Der entsprechende Spannungswert $U_3$ wird dann beispielsweise in der Abtastkapazität 254d zwischengespeichert. Die Spannungswerte $U_0$ $U_1$, $U_2$ und $U_3$ sind, wie oben beschrieben, messbar, und die Werte $\Delta U_2$ und $\Delta U_3$, also die "Nettosignale" aufgrund der Laserbeleuchtung, die zur Berechnung des Abstands eines Objekts benötigt werden, können daraus berechnet werden. Der Hintergrundlichtanteil an dem Spannungsabbau kann durch folgende Gleichung extrapoliert werden:

$$U_{Hintergrund}(t) = U_0 - \frac{U_0 - U_1}{\tau_0} \cdot t + \frac{U_0 - U_1}{\tau_0} \cdot t_0 \qquad (9)$$

In Gl. 9 können die Spannungswert $U_0$ und $U_1$ gemessenwrden und die Zeitwerte $t_0$ und $\tau_0$ sind einstellbar oder bekannt. Mithilfe der Gl. 9 kann dann $\Delta U_2$ nach folgender Gleichung berechnet werden:

$$\Delta U_2 = U_2 - U_1 + (U_0 - U_1) \cdot \frac{\tau_{short}}{\tau_o} \qquad (10)$$

Ebenso kann $\Delta U_3$ berechnet werden:

$$\Delta U_3 = U_3 - U_1 + (U_0 - U_1) \cdot \frac{\tau_{long}}{\tau_o} \qquad (11)$$

Das Doppelshutterprinzip mit einer einzigen Belichtungszeit kann also auch für die Hintergrundlichtkompensation durchgeführt werden. Sämtliche Pixel eines Pixelarrays können also in einem einzigen Dunkelzeitraum den Hintergrundlichtanteil mit Hilfe dieser Extrapolationsmethode kompensieren. Die in den Abtastkapazitäten 254a-254d zwischengespeicherten Spannungswerte können dann, wie oben beschrieben, in der sich anschließenden CDS-Stufe 470 subtrahiert werden, um so die Abstandsinformation zu erhalten.

In Fig. 11a ist in einem weiteren Ausführungsbeispiel eine allgemeinere Fassung des Extrapolationsverfahrens für den Hintergrundlichtanteil dargestellt. In diesem Ausführungsbeispiel wird die zweite Spannung $U_2$ (Fig.11a) für das extrapolierte Hintergrundlicht nicht zum Startpunktzeit der Integration des Laserpulses während des Strahlungspulszeitraums abgetastet. Dies kann zu einem beliebigen Zeitpunkt in dem Dunkelzeitraum davor erfolgen.

Wie im Zusammenhang mit Fig. 10 beschrieben, ist auf der x-Achse die Zeit t in willkürlichen Einheiten aufgetragen une auf der y-Achse die an der Photodiode anliegende Spannung in willkürlichen Einheiten. Im Gegensatz zu dem Ausführungsbeispiel in Fig. 10 können die Spannungen $U_1$ und $U_2$ an einem beliebigen, Zeitpunkt im Dunkelzeitraum gemessen und auf den entsprechenden Abtastkapazitäten der Abtasthalteschaltung 550 zwischengespeichert werden. Dazu kann beispielsweise zum Zeitpunkt $t_1$ die Spannung $U_1$ auf dem Abtastkondensator $C_{S0}$ (Fig. 9) und zu einem zweiten Zeitpunkt $t_2$ im Dunkelzeitraum ein zweiter Spannungswert $U_2$ auf einer zweiten Abtastkapazität, beispielsweise $C_{S1}$ zwischengespeichert werden. Es werden also in diesem Ausführungsbeispiel in dem Dunkelzeitraum in zwei überlappenden Erfassungszeiträumen die Spannungsänderungen an der Photodiode aufgrund des Hintergrundlichtanteils gemessen und anhand von zwei Spannungswerten $U_1$ und $U_2$ "eingefroren". In einem Strahlungspulszeitraum werden dann zwei Erfassungszeiträume für den Laserpuls phasenstarr gekoppelt zu dem Zeitpunkt des Aussendens des Lasers 304 geöffnet. Ein erster Erfassungszeitraum der eine Integrationszeit $\tau_{short}$ bzw. $t_{int}$ aufweist, schneidet dabei den reflektierten Laserpuls teilweise ab, d.h. das Zeitfenster wird geschlossen, bevor Laserpulses vollständig integriert wurde. Dies erfolgt vielmehr in dem zweiten Erfassungszeitraum mit einer zeitlichen Dauer $\tau_{long}$, bzw. $t_{int2}$. die mindestens so lang ist wie der Laserpuls. Nach dem Schließen des ersten Erfassungszeitraums zur Integration des reflektierten Laserpulses zum Zeitpunkt $t_3$ wird die entsprechende Spannung $U_3$, beispielsweise auf der Abtastkapazität $C_{S2}$ zwischengespeichert. An dieser Abtastkapazität liegt also der Spannungswert $U_3$ an, der die Abstandsinformation zu dem Objekt

enthält. Der Spannungswert $U_4$ wird dann durch das Schließen des zweiten Zeitfensters mit der zeitlichen Dauer $\tau_{long}$, beispielsweise auf dem Abtastkondensator $C_{S3}$ zwischengespeichert. Die Startzeitpunkte des ersten und zweiten Zeitfensters für den Strahlungspulszeitraum können mit dem Laserpuls 304 phasenstarr gekoppelt sein.

Durch diese Verfahrensweise können also die Spannungen $U_1$ bis $U_4$ in den entsprechenden Abtastkapazitäten zwischengespeichert werden. Die Nettosignale aufgrund der Laserbeleuchtung, also $\Delta U_3$ und $\Delta U_4$ können dann ermittelt werden.

Für die Änderung der Spannung durch den Hintergrundlichtanteil kann folgender funktionaler Zusammenhang gelten:

$$U_{Hintergrund}(t) = mx + b =: U_H(t) \qquad (12)$$

Der funktionale Zusammenhang zwischen Spannung und Zeit kann also durch eine Geradengleichung beschrieben werden. Auf die Fig. 11a übertragen bedeutet das, dass die Steigung der Geraden durch die Spannungsdifferenz der Spannungswerte $U_2$ und $U_1$, dividiert durch die entsprechenden Zeitunterschiede $t_2$ - $t_1$ zu einem entsprechenden Zeitpunkt t abzügschiede $t_2$ - $t_1$ zu einer entsprechenden Zeitpunkt t abzüglich des zeitlichen Offsets $t_1$ und der Spannung $U_1$ dargestellt werden kann.

Dies ist in Gleichung 13 dargestellt:

$$U_H(t) - U_1 = \frac{(U_2 - U_1)}{t_2 - t_1} \cdot (t - t_1) \qquad (13)$$

Diese Gleichung kann nun wie folgt umgeformt werden:

$$U_H(t) = \frac{U_2 - U_1}{t_2 - t_1} \cdot t - \frac{U_2 - U_1}{t_2 - t_1} \cdot t_1 + U_1 = \qquad (14)$$

$$= -\frac{U_1 - U_2}{t_2 - t_1} \cdot t + \frac{U_1 - U_2}{t_2 - t_1} \cdot t_1 + \frac{U_1 t_2 - U_1 t_1}{t_2 - t_1} =$$

$$= -\frac{U_1 - U_2}{t_2 - t_1} \cdot t + \frac{U_1 t_1 - U_2 t_1 + U_1 t_2 - U_1 t_1}{t_2 - t_1} =$$

$$= -\frac{U_1 - U_2}{t_2 - t_1} \cdot t + \frac{U_1 t_2 - U_2 t_1}{t_2 - t_1}$$

So dass sich für den funktionalen Zusammenhang der Spannung $U_H(t)$ folgende Geradengleichung ergibt:

$$U_H(t) = -\frac{U_1 - U_2}{t_2 - t_1} \cdot t + \frac{U_1 t_2 - U_2 t_1}{t_2 - t_1} \qquad (15)$$

Mit diesem funktionalen Zusammenhang läßt sich der Spannungswert aufgrund des reinen Hintergrundlichtanteils zu jedem Zeitpunkt t berechnen bzw. extrapolieren.

$\Delta U_3$ lässt sich dann einfach unter Benutzung des zwischengespeicherten Spannungswerts $U_3$ und der Gl.1-5 bestimmen. Für $\Delta U_3$ ergibt sich:

$$\Delta U_3 = U_3 - U_H(t_3) = U_3 + \frac{U_1 - U_2}{t_2 - t_1} \cdot t_3 - \frac{U_1 - U_2}{t_2 - t_1} \cdot t_1 - U_1 \qquad (16)$$

Nach weiterem Umformen ergibt sich die Gl. 17:

$$\Delta U_3 = U_3 - U_1 + \frac{U_1 - U_2}{t_2 - t_1} \cdot (t_3 - t_1) = \qquad (17)$$

$$= U_3 - U_1 + (U_1 - U_2) \cdot \frac{t_3 - t_1}{t_2 - t_1}$$

$\Delta U_3$ lässt sich also durch die Differenz der Spannungswerte $U_3$ und $U_1$ und der Differenz der Spannungswerte $U_1$ und $U_2$, sowie der entsprechenden Differenzen der Zeitpunkte $t_3 - t_1$ dividiert durch $t_2 - t_1$. Diese Zeitpunkte sind über die Sensorsteuerung einstellbar und daher als bekannt anzusehen, da sie den entsprechenden Zeitfenster des Shutter entsprechen. In analoger Weise lässt sich auch $\Delta U_4$ berechnen, so dass sich Gl. 17 ergibt:

$$\Delta U_4 = U_4 - U_H(t_4) = U_4 - U_1 + (U_1 - U_2) \cdot \frac{t_4 - t_1}{t_2 - t_1} \qquad (18)$$

$\Delta U_4$ kann wieder bei Kenntnis der Differenz der Spannungen $U_4$ und $U_1$ und der Differenz der Spannungen $U_1$ und $U_2$, sowie der Differenz der entsprechenden Zeitpunkte $t_4 - t_1$ und $t_2 - t_1$ berechnet werden. Diese können wieder über die Sensorsteuerung eingestellt werden und sind damit als bekannt anzusehen. Die Spannungswerte $U_1$ bis $U_4$ sind nun, wie oben beschrieben, in den entsprechenden Abtastkapazitäten $C_{S0}$ bis $C_{S3}$ 254a-254d zwischengespeichert und die entsprechenden Differenzen $U_3 - U_1$, $U_1 - U_2$ und $U_4 - U_1$ können beispielsweise durch die mit der Abtasthaltestellung 550 verbunden CDS-Stufe 470 gebildet werden und auf Speicherkapazitäten in der CDS-Stufe zur weiteren Verarbeitung zwischengespeichert werden. In anderen Worten können dadurch wieder die Spannungswerte zur Verfügung gestellt werden, die zur Ermittlung des Abstandes zu einem zu messenden Objekt nötig sind.

In Fig. 11b sind in zwei schematischen Zeitdiagrammen I und II beispielhaft zwei unterschiedliche Möglichkeiten zum Zurücksetzen der Pixel (Pixel-Reset 229) während des Dunkelzeitraums und des Strahlungspulszeitraumes gemäß Ausführungsbeispielen der vorliegenden Erfindung dargestellt. Auf einer Zeitachse in der die Zeit t in willkürlichen Einherten dargestellt ist, kann ein Pixel-Reset 229 jeweils vor dem Beginn eines Zyklus 72, welcher jeweils einen Dunkelzeitraum 70a und einen Strahlungspulszeitraum 70b aufweist durchgeführt (Diagramm I) werden. Für einen sich anschließenden Messzyklus kann dann wieder ein gemeinsamer Pixel-Reset 229 für den flunkelzeitraum 70a und den Strahlungspulszeitraum 70b durchgeführt werden. In dem Diagramm II hingegen, wird vor Beginn jedes Dunkel- 70a bzw. Strahlungspulszeitraums 70b ein Pixel-Reset durchgeführt. Für einen sich anschließenden Messzyklus kann dann wieder für jeden Strahlungspulszeitraum und jeden Dunkelzeitraum separat ein Pixel-Reset durchgeführt werden. Dies ist z.B. im Zusammenhang mit dem Ausführungsbeispiel in Fig. 6 erläutert worden. Die Reihenfolge und die relative Dauer der Strahlungspulszeiträume 70a und der Dunkelzeiträume 70b können von der dargestellten Anordnung abweichen. Es ist also auch möglich, dass nach einem Strahlungspulszeitraum, mehrere Dunkelzeiträume oder nach einem Dunkelzeitraum mehrere Strahlungspulszeiträume erfolgen. Außerdem brauchen die Strahlungspulszeiträume und die Dunkelzeiträume zeitlich nicht unmittelbar aneinander angrenzen, wie in Ausführungsbeispielen gezeigt ist.

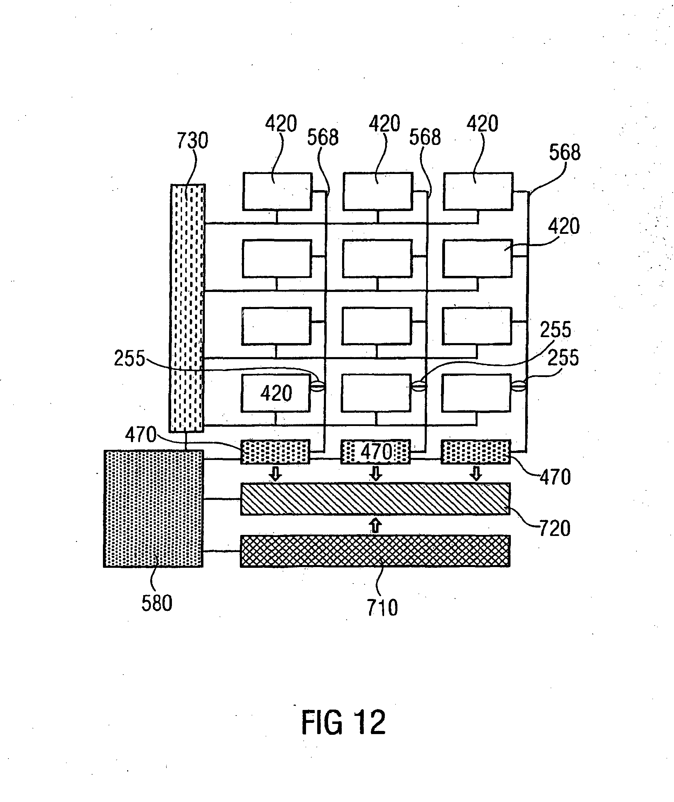

In Fig. 12 ist schematisch der Aufbau eines Bildsensors und Empfängers, der z.B. aus einer in Spalten und Reihen angeordneten Vielzahl von Erfassungseinrichtungen 420 und jeweils den Spalten, Reihen oder Pixel zugeordneten Auswerteeinrichtung 470 besteht, gezeigt. Der Empfänger bzw. Bildsensor kann eine Steuerlogik 580 aufweisen, durch die u.a. die entsprechenden, wie es im Zusammenhang mit den Fig. 5 und 6 beschrieben wurde, Resetsignale, Steuersignalle, Zeilen- und Spaltenauswahlsignale generiert werden. Dazu kann der Empfänger bzw. der Bildsensor oder Pixelarray unter anderem einen Spaltenadressdecoder 710, einen entsprechenden Spaltenmultiplexer 720 oder ein Schieberegister und beispielsweise einen Zeilenadressdecoder 730 aufweisen. Die Pixel einer Zeile werden auf ein Auswahlsignal hin mit den spaltenweise oder pixelweise zugeordneten Auswerteeinrichtungen 470 verbunden. Durch das Selekt- bzw. Auswahlsignal werden die Schalter 255 mit den entsprechenden Leseleitungen 568 verbunden und Signale wie oben beschrieben an die Auswerteeinrichtung 470 weitergegeben. In diesem Ausführungsbeispiel zur vorliegenden Erfindung wird also eine Vorrichtung bzw. die Erfassungseinrichtung eines optischen Abstandsmessers in einer Matrizenform bzw. in einem Array verschaltet, so dass beispielsweise ein Sensor zur dreidimensionalen Abstandsmessung ausgebildet wird. In anderen Ausführungsbeispielen sind auch andere Anordnungen der Pixel möglich. Allgemein kann eine Auswerteeinrichtung 470 einer bestimmten Ansammlung an Pixel zugeordnet sein oder aber auch jedem Pixel einzeln. Das heißt, jeder Pixel kann eine zugeordnete eigene Auswerteeinrichtung 470, also z.B. eine, wie in Ausführungsbeispielen beschrieben, Schaltung zur (korrelierten) Doppelabtastung aufweisen.

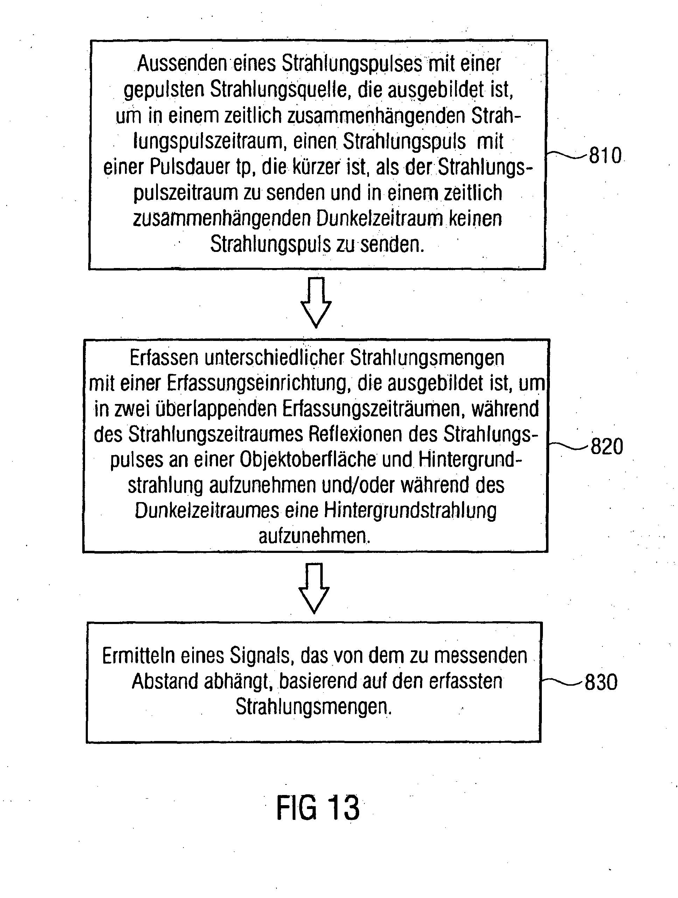

In Fig. 13 ist in einem Blockdiagramm ein Ausführungsbeispiel zum Verfahren der optischen Abstandsmessung dargestellt. Gemäß einem Ausführungsbeispiel weist das Verfahren ein Aussenden 810 eines Strahlungspulses mit einer gepulsten Strahlungsquelle, die ausgebildet ist, um in einem zeitliche zusammenhängenden Strahlungspulszeitraum einen Strahlungspuls mit einer Pulsdauer $t_p$, die kürzer ist, als der Strahlungspulszeitraum zu senden, und in einem zeitlich zusammenhängenden Dunkelzeitraum keinen Strahlungspuls zu senden. Ferner weist das Verfahren einen Schritt des Erfassens 820 unterschiedlicher Strahlungsmengen mit einer Erfassungseinrichtung, die ausgebildet ist, um in zwei überlappenden Erfassungszeiträumen und zwar während des Strahlungspulszeitraumes, Reflexionen des Strahlungspulses an einer Objektoberfläche und Hintergrundstrahlung aufzunehmen und/oder in zwei überlappenden Erfassungszeiträumen und zwar während des Dunkelzeitraumes eine Hintergrundstrahlung aufzunehmen. Das Verfahren weist ferner ein Ermitteln 830 eines Signals auf, das von dem zu messenden Abstand abhängt, basierend auf den erfassten Strahlungsmengen.

Das Aussenden 810 kann beispielsweise so durchgeführt werden, dass, wie oben beschrieben, ein gepulster Laserstrahl oder ein gepulster LED-Strahl ausgesendet wird. In einem anderen Ausführungsbeispiel zum Verfahren zur optischen Abstandsmessung wird das Aussenden 810 des Strahlungspulses und das Erfassen 820 der unterschiedlichen Strahlungsmengen in zwei überlappenden Erfassungszeiträumen, während des Strahlungspulszeitraumes zeitlich synchronisiert gestartet, wobei in diesem Ausführungsbeispiel ein erster Erfassungszeitraum mit einer zeitlichen Dauer $t_{int_1}$ die Pulsdauer $t_p$ aufweist und ein zweiter Erfassungszeitraum eine zeitliche Dauer $t_{int2}$ aufweist, die länger ist als $t_p$ und/oder bei dem das Erfassen der unterschiedlichen Strahlungsmengen in zwei überlappenden Erfassungszeiträumen, während des Dunkelzeitraums, zeitlich synchronisiert nach der Beendigung des Strahlungspulszeitraums startet, wobei ein dritter Erfassungszeitraum wieder mit der zeitlichen Dauer $t_{int3}$ die Pulsdauer $t_p$ aufweisen kann und der vierte Erfassungszeitraum mit der zeitlichen Dauer $t_{int4}$ eine zeitliche Dauer $t_{int2}$ aufweist, die länger ist als $t_p$.

Das Erfassen 820 der unterschiedlichen Strahlungsmengen mit einer Erfassungseinrichtung und das Ermitteln 830 eines Signals kann beispielsweise so durchgeführt werden, dass zwei von der erfassten Strahlungsmenge abhängige, in den zwei überlappenden Erfassungszeiträumen erfassen. Ladungsmengen oder Spannungswerte in einer Erfassungseinrichtung zwischengespeichert werden und basierend auf den zwischengespeicherten Ladungs- oder Spannungswerten Signale ermittelt werden, die von dem zu messenden Abstand abhängen. In Ausführungsbeispielen zu dem Verfahren zur optischen Abstandsmessung wird das Ermitteln 830 eines Signals mit einer Schaltung zur korrelierten Doppelabtastung so durchgeführt, dass Differenzsignale von den, in den zwei überlappenden Erfassungszeitraumen erfassten Reflexionen des Strahlungspulses an einem Objekt und einer Hintergrund-Strahlung, während des Strahlungspulszeitraums und den, in den zwei überlappenden Erfassungszeiträumen, während des Dunkelzeitraums, erfassten Hintergrundstrahlungen ermittelt werden.

In einem weiteren Ausführungsbeispiel der vorliegenden Erfindung wird in einem Mehrfachabtastverfahren ein elektrisches Koppeln einer ersten Abtastkapazität über eine Spannungsfolgerschaltüng mit einem Ausgang eines kapazitiven Pixelsensorelementes während eines ersten Zeitfensters und ein elektrisches Koppeln einer zweiten Abtastkapazität über eine Spannungsfolgerschaltung mit dem Ausgang des kapazitiven Pixelsensorelementes während eines zweiten Zeitfensters durchgeführt, Dabei überlappen sich das erste und zweite Zeitfenster, so dass am Ende des ersten und zweiten Zeitfensters, unterschiedliche, einen Auf- oder Entladevorgang des kapazitiven Pixelsensorelementes beschreibende Spannungssignale an der ersten und zweiten Abtastkapazität vorliegen. Dieses Mehrfachabtastverfahren kann ferner einen Schritt der Differenzbildung des Spannungssignals, das an der ersten Abtastkapazität, am Ende eines ersten Zeitraums vorliegt mit dem Spannungssignal, das an der ersten Abtastkapazität am Ende eines zweiten Zeitraums vorliegt und des Spannungssignals das an der zweiten Abtastkapazität am Ende des ersten Zeitraums vorliegt mit dem Spannungssignal das an der zweiten Abtastkapazität am Ende eines zweiten Zeitraums vorliegt umfassen. Der erste Zeitraum kann beispielsweise der Strahlungspulszeitraum sein und der zweite Zeitraum kann der Dunkelzeitraum sein.

In einem Ausführungsbeispiel der vorliegenden Erfindung ist die Erfassungseinrichtung 420 als ein Pixelsensorelement 125a ausgebildet, wobei der Pixelsensorausgang über mindestens einen Pufferverstärker 134 mit der parallel ausgebildeten Abtasthalteschaltung 550 verbunden ist, wobei jeder Parallelzweig der Abtasthalteschaltung einen Abtastschalter 252a, 252b aufweist, der den Ausgang 134a des mindestens einen Pufferverstärkers 134 mit einer Abtastkapazität 254a, 254b und einem Transferschalter 560a, 560b verbindet. Jeder Transferschalter 560a, 560b eines Parallelzweiges ist seinerseits über einen weiteren Pufferverstärker 264 mit einer Auswerteeinrichtung 470 elektrisch gekoppelt. Die Abtastschalter 252a und 252b der Abtasthalteschaltung 550 werden derart angesteuert, um in zwei unterschiedlichen, überlappenden Erfassungszeiträumen geschlossen zu sein, so dass unterschiedliche Signale eines Pixelsensorelements auf jeder Abtastkapazität 252a, 252b eines Parallelzweiges zwischengespeichert werden.

Die Pufferverstärker 134 und 264 können in Ausführungsbeispielen beispielsweise als Spannungsfolger ausgebildet sein, um die Photodiode bzw. die Abtasthalteschaltung zu puffern. Die Spannungsfolger können deshalb als Impedanzwandler wirken mit einem idealerweise unendlich großen Eingangswiderstand und einem vernachlässigbaren Ausgangswiderstand.

In anderen Ausführungsbeispielen der vorliegenden Erfindung ist die Auswerteeinrichtung 470 als eine Schaltung zur korrelierten Doppelabtastung ausgebildet. Die Schaltung zur korrelierten Doppelabtastung weist einen Verstärker 280 auf, wobei der Ausgang des Verstärkers über einen Rücksetzschalter 282 mit einem Eingang 280b verbunden ist. Die Schaltung zur korrelierten Doppelabtastung kann eine erste 274a und eine zweite 274b, in paralleler Weise verschaltete Abtastkapazitäten aufweisen, die jeweils über einen ersten 572a und einen zweiten 572b Abtastschalter mit einem Eingang der Auswerteeinrichtung 470a elektrisch gekoppelt und mit einem Eingang des Verstärkers verbunden sind. In anderen Ausführungsbeispielen kann die Schaltung zur korrelierten Doppelabtastung auch nur eine Abtastkapazität 274 und/oder einen Schalter 572 aufweisen.

Wie in Ausführungsbeispielen gezeigt, kann die Schaltung zur korrelierten Doppelabtastung eine erste 284a und eine zweite 284b in paralleler Weise verschaltete Rückkopplungskapazität, die mit dem Eingang des Verstärkers 280b verbunden ist aufweisen. Jede der Rückkopplungskapazität ist mit ihrem anderen Anschluss über den jeweiligen Referenzspannungsschalter 290a, b mit einem Referenzpotential 275, und über einen ersten 288a, und zweiten 288b Verstärkerschalter mit dem Ausgang des Verstärkers 280 verbunden. In anderen Ausführungsbeispielen zur vorliegenden Erfindung weist der optische Abstandsmesser bzw. die Vorrichtung für die Doppelabtastung eine Steuervorrichtung 580 auf, die ausgebildet ist, um in einer ersten Phase A den ersten Abtastschalter 572a der Auswerteeinrichtung 470, den Rücksetzschalter 282 und die Referenzspannungsschalter 290 zu schließen, so dass auf der ersten Abtastkapazität 274a ein erstes Signal, das am Eingang der Auswerteeinrichtung 470 anliegt, ausgebildet wird., In einer sich anschließenden zweiten zeitlichen Phase B wird der erste Abtastschalter 572a durch die Steuereinrichtung 580 geöffnet, der Rücksetzschalter 282 bleibt geschlossen, und der zweite Abtastschalter 572b der Auswerteeinrichtung wird geschlossen, um auf der zweiten Abtastkapazität 274b ein zweites Signal auszubilden. In einer sich anschließenden dritten zeitlichen Phase C kann die Steuervorrichtung veranlassen, dass der erste Abtastschalter 572a und der erste Verstärkerschalter 288a geschlossen wird, der zweite Abtastschalter 572b und der Rücksetzschalter 282 geöffnet werden, um ein drittes Signal an die erste Abtastkapazität 274a anzulegen, damit sich ein Differenzsignale aus dem ersten und dem dritten Signal auf der ersten Rückkopplungskapazität 284a ausbildet. Die Steuervorrichtung 580 kann dann so ausgebildet sein, dass in einer vierten zeitlichen Phase D der zweite Abtastschalter 572b und der zweite Verstärkerschalter 288b geschlossen werden, so dass ein viertes Signal an der zweiten Abtastkapazität 274b anliegt und sich ein weiteres Differenzsignal aus dem zweiten und vierten Signal auf der zweiten Rückkopplungskapazität 284b ausbildet und welches am Ausgang 299 anliegt.

Wie beispielsweise im Zusammenhang mit Fig. 12 gezeigt wurde, kann in Ausführungsbeispielen ein optischer Abstandsmesser eine Vielzahl von Erfassungseinrichtungen 420 zur Erfassung unterschiedlicher Strahlungsmengen, welche in Zeilen und Spalten angeordnet sind, aufweisen. Ferner kann sie eine Steuereinrichtung zur Ansteuerung der Zeilen und Spalten aufweisen. Die Steuerlogik bzw. Steuereinrichtung kann beispielsweise dazu eingesetzt werden, die Erfassungseinrichtungen in einer Zeile anzuwählen und die Shutter bzw. Schalter sowie die Spaltenadresse, wie oben beschrieben auszuwählen bzw. anzusteuern. In einem Ausführungsbeispiel ist jeder Spalte oder jeder Zeile des Pixelarrays eine Auswerteeinrichtung 470 zugeordnet, die über eine Leseleitung 568 mit den in Zeilen und Spalten angeordneten Erfassungseinrichtungen 420 verbunden ist, so dass basierend auf den erfassten Strahlungsmengen Signale ermittelt werden, die von einem Abstand des zu messenden Objekts abhängen. Die ermittelten Signale können dann zeilen- oder, in anderen Ausführungsbeispielen auch, spalten- oder pixelweise zur Weiterverarbeitung zur Verfügung gestellt werden. In einem anderen Ausführungsbeispiel kann jedem Pixel eine Auswerteeinrichtung 470 zugeordnet sein.

In Ausführungsbeispielen der vorliegenden Erfindung weist allgemein eine Vorrichtung ein Pixelsensorelement 125a auf, das in Abhängigkeit einer Messgröße einen Auf- oder Entladevorgang vollzieht, der an einem Pixelsensorelementausgang 134a erfassbar ist. Die Vorrichtung kann außerdem mindestens eine Spannungsfolger 134 aufweisen, sowie eine erste und zweite Abtastkapazität 252a, 254b sowie einen ersten und einen zweiten Schalter 252a und 252b, die die erste 254a, bzw. die zweite 254b Abtastkapazität über den mindestens einen Spannungsfolger 134 in paralleler Weise mit dem Pixelsensorelementausgang verbinden. Ferner kann eine Vorrichtung gemäß einem Ausführungsbeispiel der vorliegenden Erfindung eine Steuereinrichtung aufweisen, die ausgebildet ist, um den ersten und zweiten Schalter 252a und 252b so zu steuern, dass der erste Schalter in einem ersten Zeitfenster geschlossen ist und der zweite Schalter in einem zweiten Zeitfenster geschlossen ist, wobei sich das erste Zeitfenster 304 und das zweite Zeitfenster 314 zeitlich überlappen, derart, dass am Ende des ersten 304 und zweiten Zeitfensters 314 unterschiedlich den Auf- oder Entladevorgang des kapazitiven Pixelsensorelements 125a beschreibende Spannungssignale $U_1$, $U_2$ an den Abtastkapazitäten 254a und 254b vorliegen.

In Ausführungsbeispielen der vorliegenden Erfindung handelt es sich häufig bei der Messgröße die zu einem Auf- oder Entladevorgang des Pixelsensorelements führt, um eine gepulste Strahlung. In anderen Ausführungsbeispielen der vorliegenden Erfindung können jedoch auch andere Messgrößen, durch die allgemein gesprochen, ein kapazitives Sensorelement einen Auf- oder Entladevorgang vollzieht, mit den in Ausführungsbeispielen beschriebenen Vorrichtungen und durch Verfahren zur korrelierten Doppelabtastung erfasst werden.

Die in den Ausführungsbeispielen beschriebenen Vorrichtungen bzw. das Verfahren der korrelierten Doppelabtastuing können also beispielsweise auch in anderen Bereichen der Bilderfassung bzw. der Abstandsmessung eingesetzt werden.

Denkbar ist auch ein Einsatz des in der vorliegenden Erfindung dargestellten korrelierten Doppelabtastverfahren beispielsweise in resistiven, induktiven, kapazitiven, piezoelektrischen, Magnetfeld- oder Temperatur- Sensoren. Allgemein kann also das erfindungsgemäße korrelierte Doppelabtastverfahren bzw. die Vorrichtung zur Doppelabtastung in weiten Bereichen der Messtechnik bzw. Messwerterfassung eingesetzt werden.

Gemäß einem weiteren Ausführungsbeispiel der vorliegenden Erfindung kann das Pixelsensorelement 125a als PN-Diode, als Photogate, als so genanntes Charged-Coupled-Device (GCD), als PIN-Diode, als CCD-Photogate, als photonischer Mischer, als N-Wannew Photodiode oder beispielsweise auch als gepinnte Photodiode ausgebildet sein. Das Pixelsensorelement kann also als ein kapazitives Pixelsensoreletrient ausgebildet sein, wobei sich ein Auf- oder Entladevorgang aufgrund einer mit dem kapazitiven Pixelsensorelement wechselwirkenden Strahlung oder allgemein Messgröße vollzieht.

In einem anderen Ausführungsbeispiel kann die Steuereinrichtung 580 so ausgebildet sein, dass der erste Schalter 252a für das erste Zeitfenster 314 und der zweite Schalter 252b für das zweite Zeitfenster 316 zeitgleich zu Beginn des Auf- oder Entladevorgangs in Abhängigkeit der Messgröße geschlossen wird, wobei die zeitliche Dauer 304a des ersten Zeitfensters kürzer ist, als die zweite Dauer 316a des zweiten Zeitfensters. Die zeitliche Dauer des ersten Zeitfensters 314 kann beispielsweise einem Wechselwirkungszeitraum einer Messgröße, in deren Abhängigkeit ein kapazitives Pixelsensorelement einen Auf- oder Entladevorgang vollzieht, entsprechen.

Eine Auswerteeinrichtung 470 kann beispielsweise auch so ausgebildet sein, dass basierend auf zwei hintereinander an der ersten 274a und zweiten 274b Abtastkapazität anliegen-den Spannungssignalen Differenzsignale ermittelt werden.

In einem Ausführungsbeispiel kann die Vorrichtung ein kapazitives Pixelsensorelement aufweisen, das in Abhängig-keit einer Messgröße einen Auf- oder Entladevorgang voll-zieht, der an einem Pixelsensorelementausgang 134a erfassbar ist. Außerdem kann die Vorrichtung mindestens einen Spannungsfolger 134, eine erste 254a und eine zweite 254b Abtastkapazität, einen ersten 252a und einen zweiten 252b Schalter, die die erste bzw. die zweite Abtastkapazität über den mindestens einen Spannungsfolger in paralleler Weise mit dem Pixelsensorelementausgang 134a verbinden, aufweisen. Ferner kann eine erfindungsgemäße Vorrichtung auch eine Steuereinrichtung 580 aufweisen, die ausgebildet ist, um den ersten 252a und zweiten 252b Schalter so zu steuern, dass der erste Schalter in einem ersten Zeitfenster 314 geschlossen ist, und der zweite Schalter in einem zweiten Zeitfenster 316 geschlossen ist, wobei sich das erste Zeitfenster und das zweite Zeitfenster zeitlich überlappen, derart, dass am Ende des ersten und zweiten Zeitfensters unterschiedliche, den Auf- und Entladevorgang des kapazitiven Pixelsensorelements beschreibende Span-nungssignale an dem Abtastkapazitäten vorliegen. Die Vorrichtung kann ferner eine Auswerteeinrichtung 470 aufwei-sen, die einen Verstärker 280 aufweist, z. B. einen Opera-tionsverstärker, wobei der Ausgang 280a des Verstärkers über einen Rücksetzschalter 282 mit dem Eingang 280b des Verstärkers verbunden ist. Die Auswerteeinrichtung kann ferner eine dritte 274a und eine vierte 274b Abtastkapazität, die in paralleler Weise über einen dritten 572a und vierten 572b Schalter mit der ersten 254a und zweiten 254b Abtastkapazität elektrisch gekoppelt und mit dem Eingang 280b des Verstärkers gekoppelt sind. Die Auswerteeinrich-tung 470 kann ferner eine erste 284a und eine zweite 284b, in paralleler Weise verschaltete Rückkopplungskapazität aufweisen, die mit dem Eingang des Verstärkers und über je einen Referenzspannungsschalter 290a,b mit einem Referenzpotential 275 und über einen ersten 288a und zweiten 288b Verstärkerschalter mit dem Ausgang 280a des Verstärkers verbindbar sind. Dabei kann die Steuervorrichtung 580 in diesem Ausführungsbeispiel so ausgebildet sein, den ersten, den zweiten, den dritten, b vierten Schalter sowie den Rücksetzschalter, die Referenzspannungsschalter und die Verstärkerschalter so zu steuern, dass die Auswerteeinrich-tung in vier aufeinander zeitlich folgenden Phasen zwei Differenzspannungssignale ermittelt. Also werden die Diffe-renzspannungssignale durch Subtraktion ermittelt. Ein Abstandsmesser kann pro Pixel zwei in paralleler Weise verschaltete Rückkopplungskapazitäten aufweisen und damit insgesamt die zweifache Anzahl an Rückkopplungskapazitäten aufweisen, wie das Pixelarray des Abstandsmessers Zeilen aufweist.

Denkbar ist auch, dass ein Doppelabtastsystem eine Vielzahl von Vorrichtungen aufweist, die wie oben beschrieben ein kapazitives Pixelsensorelement, mindestens einen Spannungs-folger, eine erste und eine zweite Abtastkapazität mit einem ersten und zweiten Schalter und eine Steuereinrich-tung aufweisen. Die Vielzahl dieser Vorrichtungen können in Zeilen und Spalten einer Matrix angeordnet sein, wobei jeder Zeile oder jeder Spalte der Matrix eine Auswerteeinrichtung 470 zugeordnet ist, die mit Hilfe einer Steuereinrichtung angesteuert werden kann und über eine Leseleitung, mit den, den Auf- oder Entladevorgang der kapazitiven Pixelsensorelemente beschreibenden, Spannungssignalen an den Abtastkapazitäten elektrisch koppelbar ist.

In einem Ausführungsbeispiel umfasst ein optischer Abstandsmesser gemäß der vorliegenden Erfindung eine Photodiodenstruktur mit einer Photodiodenkapazität zum Akkumulieren von Ladungsträgern auf elektromagnetische Strahlung hin, zwei Auslesekapazitäten, eine Rücksetzeinrichtung bzw. Reseteinrichtung zum Rücksetzen der Auslesekapazitäten durch Anlegen einer vorbestimmten Spannung an die Auslesekapazitäten, eine Schalteinrichtung zum Verbinden der Photodiodenstruktur mit den Auslesekapazitäten, um die akkumulierten Ladungsträger während zwei überlappenden Erfassungszeiträumen während einer Transferphase, die durch das Öffnen der Shutter 252a bzw. 252b bestimmt ist auf die Auslesekapazitäten zu transferieren und zum Trennen der Photodiodenstruktur von den Auslesekapazitäten nach den Akkumulationsphasen bzw. nach ihren jeweiligen überlappenden Erfassungszeiträumen im Strahlungspulszeitraum und im Dunkelzeitraum und eine Auslese- oder Auswerteeinrichtung zum Auslesen der Auslesekapazitäten, wobei die Ausleseeinrichtung ausgebildet ist, um während der Akkumulationsphase im Strahlungspulszeitraum die Auslesekapazität ein erstes Mal und während einer Akkumulationsphase im Dunkelzeitraum ein zweites Mal auszulesen, um einen ersten und zweiten Auslesewert aus den ersten und zweiten überlappenden Erfassungszeiträumen zu erhalten, und die Werte zu kombinierten, um zwei Ausleseergebnisse zu erhalten.

Durch die vorliegende Erfindung kann eine Rauschreduzierung ermöglicht werden, wenn einer Photodiodenstruktur mit einer Photodiodenkapazität Auslesekapazitäten beigeordnet werden, die von der Photodiodenstruktur durch eine Schaltereinrichtung getrennt ist, und wenn eine Auslese- bzw. Auswerteeinrichtung vorgesehen ist, die zum Erhalten von Ausleseergebnissen einen Auslesewert nicht nur nach der Akkumulationsphase im Strahlungspulszeitraum aus den Auslesekapazitäten ausliest, sondern einmal auch nach der Akkumulationsphase im Dunkelzeitraum, um die beiden Auslesewerte zu kombinieren, wie z. B. die Differenz zu bilden, so dass das Rücksetzrauschen, das beim Rücksetzen der Auslesekapazitäten entstehen kann, aus den Ausleseergebnissen eliminiert oder reduziert werden kann.

Gemäß einem Ausführungsbeispiel der vorliegenden Erfindung kann die Photodiodenstruktur aus einer gepinnten Photodiode gebildet sein, deren Raumladungszone verarmt werden kann, was insbesondere den Vorteil mit sich bringt, dass bei einer gepinnten Photodiode der lichtempfindliche p-n-Übergang nicht durch eine Metallelektrode verdeckt und nahe der Oberfläche ist, so dass eine gepinnte Photodiode eine höhere Empfindlichkeit aufweist.

Gemäß einem weiteren Ausführungsbeispiel der vorliegenden Erfindung findet ein erstes Auslesen der ersten beiden Auslesewerte in einem Strahlungspulszeitraum unmittelbar nach dem Rücksetzen der Auslesekapazitäten statt, wobei das zweite Auslesen nach dem Ende der Akkumulationsphase oder in einer anschließenden Transferphase im Dunkelzeitraum stattfindet. Der Spannungszustand einer Auslesekapazität kann zu diesem Zweck zu jedem Zeitpunkt derart ausgelesen werden, dass sich der Zustand der Auslesekapazität beim Ausleseprozess nicht verändert. Darüber hinaus können die ausgelesenen Spannungszustände der Auslese- bzw. Abtastkapazitäten analog oder aber auch digitalisiert zwischengespeichert werden. Der Anteil des Rücksetzrauschens am endgültigen Ausleseergebnis wird dabei dadurch korrigiert, dass die zwischengespeicherten Auslesewerte am Ende eines vollständigen Auslesezyklusses voneinander subtrahiert werden, sodass im endgültigen Ausleseergebnis der Beitrag des Rücksetzrauschens eliminiert oder zumindest verringert ist.

Bei einem weiteren Ausführungsbeispiel der vorliegenden Erfindung wird es ermöglicht, eine Sequenz mehrerer aufeinanderfolgender Lichtpulse aufzunehmen, ohne nach jedem Lichtpuls ein Rücksetzereignis der Auslesekapazität auslösen zu müssen. Dazu werden zu Beginn der Ladungsakkumulation einer ersten Akkumulationsphase im Strahlungspulszeitraum die Auslesekapazitäten zurückgesetzt, unmittelbar danach wird der Zustand der Auslesekapazitäten ein erstes Mal ausgelesen und gespeichert. Nach Beendigung der ersten Ladungsakkumulationsphase wird die akkumulierte Ladung von der Photodiode auf die Auslesekapazitäten übertragen. Ohne die Auslesekapazitäten zurücksetzen zu müssen, kann nun die Photodiode einen erneuten Akkumulationszyklus im Dunkelzeitraum beginnen, da ihre Raumladungszone durch die Verarmung aufgrund des Resets wieder hergestellt wurde. Am Ende des ersten Akkumulationszyklus findet wieder ein Transfer der Photoladungen auf die Auslesekapazität statt. Dieser Vorgang ist im Prinzip beliebig oft wiederholbar, wobei darauf zu achten ist, dass die vorgeladene Auslese- bzw. Abtastkapazität durch die akkumulierten Ladungen in der Photodiode bei jedem Ladungstransfer weiter entladen wird, so dass sich die maximale Anzahl der aufzuzeichnenden Akkumulationsphasen aus der Größe der Auslesekapazität und des Rücksetzpotentials ergibt. Dies wird als so genannte Full Well Capacity bezeichnet. Am Ende der letzten Akkumulationsphase wird der Spannungszustand der Auslesekapazität ein zweites mal ausgelesen und ebenfalls zwischengespeichert, das endgültige Ausleseergebnis ergibt sich durch Bildung der Differenz des zweiten Ausleseergebnisses und des ersten Ausleseergebnisses und ist wiederum vom Rauschanteil befreit. Ein solchermaßen betriebener optischer Abstandsmesser trägt zu einer signifikanten Verbesserung des Signal-zu-Rausch-Verhältnisses bei, und kann mit einer Standard-CMOS-Struktur realisiert werden. Mehrere aufeinander folgende Akkumulationsphasen werden möglich, ohne dass nach jeder einzelnen Akkumulationsphase ein Rücksetzereignis bzw. Pixel-Reset ausgelöst werden muss, welches durch den unvermeidbaren Rauschbeitrag das Signal-zu-Rausch-Verhältnis wieder verschlechtern würde.

Das Pixelsensorelement kann in einem Ausführungsbeispiel eine gepinnte Photodiode aufweisen. Dieses kann wie folgt funktionieren. Vor einer Abstandmessung wird eine n-Wanne der gepinnten Photodiode verarmt, so dass sich dort am p-n-Übergang über der Sperrschichtkapazität ein so genanntes "Pin-Potential" $U_{PD} = U_{pin}$ einstellt. Dazu werden zunächst die Auslese bzw. Abtastkapazitäten mittels eines Reset-Signals auf das Potential der Versorgungs- bzw. Resetspannung $V_{Reset}$ gebracht. Danach wird die eigentliche Verarmung der n-Wanne der gepinnten Photodiode durch Schließen der Schalters 252a,b, wodurch noch auf der Photodiodenkapazität 132 gespeicherte Ladungen zu den Auslesekapazitäten hin abfließen, durchgeführt. Mit der fallenden Flanke eines Signals zum Schließen der Shutter 252a, beginnt eine Phase der Ladungsakkumulation, in der die photogenerierten Ladungsträger in der Raumladungszone der gepinnten Photodiode akkumuliert werden und das Potential an der Photodiodenkapazität vom Startpotential $U_{pin}$ proportional zur detektierten Lichtmenge abnimmt. Nach dem Öffnen der Schalter 252a, b, also nach Beendigung der Aufintegration liegen an den Auslesekapazitäten, den photogenerierten Ladungsträgern proportionale Spannungen an.

Es wird auch darauf hingewiesen, dass abhängig von den Gegebenheiten das erfindungsgemäße Verfahren auch in Software implementiert sein kann. Die Implementierung kann auf einem digitalen Speichermedium, insbesondere einer Diskette, einer CD oder einer DVD mit elektronisch auslesbaren Speichersignalen erfolgen, die so mit einem programmierbaren Computersystem und/oder einem Mikrocontroller zusammenwirken können, dass das entsprechende Verfahren ausgeführt wird.

Allgemein besteht die Erfindung somit auch in einem Computerprogrammprodukt mit auf einem maschinelesbaren Träger gespeicherten Programmcode zur Durchführung des erfindungsgemäßen Verfahrens, wenn das Computerprogrammprodukt auf einem Rechner und/oder Mikrocontroller und/ oder einem digitalen Signalprozessor digital signal processing -DSP) abläuft. In anderen Worten ausgedrückt, kann die Erfindung somit als ein Computerprogramm mit einem Programmcode zur Durchführung des Verfahrens realisiert werden, wenn das Computerprogramm auf einem Computer und/oder Mikrocontroller abläuft.

Allgemein kann die in dieser Erfindung vorgestellten Verfahren bzw. die Vorrichtungen auch auf Anwendungsgebiete angewandt werden, die fern der 3D-Abstandsmessung bzw. 3D-Bildaufnahme sind.

Das in Ausführungsbeispielen vorgestellte Detektionsprinzip verwendet keine konventionelle serielle 3D-Messwertaufnahme, sondern ein paralleles Verfahren, welches, wie weiter oben schon beschriebenen wurde, Vorteile aufweisen kann. Beispielsweise kann die für die Messung notwendige Laserenergie um die Hälfte reduziert werden und die Messgeschwindigkeit und Objektauflösung gesteigert werden, da eine Lasererholzeit bzw. eine Erholzeit für eine gepulste Strahlungsquelle, welche je nach abgestrahlter Leistung mehrere Millisekunden betragen kann, nicht mehr eingehalten werden muss. Dadurch eröffnen sich neue Anwendungsfelder für die dreidimensionale Abstandsmesssensorik und die Bildaufnahme mit gepulstem Licht im Allgemeinen. Es ist beispielsweise denkbar, dass Hochgeschwindigkeitskameras, die nach dem hier beschriebenen Verfahren arbeiten, die Bahnkurve von Flugkörpern mit hoher Geschwindigkeit, wie z. B. Raketen oder Projektilen verfolgen können. Ebenso ist es denkbar, dass Kfz-Abstandskameras wesentlich robuster sind, und somit noch besser in der Lage sind, sicher den Abstand zu einem anderen Fahrzeug oder beispielsweise einem Fußgänger einzuhalten. Existierende 3D-Messsysteme, welche beispielsweise mit einem Laserlicht im Spektralbereich von 900 Nanometer arbeiten, würden eine sehr viel höhere Pulsenergie benötigen, da jeweils zwei Pulse benötigt werden, um zuverlässig den Abstand bestimmen zu können. Es ist auch denkbar, dass alternativ bei einer Beibehaltung der verwendeten Laserenergie des Standardverfahrens, die auf die Breite des Integrationszeitraums entfallende Laserleistung erhöht werden kann. Dadurch steigt der Störabstand zwischen Laser- und Hintergrundlicht und somit die Messauflösung. In anderen Worten kann also die Laserpulsleistung erhöht werden und somit die Messauflösung verbessert werden, wobei die zur Messung verwendete Gesamtlaserenergie beibehalten werden kann. Im Vergleich zu bisherigen existierenden Anwendungen ist die Verbesserung des Störabstandes näherungsweise durch das Verhältnis der Laserenergien gegeben. In einem 0,35 Mikrometer Standard-CMOS-Fertigungsprozess lassen sich beispielsweise dreidimensionale Arrays oder Matrizen mit ca. 2.000 Pixel bei einer Kantenlänge von 100 bis 200 Mikrometern integrieren.

Gemäß einem anderen Aspekt der vorliegenden Erfindung kann das beschriebene Verfahren bzw. die Vorrichtung auch in zweidimensionalen CMOS-Bildsensoren eingesetzt werden. Durch das Doppelshutterverfahren, wie es oben beschrieben wurde, sind Differenzbildanwendungen im zweidimensionalen Bereich, die mit aktiver gepulster Beleuchtung arbeiten, möglich.

Bei 3D-Aufnahmen kann die Korrektur der Reflektanz mittels Doppelshutterverfahren auf Systemebene realisiert werden, dabei wird zwischen "On-Chip", also auf dem Bildsensor und "Off-Chip" also nicht auf dem Bildsensor (Software, Firmware) Korrekturberechnungen unterschieden. Diese Vorgehensweise lässt sich ebenfalls auf das Doppelshutterverfahren übertragen, wie es in dieser Erfindung dargestellt wurde. So ist es möglich, neben der einfachen subtraktiven Hintergrundlichtkorrektur auch die Reflektanzkorrektur entweder hardwarenah auf dem Sensorchip und/oder in einem dem Sensorchip umfassenden System, in einem Computerprogramm oder einer Software zu realisieren.

In Ausführungsbeispielen kann auch eine Digitalisierung der erfassten Spannungssignale direkt hinter der Abtasthalteschaltung 550 stattfinden und eine sich anschließende Subtraktion und/oder Division dieser digitalen Werte ebenfalls "On-Chip" durchgeführt wird. Eben so gut können diese digitalisierten Spannungswerte extern, beispielsweise in dem Kamerasystem oder in einem Computer subtrahiert und/oder dividiert werden, um so die Abstandsberechnung durchzuführen. Die Subtraktion der durch die Abtasthalteschaltung erfassten Spannungswerte kann also in anderen Ausführungsbeispielen auch anders als durch die CDS-Stufe erfolgen, nämlich beispielsweise digital "On-Chip" oder extern.

In einem anderen Ausführungsbeispiel können die Differenzspannungswerte am Ausgang der Auswerteeinrichtung 470 bzw. der CDS-Stufe "On-Chip" digitalisiert werden und entsprechend eine "On-Chip" Division nach der CDS-Stufe durchgeführt werden, um den Abstandwert zu ermitteln. Die Division dieser digitalen Werte kann ebenfalls wieder extern, beispielsweise in einem Kamerasystem oder in einem Computer erfolgen.

In Ausführungsbeispielen kann der Strahlungspuls gegenüber den Integrationsfenstern einen variablen Startpunkt besitzen, also einen variablen Zeitversatz aufweisen. Die Integrationsfenster bzw. die Erfassungszeiträume können also mit einem einstellbaren bekannten Zeitversatz bzw. phasenstarr zueinander gekoppelt starten.

Zwischen den Shuttersignalen zum Öffnen und Schließen der Zeitfenster zur Erfassung der Spannungssignale und dem Signal zum Starten des Strahlungspulses kann beispielsweise ein Verzögerungsglied (Delayline) funktional eingebaut sein, um ein zeit- und damit abstandsvariables phasenstarr gekoppeltes Starten der Zeitfenster und des Strahlungspulses zu ermöglichen. Ist beispielsweise ein Objekt weit entfernt, so kann durch ein Verzögerungsglied mit einer einstellbaren definierten zeitlichen Länge, diese entsprechende Laufzeit bis zum Starten der Zeitfenster kompensiert werden. Die Erfassungszeiträume zum Erfassen der Strahlungsmengen, also die Integrationsfenster können eine variable Integrationzeit aufweisen, die beispielsweise über eine Steuereinrichtung eingestellt und angesteuert werden können und somit bekannt sind.

Wie in Ausführungsbeispielen gezeigt ist, können die von der Abtasthalteschaltung erfassten und zwischengespeicherten Spannungswerte in der CDS-Stufe seriell subtrahiert werden oder aber, falls die CDS-Stufe einen zweiten Operationsverstärker aufweist, auch komplett parallel verarbeitet werden. Die CDS-Stufe kann beispielsweise, wie in Ausführungsbeispielen gezeigt wurde auch nur einen Operationsverstärker aufweisen und die entsprechenden Abtastkapazitäten 274 und Rückkopplungskapazitäten 284 können trotzdem parallel ausgelegt sein. Dadurch ist eine Zwischenspeicherung, der in überlappenden Erfassungszeiträumen erfassten Spannungswerte in der CDS-Stufe für die in der CDS-Stufe durchgeführte Subtraktion der erfassten Spannungswerte möglich.

In Ausführungsbeispielen der vorliegenden Erfindung kann eine Auswerteeinrichtung oder CDS-Stufe 470 einer Zeile bzw. Spalte eines Pixelarrays eines Sensors 420 zugeordnet sein oder aber jeder Pixel weist eine ihm zugeordnete CDS-stufe auf.

Es sollte darauf hingewiesen werden, dass die Pufferverstärker 134 und 264 in den Ausführungsbeispielen auch Verstärker mit Pufferwirkung sein können, die eine größere Verstärkung als mal 1 aufweisen. Die Pufferverstärker 134 und 264 brauchen also nicht notwendigerweise als Spannungsfolger bzw. Sourcefolger ausgebildet sein. Für ein verbessertes Signal zu Rauschverhältnis kann es beispielsweise vorteilhaft sein das Spannungssignal des Pixelelementes 125a möglichst frühzeitig im Signalpfad zu verstärken. Dies kann durch den Einsatz eines Pufferverstärkers als Puffer 134, der ein Verstärkung größer als 1 und eine entsprechende Pufferung der Spannung an der Photodiode erlaubt, erreicht werden. Bei dem Puffer 134 und 264 kann es sich also beispielsweise um einen Operationsverstärker mit einer Verstärkung größer als mal 1 und eine geeignete Pufferwirkung aufweist.

Im Vergleich zu konventionellen Verfahren kann mit den in Ausführungsbeispielen beschriebenen Verfahren durch eine Mehrfachakkumulation eine wesentlich höhere Korrelation von Abstands- und Reflektanzmessungen erzielt werden. Dadurch können beispielsweise schnell bewegte Objekte besser erfasst werden und eine geringere "Verschmierung" des Objekts erreicht werden.

In Ausführungsbeispielen der vorliegenden Erfindung kann ein optischer Abstandsmesser 400 folgende Merkmale aufweisen: Eine gepulste Strahlungsquelle 110, die ausgebildet ist, um in einem zeitlich zusammenhängenden Strahlungspulszeitraum einen Strahlungspuls 110a mit einer Pulsdauer $t_p$, die kürzer ist, als der Strahlungspulszeitraum zu senden und in einem zeitlich zusammenhängenden Dunkelzeitraum keinen Strahlungspuls zu senden. Ferner eine Erfassungseinrichtung 420 zur Erfassung unterschiedlicher Strahlungsmengen in zwei überlappenden Erfassungszeiträumen und zwar während des Strahlungspulszeitraums, um Reflexionen des Strahlungspulses an der Objektoberfläche und eine Hintergrundstrahlung aufzunehmen und/oder in zwei überlappenden Erfassungszeiträumen und zwar während des Dunkelzeitraums, um eine Hintergrundstrahlung aufzunehmen und eine Auswerteeinrichtung 470, die basierend auf den erfassten Strahlungsmengen ein Signal ermittelt, das von einem Abstand des optischen Abstandsmessers 400 zu einem Objekt (105) abhängt.

Beispielsweise kann der optische Abstandsmesser eine Erfassungseinrichtung 420 aufweisen, die so ausgebildet ist, dass die zwei überlappenden Erfassungszeiträume und zwar während des Strahlungspulszeitraumes mit dem Strahlungspuls 110a der gepulsten Strahlungsquelle phasenstarr gekoppelt starten, wobei ein erster 314 von zwei Erfassungszeiträumen während des Strahlungspulszeitraums eine erste zeitliche Dauer $t_{int1}$ aufweist und ein zweiter 316 der zwei Erfassungszeiträume während des Strahlungspulszeitraums eine zweite zeitliche Dauer $t_{int2}$ aufweist, die länger ist, als eine Pulsdauer $t_p$ des Strahlungspulses 110a, und dass die zwei überlappenden Erfassungszeiträume während des Dunkelzeitraums vor oder nach Ablauf des Strahlungspulszeitraumes starten, wobei ein erster 315 der zwei Erfassungszeiträume während des Dunkelzeitraums eine dritte zeitliche Dauer $t_{int3}$ aufweist, die unterschiedlich zu der ersten zeitlichen Dauer $t_{int1}$ ist und ein zweiter 317 der zwei Erfassungszeiträume während des Dunkelzeitraums eine vierte zeitliche Dauer $t_{int4}$ aufweist, die unterschiedlich zu der zweiten zeitlichen Dauer $t_{int2}$ ist.

Beispielsweise kann es sich bei der gepulsten Strahlungsquelle 110 in Ausführungsbeispielen um einen Laser oder eine LED handeln, der elektromagnetische Strahlungen im ultravioletten (UV), sichtbaren (VIS), infraroten (IR) oder im fernen-infraroten (FIR) Spektralbereich ausstrahlt.

Der Pufferverstärker 134 kann in Ausführungsbeispielen der vorliegenden Erfindung, z.B. als ein Spannungsfolger oder als ein Operationsverstärker zur Verstärkung ausgebildet sein.

Ein optischer Abstandsmesser 400 kann in Ausführungsbeispielen eine Erfassungseinrichtung 420 mit einer PN-Photodiode, eine PIN-Photodiode, eine gepinnte Photodiode, ein Photogate, eine N-Wannen-Photodiode, ein CCD-Photogate oder einen photonischen Mischer aufweisen, die ausgebildet ist, um die unterschiedlichen Strahlungsmengen in zwei überlappenden Erfassungszeiträumen zu erfassen.

Der optische Abstandsmesser 400, kann gemäß einiger Ausführungsbeispiele eine Auswerteeinrichtung aufweisen bei der das zu Verfügung gestellte Signal "On-Chip" digitalisierbar ist und eine anschließende Division der digitalen Werte zur Bestimmung des Abstands "On-Chip" durchführbar ist.

In weiteren Ausführungsbeispielen des Abstandmessers können die oben genannten unterschiedlichen Ausführungsformen alleine oder in Kombination mit anderen Ausführungsformen ausgebildet sein und dementsprechend können die Merkmale dieser Ausführungsformen in weiteren Ausführungsformen der vorliegenden Erfindung alternativ oder zusätzlich miteinader kombiniert sein.

In weiteren Ausführungsbeispielen der vorliegenden kann eine Vorrichtung folgende Merkmale aufweisen: Ein kapazitives Pixelsensorelement 125a, das in Abhängigkeit einer Messgröße einem Auf- oder Entladevorgang unterzogen wird, der an einem Pixelsensorelementausgang 134a erfassbar ist. Ferner kann die Vorrichtung mindestens einen Pufferverstärker 134 und eine erste 254a und eine zweite 254b Abtastkapazität, sowie einen ersten 252a und einem zweiten 252b Schalter, über die die erste bzw. die zweite Abtastkapazität über den mindestens einen Pufferverstärker mit dem Pixelsensorelementausgang 134a verbindbar sind. Ferner kann die Vorrichtung eine Steuereinrichtung 580 aufweisen, die ausgebildet ist, um den ersten und zweiten Schalter so zu steuern, dass der erste Schalter in einem ersten Zeitfenster 314 geschlossen ist, und der zweite Schalter in einem zweiten Zeitfenster 316 geschlossen ist, wobei sich das erste Zeitfenster und das zweite Zeitfenster zeitlich überlappen, derart, dass am Ende des ersten und zweiten Zeitfensters unterschiedliche den Auf- oder Entladevorgang des kapazitiven Pixelsensorelements 125a beschreibende Spannungssignale an der ersten und an der zweiten Abtastkapazität vorliegen.

Die Vorrichtung kann in Ausführungsbeispielen so ausgebildet sein, dass die den Auf- oder Entladevorgang des kapazitiven Pixelsensorelements 125a beschreibende Spannungssignale an der ersten und zweiten Abtastkapazität "On-Chip" digitalisierbar sind und "On-chip" eine Subtraktion und/oder eine Division der digitalisierten Spannungssignale durchführbar ist, um einen Abstandswert zu einem Objekt zu ermitteln.

In Ausführungsbeispielen der Vorrichtung kann es sich bei der Messgröße um eine gepulste Strahlung handeln.

Das Pixelsensorelement kann in Ausführungsbeispielen als PN-Diode, Photogate, Charged-Coupled-Device (CCD), PIN-Diode, CCD-Photogate, photonischer Mischer, N-Wannenphotodiode oder als gepinnte Photodiode ausgebildet sein.

In weiteren Ausführungsbeispielen kann das Pixelsensorelement so ausgebildet sein, dass sich der Auf- oder Entladevorgang aufgrund einer, mit dem kapazitiven Pixelsensorelement wechselwirkenden Strahlung vollzieht.

Die Steuereinrichtung 580 kann in Ausführungsbeispielen beispielsweise so ausgebildet sein, dass der erste Schalter für das erste Zeitfenster und der zweite Schalter für das zweite Zeitfenster mit einem einstellbaren bekannten Zeitversatz zu dem Beginn des Auf- oder Entladevorgangs in Abhängigkeit der Messgröße geschlossen wird, wobei die zeitliche Dauer des ersten Zeitfensters kürzer ist, als die zeitliche Dauer des zweiten Zeitfensters.

In weiteren Ausführungsbeispielen der Vorrichtung können die oben genannten unterschiedlichen Ausführungsformen alleine oder in Kombination mit anderen Ausführungsformen ausgebildet sein und dementsprechend können die Merkmale dieser Ausführungsformen in weiteren Ausführungsformen der vorliegenden Erfindung alternativ oder zusätzlich miteinander kombiniert sein.

In weiteren Ausführungsbeispielen ist ferner ein Verfahren zur optischen Abstandsmessung mit folgenden Schritten beschrieben: Aussenden 810 eines Strahlungspulses mit einer gepulsten Strahlungsquelle, die ausgebildet ist, um in einem zeitlich zusammenhängenden Strahlungspulszeitraum, einen Strahlungspuls mit einer Pulsdauer $t_p$, die kürzer ist, als der Strahlungspulszeitraum zu senden und in einem zeitlich zusammenhängenden Dunkelzeitraum keinen Strahlungspuls zu senden, und Erfassen 820 unterschiedlicher Strahlungsmengen mit einer Erfassungseinrichtung, die ausgebildet ist, um in zwei überlappenden Erfassungszeiträumen und zwar während des Strahlungspulszeitraumes Reflexionen des Strahlungspulses an einer Objektoberfläche und Hintergrundstrahlung aufzunehmen und/oder in zwei Erfassungszeiträumen und zwar während des Dunkelzeitraums eine Hintergrundstrahlung aufzunehmen. Ferner mit einem Schritt des Ermittelns 830 eines Signals, das von dem zu messenden Abstand abhängt, basierend auf den erfassten Strahlungsmengen.

In Ausführungsbeispielen des erfindungsgemäßen Verfahrens kann das Aussenden 810 eines Strahlungspulses so durchgeführt werden, dass ein gepulster Laserstrahl oder LED-Strahl ausgesendet wird.

In Ausführungsbeispielen kann das Aussenden 810 des Strahlungspulses mit einer Pulsdauer $t_p$ und das Erfassen 820 der unterschiedlichen Strahlungsmengen in zwei überlappenden Erfassungszeiträumen und zwar während des Strahlungspulszeitraumes phasenstarr gekoppelt zu dem Aussenden des Strahlungspulses starten, wobei ein erster der zwei Erfassungszeiträume die Pulsdauer $t_p$ aufweisen kann und ein zweiter der zwei Erfassungszeiträume eine zeitliche Dauer $t_{int2}$ aufweisen kann, die länger ist als $t_p$ und/oder bei dem das Erfassen der unterschiedlichen Strahlungsmengen in zwei Erfassungszeiträumen und zwar während des Dunkelzeitraums, zeitlich vor oder nach dem Strahlungspulszeitraum erfolgt.

Das Ermitteln 830 von Signalen kann beispielsweise mit einer Schaltung zur korrelierten Doppelabtastung so durchgeführt werden, dass Differenzsignale von den in den zwei überlappenden Erfassungszeiträumen erfassten Reflexionen und Hintergrundstrahlungen, während des Strahlungspulszeitraumes und den in den zwei Erfassungszeiträumen erfassten Hintergrundstrahlungen, während des Dunkelzeitraumes, ermittelt werden.

In weiteren Ausführungsbeispielen zum erfindungsgemäßen Verfahren können die oben genannten unterschiedlichen Ausführungsbeispiele alleine oder in Kombination mit anderen Ausführungsbeispielen ausgebildet sein und dementsprechend können die Merkmale bzw. Verfahrensschritte dieser Ausführungsformen in weiteren Ausführungsformen der vorliegenden Erfindung alternativ oder zusätzlich miteinander kombiniert sein.

**Patentansprüche**

1. Ein optischer Abstandsmesser (400) mit folgenden Merkmalen:

    einer gepulsten Strahlungsquelle (110), die ausgebildet ist, um in einem zeitlich zusammenhängenden Strahlungspulszeitraum einen Strahlungspuls (110a) mit einer Pulsdauer ($t_p$), die kürzer ist als der Strahlungspulszeitraum, zu senden und in einem zeitlich zusammenhängenden Dunkelzeitraum keinen Strahlungspuls zu senden;
    eine Erfassungseinrichtung (420) zur Erfassung unterschiedlicher Strahlungsmengen in zwei überlappenden Erfassungszeiträumen während des Strahlungspulszeitraums, um Reflexionen des Strahlungspulses an der Objektoberfläche und eine Hintergrundstrahlung aufzunehmen, und/oder in zwei überlappenden Erfassungszeiträumen während des Dunkelzeitraums, um eine Hintergrundstrahlung aufzunehmen; und
    eine Auswerteeinrichtung (470), die basierend auf den erfassten Strahlungsmengen ein Signal ermittelt, das von einem Abstand des optischen Abstandsmessers (400) zu einem Objekt (105) abhängt.

2. Der optische Abstandsmesser (400) gemäß Anspruch 1, bei dem die Erfassungseinrichtung (420) so ausgebildet ist, dass die zwei überlappenden Erfassungszeiträume während des Strahlungspulszeitraumes mit dem Strählungspuls (110a) der gepulsten Strahlungsquelle phasenstarr gekoppelt starten, wobei ein erster (314) von zwei Erfassungszeiträumen während des Strahlungspulszeitraums eine erste zeitliche Dauer ($t_{int1}$) aufweist und ein zweiter (316) der zwei Erfassungszeiträume während des Strahlungspulszeitraums eine zweite zeitliche Dauer ($t_{int2}$) aufweist, die länger ist als eine Pulsdauer ($t_p$) des Strahlungspulses (110a), und dass die zwei überlappenden Erfassungszeiträume während des Dunkelzeitraums nach Ablauf des Strahlungspulszeitraumes phasenstarr gekoppelt starten, wobei ein erster (315) der zwei Erfassungszeiträume während des Dunkelzeitraums eine dritte zeitliche Dauer ($t_{int3}$) aufweist, die der ersten zeitlichen Dauer ($t_{int1}$) entspricht und ein zweiter (317) der zwei Erfassungszeiträume während des Dunkelzeitraums eine vierte zeitliche Dauer ($t_{int4}$) aufweist, die der zweiten zeitlichen Dauer ($t_{int2}$) entspricht oder wobei die zwei überlappenden Erfassungszeiträume während des Dunkelzeitraums vor oder nach Ablauf des Strahlungspulszeitraumes starten, wobei ein erster (315) der zwei Erfassungszeiträume während des Dunkelzeitraums eine dritte zeitliche Dauer ($t_{int3}$) aufweist, die unterschiedlich zu der ersten zeitlichen Dauer ($t_{int1}$) ist, und ein zweiter (317) der zwei Erfassungszeiträume während des Dunkelzeitraums eine vierte zeitliche Dauer ($t_{int4}$) aufweist, die unterschiedlich zu der zweiten zeitlichen Dauer ($t_{int2}$) ist.

3. Der optische Abstandsmesser (400) gemäß einem der Ansprüche 1 bis 2, bei dem die Erfassungseinrichtung (420) so ausgebildet ist, dass die zwei überlappenden Erfassungszeiträume während des Strahlungspulszeitraumes einen variablen Zeitversatz gegenüber dem Strahlungspuls (110a) der gepulsten Strahlungsquelle aufweisen.

4. Der optische Abstandsmesser (400) gemäß einem der Ansprüche 1 bis 3, bei dem die Auswerteeinrichtung (470) so ausgebildet ist, dass es sich bei dem ermittelten Signal um ein Differenzsignal handelt, das durch eine Subtraktion zwischengespeicherter Signale, die die während des Strahlungspulszeitraums in den zwei überlappenden Erfassungszeiträumen erfassten, unterschiedlichen Strahlungsmengen beschreiben, und Signale, die die während des Dunkelzeitraums in den zwei überlappenden Erfassungszeiträumen erfassten unterschiedlichen Strahlungsmengen beschreiben, erzeugt wird.

5. Der optische Abstandsmesser (400) gemäß einem der Ansprüche 1 bis 4, bei dem die Erfassungseinrichtung (420) ein Pixelsensorelement (125a) ist, das in Abhängigkeit der erfassten Strahlungsmengen Signale an einem Pixelsensorelementausgang zur Verfügung stellt, wobei der Pixelsensorelementausgang über mindestens einen Pufferverstärker (134) mit der parallel ausgebildeten Abtasthalteschaltung (550) verbunden ist, wobei jeder Parallelzweig der Abtasthalteschaltung (550) einen Abtastschalter (252a,b) aufweist, der den Ausgang (134a) des mindestens einen Pufferverstärkers (134) mit einer Abtastkapazität (254a,b) und einem Transferschalter (560a,b) verbindet, wobei der Transferschalter seinerseits jeden Parallelzweig der Abtasthalteschaltung (550) mit der Auswerteeinrichtung (470) verbindbar macht, und wobei der Abtastschalter (252a,b) in jedem Parallelzweig derart ausgebildet ist, um in zwei überlappenden Erfassungszeiträumen (314,316) geschlossen zu sein, so dass nach Beendigung der überlappenden Erfassungszeiträume ein unterschiedliches Signal des Pixelsensorelementausgangs auf jeder Abtastkapazität (254a,b) des Parallelzweiges zwischengespeichert wird.

**6.** Der optische Abstandsmesser (400) gemäß einem der Ansprüche 1 bis 4, bei dem die Erfassungseinrichtung (420) ein Pixelsensorelement (125a) ist, das in Abhängigkeit der erfassten Strahlungsmengen Signale an einem Pixelsensorelementausgang zur Verfügung stellt, wobei der Pixelsensorelementausgang über mindestens einen Pufferverstärker (134) mit einem Auswahlschalter (252) der Abtasthalteschaltung (550) verbunden ist, wobei die Abtasthalteschaltung mindestens zwei über jeweils einen Abtastschalter (80a, 80b) an den Ein- und Ausgang des Abtasthalteschaltung (550) koppelbare Abtastkapazitäten (254a,b) aufweist und wobei die Abtastschalter (80a,b) derart ausgebildet sind, um in zwei zeitlich unterschiedlichen Erfassungszeiträumen geschlossen zu sein, so dass nach Beendigung der Erfassungszeiträume ein unterschiedliches Signal des Pixelsensorelementausgangs auf jeder der mindestens zwei Abtastkapazitäten (254a,b) zwischengespeichert wird.

**7.** Der optische Abstandsmesser (400) gemäß einem der Ansprüche 1 bis 6, bei dem die Auswerteeinrichtung (470) eine Schaltung zur korrelierten Doppelabtastung, mit folgenden Merkmalen aufweist:

einem Verstärker (280), wobei der Ausgang (280a) des Verstärkers über einen Rücksetzschalter (282) mit einem Eingang (280b) des Verstärkers (280) verbindbar ist;
einer Abtastkapazität (274), die über einen Abtastschalter (572) mit einem Eingang der Auswerteeinrichtung (470) und mit einem Eingang (280b) des Verstärkers (280) verbindbar ist;
einer ersten (284a) und einer zweiten (284b), in paralleler Weise verschalteten Rückkopplungskapazität, die jeweils mit dem Eingang des Verstärkers (280b) und über einem Referenzspannungsschalter (290) mit einem Referenzpotential (275), und über einen ersten (288a) und einem zweiten (288b) Verstärkerschalter mit dem Ausgang (280a) des Verstärkers (280) verbindbar sind;
einer Steuereinrichtung (580), die ausgebildet ist um den Rücksetzschalter (282), den Abtastschalter (572), den Referenzspannungsschalter (290) und den ersten und zweiten Verstärkerschalter (288a,288b) so zu schalten, um die am Eingang der Auswerteeinrichtung anliegenden Signale in einer seriellen Zeitfolge voneinander zu subtrahieren und die entsprechenden Differenzsignale am Ausgang (280a) zur Verfügung zu stellen.

**8.** Der optische Abstandsmesser (400), gemäß einem der vorhergehenden Ansprüche, der eine Vielzahl von Erfassungseinrichtungen (420) zur Erfassung unterschiedlicher Strahlungsmengen aufweist und eine Steuereinrichtung (580) zur Ansteuerung einer Ansammlung von Pixel, wobei jeder Ansammlung von Pixel oder jedem Pixel eine Auswerteeinrichtung (470) zugeordnet ist, die über eine Leseleitung (568) mit den Erfassungseinrichtungen (420) verbindbar ist, so das die Auswerteeinrichtungen (470), basierend auf den, mit den Erfassungseinrichtungen erfassten Strahlungsmengen Signale ermitteln, die von einem Abstand des optischen Abstandsmessers (400) von einem Objekt (105) abhängen und wobei die Signale einer Ansammlung von Pixel oder pixelweise zur Weiterverarbeitung zur Verfügung gestellt werden.

**9.** Eine Vorrichtung mit folgenden Merkmalen:

einem kapazitiven Pixelsensorelement (125a), das in Abhängigkeit einer Messgröße einem Auf- oder Entladevorgang unterzogen wird, der an einem Pixelsensorelementausgang (134a) erfassbar ist;
mindestens einem Pufferverstärker (134);
einer ersten (254a) und einer zweiten (254b) Abtastkapazität;
einem ersten (252a) und einem zweiten (252b) Schalter, über die die erste bzw. die zweite Abtastkapazität über den mindestens einen Pufferverstärker mit dem Pixelsensorelementausgang (134a) verbindbar sind;
einer Steuereinrichtung (580), die ausgebildet ist, um den ersten und zweiten Schalter so zu steuern, dass der erste Schalter in einem ersten Zeitfenster (314) geschlossen ist, und der zweite Schalter in einem zweiten Zeitfenster (316) geschlossen ist, wobei sich das erste Zeitfenster und das zweite Zeitfenster zeitlich überlappen, derart, dass am Ende des ersten und zweiten Zeitfensters unterschiedliche den Auf- oder Entladevorgang des kapazitiven Pixelsensorelements (125a) beschreibende Spannungssignale an der ersten und an der zweiten Abtastkapazität vorliegen.

**10.** Die Vorrichtung gemäß Anspruch 9, bei dem das erste Zeitfenster während eines Wechselwirkungszeitraum der Messgröße, in deren Abhängigkeit das kapazitive Pixelsensorelement den Auf- oder Entladevorgang vollzieht, geschlossen wird.

**11.** Die Vorrichtung gemäß einem der Ansprüche 9 bis 10, die ferner eine Auswerteeinrichtung (470) aufweist, die basierend auf zeitlich hintereinander an der ersten und der zweiten Abtastkapazität liegenden Spannungssignalen ein Differenzspannungssignal ermittelt.

**12.** Die Vorrichtung gemäß Anspruch 11, bei dem die Auswerteeinrichtung (470) folgende Merkmale aufweist:

einen Verstärker (280), wobei der Ausgang (280a) des Verstärkers über einen Rücksetzschalter (282) mit einem Eingang (280b) verbindbar ist;
eine Abtastkapazität (274b), die über einen Schalter (572b) mit der ersten (254a) und zweiten (254b) Abtastkapazität elektrisch koppelbar ist und mit dem Eingang (280b) des Verstärkers (280) verbindbar ist;
eine erste (284a) und eine zweite (284b), in paralleler Weise verschaltete, Rückkopplungskapazität, die mit dem Eingang des Verstärkers (280b) koppelbar sind und über einen Referenzspannungsschalter (290) mit einem Referenzpotential (275) und über einen ersten (288a) und einen zweiten (288b) Verstärkerschalter mit dem Ausgang (280a) des Verstärkers (280) verbindbar sind; und wobei die Steuereinrichtung (580) so ausgebildet ist die Auswerteeinrichtung so zu steuern, dass am Ausgang der Auswerteeinrichtung in aufeinander folgenden zeitlichen Phasen Differenzspannungssignale, der am Eingang anliegenden Spannungssignale verfügbar sind.

**13.** Ein Doppelabtastsystem, das eine Vielzahl von Vorrichtungen gemäß einem der Ansprüche 9 bis 12 aufweist, wobei die Vorrichtungen in Ansammlungen angeordnet sind, wobei jeder Ansammlung oder jeder einzelnen Vorrichtung eine Auswerteeinrichtung (470) zugeordnet ist, die mit Hilfe einer Steuereinrichtung zur Ansteuerung der Ansammlungen oder der einzelnen Vorrichtungen über einen Auswahlschalter (255) und eine Leseleitung (568) mit den, den Auf- oder Entladevorgang des kapazitiven Pixelsensorelementes beschreibenden Spännungssignalen der Abtastkapazitäten (254a,b) koppelbar sind.

**14.** Verfahren zur optischen Abstandsmessung, mit folgenden Schritten:

Aussenden (810) eines Strahlungspulses mit einer gepulsten Strahlungsquelle, die ausgebildet ist, um in einem zeitlich zusammenhängenden Strahlungspulszeitraum einen Strahlungspuls mit einer Pulsdauer $t_p$, die kürzer ist als der Strahlungspulszeitraum, zu senden und in einem zeitlich zusammenhängenden Dunkelzeitraum keinen Strahlungspuls zu senden;
Erfassen (820) unterschiedlicher Strahlungsmengen mit einer Erfassungseinrichtung, die ausgebildet ist, um in zwei überlappenden Erfassungszeiträumen während des Strahlungspulszeitraumes Reflexionen des Strahlungspulses an einer Objektoberfläche und Hintergrundstrahlung aufzunehmen und/oder in zwei überlappenden Erfassungszeiträumen während des Dunkelzeitraums eine Hintergrundstrahlung aufzunehmen; und
Ermitteln (830) eines Signals, das von dem zu messenden Abstand abhängt, basierend auf den erfassten Strahlungsmengen.

**15.** Das Verfahren gemäß Anspruch 14, bei dem das Erfassen (820) unterschiedlicher Strahlungsmengen mit einer Erfassungseinrichtung so durchgeführt wird, dass zwei von der Strahlungsmenge abhängige, in den zwei überlappenden Erfassungszeiträumen erfasste Ladungsmengen oder Spannungswerte in der Erfassungseinrichtung zwischengespeichert werden und basierend auf den zwischengespeicherten Ladungsmengen oder Spannungswerten Signale ermittelt werden, die von einem zu messenden Abstand zu einem Objekt abhängen.

**16.** Das Verfahren gemäß einem der Ansprüche 14 bis 15, bei dem das Erfassen (820) so durchgeführt wird, dass die Hintergrundstrahlung in zwei Erfassungszeiträumen in einem Dunkelzeitraum vor dem Strahlungspulszeitraum für alle Erfassungseinrichtungen eines Sensors gleichzeitig erfasst werden.

**17.** Das Verfahren gemäß Anspruch 16, bei dem die Hintergrundstrahlung basierend auf der erfassten Hintergrundstrahlung in den zwei Erfassungszeiträumen während des Dunkelzeitraums extrapoliert wird und basierend auf den Extrapolationswerten ein Abstand von dem zu messenden Objekt ermittelt wird.

**18.** Mehrfachabtastverfahren mit folgenden Schritten:

elektrisches Koppeln einer ersten Abtastkapazität über einen Pufferverstärker mit einem Ausgang eines kapazitiven Pixelsensorelementes, während eines ersten Zeitfensters mit einer ersten Zeitdauer und
elektrisches Koppeln einer zweiten Abtastkapazität über einen Pufferverstärker mit dem Ausgang des kapazitiven Pixelsensorelementes, während eines zweiten Zeitfensters einer zweiten Zeitdauer, wobei sich das erste und das zweite Zeitfenster zeitlich überlappen, so dass am Ende des ersten und zweiten Zeitfensters, unterschiedliche, einen Auf- oder Entladevorgang des kapazitiven Pixelsensorelements beschreibende Spannungssignale an der ersten und zweiten Abtastkapazität vorliegen.

**19.** Das Mehrfachabtastverfahren gemäß Anspruch 18, das ferner einen Schritt der Differenzbildung des Spannungssignals, das an der ersten Abtastkapazität am Ende eines ersten Zeitfensters mit einer ersten Zeitdauer vorliegt, und des Spannungssignals, das an der ersten Abtastkapazität am Ende eines dritten Zeitfensters mit einer ersten Zeitdauer vorliegt, und der Differenzbildung eines Spannungssignals, das an der zweiten Abtastkapazität am Ende eines zweiten Zeitfensters mit einer zweiten Zeitdauer vorliegt, und des Spannungssignals, das an der zweiten Abtastkapazität am Ende eines vierten Zeitfensters mit einer zweiten Zeitdauer vorliegt, umfasst, wobei sich das erste und das zweite, sowie das dritte und das vierte Zeitfenster zeitlich überlappen.

**20.** Ein Computerprogramm mit einem Programmcode zur Durchführung eines Verfahrens gemäß einem der Ansprüche 14 bis 17, bei dem der Programmcode auf einem Computer, einem Mikrokontroller oder einem digitalen Signalprozessor ausgeführt wird.

**Claims**

**1.** An optical distance measuring device (400) comprising:

a pulsed radiation source (110) implemented to transmit, in a temporally contiguous radiation pulse period, a radiation pulse (110a) having a pulse duration ($t_p$) that is shorter than the radiation pulse period, and to transmit no radiation pulse in a temporally contiguous dark period;
a detection means (420) for detecting different amounts of radiation in two overlapping detection periods during the radiation pulse period to capture reflections of the radiation pulse at the object surface and a background radiation and/or in two overlapping detection periods during the dark period to capture a background radiation; and
an evaluation means (470) determining a signal depending on a distance of the optical distance measuring device (400) to an object (105), based on the detected amounts of radiation.

**2.** The optical distance measuring device (400) according to claim 1, wherein the detection means (420) is implemented such that the two overlapping detection periods during the radiation pulse period start phase-locked with the radiation pulse (110a), wherein a first (314) of the two detection periods during the radiation pulse period has a first duration ($t_{int1}$) and a second (316) of the two detection periods during the radiation pulse period has a second duration ($t_{int2}$), which is longer than a pulse duration ($t_p$) of the radiation pulse (110a), and such that the two overlapping detection periods during the dark period start phase-locked after the termination of the radiation pulse period, wherein a first (315) of the two detection periods during the dark period has a third duration ($t_{int3}$), which corresponds to the first duration ($t_{int1}$), and a second (317) of the two detection periods during the dark period has a fourth duration ($t_{int4}$), which corresponds to the second duration ($t_{int2}$), or wherein the two overlapping detection periods during the dark period start prior to or after the termination of the radiation pulse period, wherein a first (315) of the two detection periods during the dark period has a third duration ($t_{int3}$), which differs from the first duration ($t_{int1}$), and a second (317) of the two detection periods during the dark period has a fourth duration ($t_{int4}$) that differs from the second duration ($t_{int2}$).

**3.** The optical distance measuring device (400) according to one of claims 1 to 2, wherein the detection means (420) is implemented such that the two overlapping detection periods during the radiation pulse period have a variable time offset with respect to the radiation pulse (110a) of the pulsed radiation source.

**4.** The optical distance measuring device (400) according to one of claims 1 to 3, wherein the evaluation means (470) is implemented such that the detected signal is a differential signal generated by subtracting temporarily stored signals describing the different amounts of radiation detected during the radiation pulse period in the two overlapping detection periods, and signals describing the different amounts of radiation detected during the dark period in the two overlapping detection periods.

**5.** The optical distance measuring device (400) according to one of claims 1 to 4, wherein the detection means (420) is a pixel sensor element (125a) providing signals at a pixel sensor element output in dependence on the detected amounts of radiation, wherein the pixel sensor element output is connected to the sample and hold circuit (550) implemented in parallel via at least one buffer amplifier (134), wherein every parallel branch of the sample and hold circuit (550) comprises a sample switch (252a,b) connecting the output (134a) of the at least one buffer amplifier (134) to a sample capacitance (254a,b) and a transfer switch (560a,b), wherein, by the transfer switch, every parallel branch of the sample and hold circuit (550) is connectable to the evaluation means (470), and wherein the sample switch (252a,b) in every parallel branch is implemented such as to be closed in two overlapping detection periods (314, 316), so that after terminating the overlapping detection periods a different signal of the pixel sensor element output is temporarily stored on every sample capacitance (254a,b) of the parallel branch.

6. The optical distance measuring device (400) according to one of claims 1 to 4, wherein the detection means (420) is a pixel sensor element (125a) providing signals at a pixel sensor element output in dependence on the detected amounts of radiation, wherein the pixel sensor element output is connected to a selection switch (252) of the sample and hold circuit (550) via at least one buffer amplifier (134), wherein the sample and hold circuit comprises at least two sample capacitances (254a,b) that can be coupled to the input and output of the sample and hold circuit (550) via one sample switch (80a,b) each, and wherein the sample switch (80a,b) is implemented such as to be closed in two temporally different detection periods, so that after terminating the detection periods a different signal of the pixel sensor element output is temporarily stored on each of the at least two sample capacitances (254a,b).

7. The optical distance measuring device (400) according to one of claims 1 to 6, wherein the evaluation means (470) comprises a circuit for correlated double sampling, comprising:

an amplifier (280), wherein the output (280a) of the amplifier can be connected to an input (280b) of the amplifier (280) via a reset switch (282);
a sample capacitance (274) that can be connected to an input of the evaluation means (470) and an input (280b) of the amplifier (280) via a sample switch (572);
first (284a) and second (284b) feedback capacitances connected in parallel that can each be connected to an input of the amplifier (280b) and to a reference potential (275) via a reference voltage switch (290), and to the output (280a) of the amplifier (280) via first (288a) and second (288b) amplifier switches;
a controller (580) implemented to switch the reset switch (282), the sample switch (572), the reference voltage switch (290) and the first and second amplifier switches (288a, 288b) such as to subtract the signals applied to the input of the evaluation means from each other in a serial sequence and to provide the respective differential signals at the output (280a).

8. The optical distance measuring device (400) according to one of the previous claims having a plurality of detection means (420) for detecting different amounts of radiation and a controller (580) for controlling a pixel array, wherein an evaluation means (470) that can be connected to the detection means (420) via a read line (568) is associated with every pixel array or every pixel, such that the evaluation means (470) determine, based on the amount of radiation detected with the detection means, signals depending on the distance of the optical distance measuring device (400) to an object (105), and wherein the signals are provided to a pixel array or pixel by pixel for further processing.

9. An apparatus comprising:

a capacitive pixel sensor element (125a) subjected to a charge or discharge process in dependence on a measured quantity that can be detected at a pixel sensor element output (134a);
at least one buffer amplifier (134);
first (254a) and second (254b) sample capacitances;
first (252a) and second (252b) switches, via which the first or the second sample capacitance can be connected to the pixel sensor element output (134a) via the at least one buffer amplifier;
a controller (580) that is implemented to control the first and second switches such that the first switch is closed in a first time window (314) and the second switch is closed in a second time window (316), wherein the first time window and the second time window temporally overlap such that, at the end of the first and second time windows, different voltage signals describing the charge or discharge process of the capacitive pixel sensor element (125a) are applied to the first and second sample capacitances.

10. The apparatus according to claim 9, wherein the first time window is closed during an interaction period of the measured quantity in dependence on which the capacitive pixel sensor element performs the charge or discharge process.

11. The apparatus according to one of claims 9 to 10, further comprising an evaluation means (470) determining a differential voltage signal based on voltage signals applied successively to the first and second sample capacitances.

12. The apparatus according to claim 11, wherein the evaluation means (470) further comprises:

**EP 2 263 103 B1**

an amplifier (280), wherein the output (280a) of the amplifier can be connected to an input (280b) via a reset switch (282);

a sample capacitance (274b) that can be electrically coupled to the first (254a) and second (254b) sample capacitances via a switch (572b) and that can be connected to the input (280b) of the amplifier (280);

first (284a) and second (284b) feedback capacitances connected in parallel that can be coupled to the input of the amplifier (280b) and can be connected to a reference potential (275) via a reference voltage switch (290) and to the output (280a) of the amplifier (280) via first (288a) and second (288b) amplifier switches; and wherein the controller (580) is implemented to control the evaluation means such that differential voltage signals of the voltage signals applied to the input are available at the output of the evaluation means in successive time phases.

13. A double sampling system comprising a plurality of apparatuses according to one of claims 9 to 12, wherein the apparatuses are arranged in arrays, wherein an evaluation means (470) that can be coupled, with the help of a controller for controlling the arrays or the individual apparatuses via a select switch (255) and a read line (568), to the voltage signals of the sample capacitances (254a,b) describing the charge or discharge process of the capacitive pixel sensor element is associated with every array or every single apparatus.

14. A method for optical distance measurement, comprising:

emitting (810) a radiation pulse with a pulsed radiation source implemented to transmit, in a temporally contiguous radiation pulse period, a radiation pulse having a pulse duration $t_p$ that is shorter than the radiation pulse period, and to transmit no radiation pulse in a temporally contiguous dark period;

detecting (820) different amounts of radiation with a detection means that is implemented to capture reflections of the radiation pulse at an object surface and background radiation in two overlapping detection periods during the radiation pulse period and/or to capture background radiation in two overlapping detection periods during the dark period; and

determining (830) a signal depending on the distance to be measured based on the detected amounts of radiation.

15. The method according to claim 14, wherein detecting (820) different amounts of radiation with a detection means is performed such that two amounts of charge or voltage values depending on the amount of radiation detected in the two overlapping detection periods are temporarily stored in the detection means and signals depending on a distance to an object to be measured are determined based on the temporarily stored amounts of charge or voltage values.

16. The method according to one of claims 14 to 15, wherein detecting (820) is performed such that the background radiation in two detection periods in a dark period is detected simultaneously for all detection means of a sensor prior to the radiation pulse period.

17. The method according to claim 16, wherein the background radiation is extrapolated based on the detected background radiation in the two detection periods during the dark period, and a distance to the object to be measured is determined based on the extrapolation values.

18. A multiple sampling method, comprising:

electrically coupling a first sample capacitance to an output of a capacitive pixel sensor element via a buffer amplifier during a first time window having a first duration, and

electrically coupling a second sample capacitance to the output of the capacitive pixel sensor element via a buffer amplifier during a second time window having a second duration, wherein the first and the second time window temporally overlap, such that at the end of the first and second time windows different voltage signals describing a charge or discharge process of the capacitive pixel sensor element are applied to the first and second sample capacitances.

19. The multiple sampling method according to claim 18, further comprising a step of calculating the difference of the voltage signal applied to the first sample capacitance at the end of a first time window having a first duration and the voltage signal applied to the first sample capacitance at the end of a third time window having a first duration, and calculating a difference of a voltage signal applied to the second sample capacitance at the end of a second time window having a second duration and the voltage signal applied to the second sample capacitance at the end of a fourth time window having a second duration, wherein the first and second as well as the third and fourth time windows temporally overlap.

**20.** A computer program having a program code for performing a method according to one of claims 14 to 17, wherein the program code is performed on a computer, a microcontroller or a digital signal processor.

**Revendications**

**1.** Appareil de mesure de distance optique (400) aux caractéristiques suivantes:

une source de rayonnement à impulsions (110) conçue pour transmettre, pendant une période d'impulsions de rayonnement (110a) cohérente dans le temps, une impulsion de rayonnement avec une durée d'impulsion ($t_p$) qui est plus courte que la durée d'impulsion de rayonnement et pour ne pas transmettre d'impulsions de rayonnement pendant une période d'obscurité;
un moyen de détection (420) destiné à détecter des quantités de rayonnement différentes dans deux périodes de détection qui se chevauchent pendant la période d'impulsions de rayonnement, pour recevoir des réflexions de l'impulsion de rayonnement à la surface d'objet et un rayonnement de fond, et/ou dans deux périodes de détection qui se chevauchent pendant la période d'obscurité, pour recevoir un rayonnement de fond; et
un moyen d'évaluation (470) qui détermine, sur base des quantités de rayonnement détectées, un signal qui est fonction d'une distance entre l'appareil de mesure de distance optique (400) et un objet (105).

**2.** Appareil de mesure de distance optique (400) selon la revendication 1, dans lequel le moyen de détection (420) est conçu de sorte que les deux périodes de détection qui se chevauchent commencent pendant la période d'impulsions de rayonnement de manière couplée avec verrouillage à l'impulsion de rayonnement (110a) de la source de rayonnement à impulsions, une première (314) de deux périodes de détection présentant, pendant la période d'impulsions de rayonnement, une première durée de temps ($t_{int1}$) et une deuxième (316) des deux périodes de détection présentant, pendant la période d'impulsions de rayonnement, une deuxième durée de temps ($t_{int2}$) qui est plus longue qu'une durée d'impulsion ($t_p$) de l'impulsion de rayonnement (110a) et que les deux périodes de détection qui se chevauchent commencent, pendant la période d'obscurité, avec verrouillage de phase après écoulement de la période d'impulsions de rayonnement, une première (315) des deux périodes de détection présentant, pendant la période d'obscurité, une troisième durée de temps ($t_{int3}$) correspondant à la première durée de temps ($t_{int1}$) et une deuxième (317) des deux périodes de détection présentant, pendant la période d'obscurité, une quatrième durée de temps ($t_{int4}$) correspondant à la deuxième durée de temps ($t_{int2}$) ou les deux périodes de détection qui se chevauchent commencent, pendant la période d'obscurité, avant ou après la période d'impulsions de rayonnement, une première (315) des deux périodes de détection présentant, pendant la période d'obscurité, une troisième durée de temps ($t_{int3}$) qui est différente de la première durée de temps ($t_{int1}$) et une deuxième (317) des deux périodes de détection présentant, pendant la période d'obscurité, une quatrième durée de temps ($t_{int4}$) qui est différente de la deuxième durée de temps ($t_{int2}$).

**3.** Appareil de mesure de distance optique (400) selon l'une des revendications 1 à 2, dans lequel le moyen de détection (420) est conçu de sorte que les deux périodes de détection qui se chevauchent présentent, pendant la période d'impulsions de rayonnement, un décalage dans le temps variable par rapport à l'impulsion de rayonnement (110a) de la source de rayonnement à impulsions.

**4.** Appareil de mesure de distance optique (400) selon l'une des revendications 1 à 3, dans lequel le moyen d'évaluation (470) est conçu de sorte qu'il s'agisse pour le signal détecté d'un signal de différence qui est généré par une soustraction de signaux mémorisés temporairement décrivant les quantités de rayonnement différentes détectées pendant la période d'impulsions de rayonnement dans les deux périodes de détection qui se chevauchent et de signaux qui décrivent les quantités de rayonnement différentes détectées pendant la période d'obscurité dans les deux périodes de détection qui se chevauchent.

**5.** Appareil de mesure de distance optique (400) selon l'une des revendications 1 à 4, dans lequel ledit moyen de détection (420) est un élément capteur de pixels (125a) qui, en fonction des quantités de rayonnement détectées, met à disposition des signaux à une sortie d'élément capteur de pixels, la sortie d'élément capteur de pixels étant reliée, par l'intermédiaire d'au moins un amplificateur tampon (134), au circuit de maintien d'échantillonnage (550) réalisé en parallèle, chaque branche parallèle du circuit de maintien d'échantillonnage (550) présentant un commutateur d'échantillonnage (252a, b) qui connecte la sortie (134a) de l'au moins un amplificateur tampon (134) à une capacité d'échantillonnage (254a, b) et un commutateur de transfert (560a, b), le commutateur de transfert faisant, à son tour, que chaque branche parallèle du circuit de maintien d'échantillonnage (550) peut être connectée au moyen d'évaluation (470), et le commutateur d'échantillonnage (252a, b) dans chaque branche parallèle étant conçu pour être fermé pendant deux périodes de détection qui se chevauchent (314, 316), de sorte qu'après écoulement des périodes de détection qui se chevauchent soit mémorisé temporairement un signal différent de la sortie d'élément capteur de pixels dans chaque capacité d'échantillonnage (254a, b) de la branche parallèle.

6. Appareil de mesure de distance optique (400) selon l'une des revendications 1 à 4, dans lequel le moyen de détection (420) est un élément capteur de pixels (125a) qui, en fonction des quantités de rayonnement détectées, met des signaux à disposition à une sortie d'élément capteur de pixels, la sortie d'élément capteur de pixels étant relié, par l'intermédiaire d'au moins un amplificateur tampon (134), à un sélectionneur (252) du circuit de maintien d'échantillonnage (550), le circuit de maintien d'échantillonnage présentant au moins deux capacités d'échantillonnage (254a, b) pouvant être couplées, chacune, par l'intermédiaire d'un commutateur d'échantillonnage (80a, 80b) à l'entrée et à la sortie du circuit de maintien d'échantillonnage (550) et le commutateur d'échantillonnage (80a, b) étant réalisé pour être fermé pendant deux périodes de détection différentes dans le temps, de sorte qu'à la fin des périodes de détection soit mémorisé temporairement un signal différent de la sortie d'élément capteur de pixels dans chacune des au moins deux capacités d'échantillonnage (254a, b).

7. Appareil de mesure de distance optique (400) selon l'une des revendications 1 à 6, dans lequel le moyen d'évaluation (470) présente un circuit d'échantillonnage double corrélé, aux caractéristiques suivantes:

un amplificateur (280), la sortie (280a) de l'amplificateur pouvant être reliée, par l'intermédiaire d'un commutateur de remise à zéro (282), à une entrée (280b) de l'amplificateur (280);
une capacité d'échantillonnage (274) qui peut être reliée, par l'intermédiaire d'un commutateur d'échantillonnage (572), à une entrée du moyen d'évaluation (470) et à une entrée (280b) de l'amplificateur (280);
une première capacité de rétroaction (284a) et une deuxième capacité de rétroaction (284b) câblées en parallèle et qui peuvent être reliées, chacune, à l'entrée de l'amplificateur (280b) et, par l'intermédiaire d'un commutateur de tension de référence (290), à un potentiel de référence (275) et, par l'intermédiaire d'un premier commutateur d'amplificateur (288a) et d'un deuxième commutateur d'amplificateur (288b), à la sortie (280a) de l'amplificateur (280);
un moyen de commande (580) qui est réalisé pour commuter le commutateur de remise à zéro (282) le commutateur d'échantillonnage (572), le commutateur de tension de référence (290) et le premier commutateur d'amplificateur et le deuxième commutateur d'amplificateur (288a, 288b) pour soustraire l'un de l'autre les signaux présents à l'entrée du moyen d'évaluation selon une séquence sérielle dans le temps et pour mettre à disposition les signaux de différence correspondants à la sortie (280a).

8. Appareil de mesure de distance optique (400) selon l'une des revendications précédentes présentant une pluralité de moyens de détection (420) destinés à détecter des quantités de rayonnement différentes, et un moyen de commande (580) destiné à commander un ensemble de pixels, à chaque ensemble de pixels ou à chaque pixel étant associé un moyen d'évaluation (470) qui peut être relié, par l'intermédiaire d'une ligne de lecture (568), aux moyens de détection (420), de sorte que les moyens d'évaluation (470) déterminent, sur base des quantités de rayonnement détectées par les moyens de détection, des signaux qui sont fonction d'une distance entre l'appareil de mesure de distance optique (400) et un objet (105) et les signaux d'un ensemble de pixels ou par pixel étant mis à disposition pour traitement ultérieur.

9. Dispositif aux caractéristiques suivantes:

un élément capteur de pixels capacitif (125a) qui est soumis, en fonction d'une grandeur de mesure, à une opération de chargement ou de déchargement qui est détectable à une sortie d'élément capteur de pixels (134a);
au moins un amplificateur tampon (134);
une première capacité d'échantillonnage (254a) et une deuxième capacité d'échantillonnage (254b);
un premier commutateur (252a) et un deuxième commutateur (252b) par lesquels la première capacité d'échantillonnage ou la deuxième capacité d'échantillonnage peut être reliée, par l'intermédiaire de l'au moins un amplificateur tampon, à la sortie d'élément capteur de pixels (134a);
un moyen de commande (580) qui est conçu pour commander les premier et deuxième commutateurs de sorte que le premier commutateur soit fermé dans une première fenêtre de temps (314) et que le deuxième commutateur soit fermé dans une deuxième fenêtre de temps (316), la première fenêtre de temps et la deuxième fenêtre de temps se chevauchant dans le temps de sorte qu'à la fin de la première et de la deuxième fenêtre de temps soient présents à la première et à la deuxième capacité d'échantillonnage différents signaux de tension décrivant l'opération de chargement ou de déchargement de l'élément capteur de pixels capacitif (125a).

**10.** Dispositif selon la revendication 9, dans lequel la première fenêtre de temps est fermée pendant une période d'interaction de la grandeur de mesure en fonction de laquelle l'élément capteur de pixels capacitif effectue l'opération de chargement ou de déchargement.

**11.** Dispositif selon l'une des revendications 9 à 10, présentant par ailleurs un moyen d'évaluation (470) qui détermine, sur base de signaux de tension présents successivement dans le temps à la première et la deuxième capacité d'échantillonnage, un signal de tension de différence.

**12.** Dispositif selon la revendication 11, dans lequel le moyen d'évaluation (470) présente les caractéristiques suivantes:

un amplificateur (280), la sortie (280a) de l'amplificateur pouvant être reliée, par l'intermédiaire d'un commutateur de remise à zéro (282), à une entrée (280b);
une capacité d'échantillonnage (274b) qui peut être couplée électriquement, par l'intermédiaire d'un commutateur (572b), à la première capacité d'échantillonnage (254a) et à la deuxième capacité d'échantillonnage (254b) et qui peut être reliée à l'entrée (280b) de l'amplificateur (280);
une première capacité de rétroaction (284a) et une deuxième capacité de rétroaction (284b) câblées en parallèle, qui peuvent être reliées à l'entrée de l'amplificateur (280b) et qui peuvent être reliées, par l'intermédiaire d'un commutateur de tension de référence (290), à un potentiel de référence (275) et, par l'intermédiaire d'un premier commutateur d'amplificateur (288a) et d'un deuxième commutateur d'amplificateur (288b), à la sortie (280a) de l'amplificateur (280); et le moyen de commande (580) étant conçu pour commander le moyen d'évaluation de sorte que soient disponibles à la sortie du moyen d'évaluation, dans des phases temporelles successives, des signaux de tension de différence des signaux de tension présents à l'entrée.

**13.** Système de balayage double qui présente une pluralité de dispositifs selon l'une des revendications 9 à 12, dans lequel les dispositifs sont disposés par ensembles, à chaque ensemble ou à chaque dispositif individuel étant associé un moyen d'évaluation (470), lesquels peuvent, à l'aide d'un moyen de commande pour la commande des ensembles ou des dispositifs individuels par l'intermédiaire d'un sélecteur (255) et d'une ligne de lecture (568), être couplés aux signaux de tension des capacités d'échantillonnage (254a, b) décrivant l'opération de chargement ou de déchargement de l'élément capteur de pixels capacitif.

**14.** Procédé de mesure de distance optique, aux étapes suivantes consistant à:

émettre (810) une impulsion de rayonnement par une source de rayonnement à impulsions qui est conçue pour émettre, dans une période d'impulsions de rayonnement cohérente dans le temps, une impulsion de rayonnement d'une durée d'impulsion tp qui est plus courte que la période d'impulsion de rayonnement et pour ne pas émettre, dans une période d'obscurité, d'impulsions de rayonnement;
détecter (820) des quantités de rayonnement différentes par un dispositif de détection qui est conçu pour recevoir, dans deux périodes de détection qui se chevauchent, au cours de la période d'impulsion de rayonnement des réflexions de l'impulsion de rayonnement à une surface d'objet et un rayonnement de fond et/ou pour recevoir, dans deux périodes de détection qui se chevauchent, au cours de la période d'obscurité un rayonnement de fond; et
déterminer (830) un signal qui dépend de la distance à mesurer, sur base des quantités de rayonnement détectées.

**15.** Procédé selon la revendication 14, dans lequel la détection (820) de quantités de rayonnement différentes par un dispositif de détection s'effectue de sorte que deux quantités de chargement ou valeurs de tension dépendant de la quantité de rayonnement et détectées pendant les deux périodes de détection qui se chevauchent soient mémorisées temporairement dans le moyen de détection et qu'en fonction des quantités de chargement ou valeurs de tension mémorisées temporairement soient déterminés des signaux qui dépendent d'une distance à mesurer par rapport à un objet.

**16.** Procédé selon l'une des revendications 14 à 15, dans lequel la détection (820) est réalisée de sorte que le rayonnement de fond dans deux périodes de détection pendant une période d'obscurité avant la période d'impulsion de rayonnement soit détecté simultanément pour tous les moyens de détection d'un capteur.

**17.** Procédé selon la revendication 16, dans lequel le rayonnement de fond est extrapolé sur base du rayonnement de fond détecté dans les deux périodes de détection pendant la période d'obscurité et une distance par rapport à l'objet à mesurer est déterminée sur base des valeurs d'extrapolation.

18. Procédé d'échantillonnage multiple aux étapes suivantes consistant à:

coupler électriquement une première capacité d'échantillonnage, par l'intermédiaire d'un amplificateur tampon, à une sortie d'un élément capteur de pixels capacitif pendant une première fenêtre de temps avec une première durée, et

coupler électriquement une deuxième capacité d'échantillonnage, par l'intermédiaire d'un amplificateur tampon, à la sortie de l'élément capteur de pixels capacitif pendant une deuxième fenêtre de temps avec une deuxième durée, la première et la deuxième fenêtre de temps se chevauchant dans le temps, de sorte qu'à la fin de la première et de la deuxième fenêtre de temps soient présents, à la première et la deuxième capacité d'échantillonnage, des signaux de tension différents décrivant une opération de chargement ou déchargement de l'élément capteur de pixels capacitif.

19. Procédé d'échantillonnage multiple selon la revendication 18, comprenant par ailleurs une étape consistant à former une différence entre le signal de tension présent à la première capacité d'échantillonnage à la fin d'une première fenêtre de temps avec une première durée et le signal de tension présent à la première capacité d'échantillonnage à la fin d'une troisième fenêtre de temps avec une première durée de temps, et à former la différence entre un signal de tension présent à la deuxième capacité d'échantillonnage à la fin d'une deuxième fenêtre de temps avec une deuxième durée et le signal de tension présent à la deuxième capacité d'échantillonnage à la fin d'une quatrième fenêtre de temps avec une deuxième durée, la première et la deuxième, ainsi que la troisième et la quatrième fenêtre de temps se chevauchant dans le temps.

20. Programme d'ordinateur avec un code de programme pour réaliser un procédé selon l'une des revendications 14 à 17, dans lequel le code de programme est exécuté sur un ordinateur, un microcontrôleur ou un processeur de signal numérique.

**FIG 1**
**(STAND DER TECHNIK)**

FIG 2
(STAND DER TECHNIK)

FIG 3A (STAND DER TECHNIK)

EP 2 263 103 B1

Reset des
Pixels

Shutter

tint

Pixel-Reset

Belichtung

# FIG 3B
## (STAND DER TECHNIK)

FIG 4

FIG 5

EP 2 263 103 B1

FIG 6

43

**FIG 7**

a.) 304 Laserplus — E — H

b.) Pixel-Reset A — E F — H

c.) $U_{photodiode}$ A

d.) A B Shutter 1 F G (kurze Shutterzeit)

e.) A C Shutter 2 (lange Shutterzeit) I J

f.) phi2_0 (select_0) 560a, 572a

g.) phi2_1 (select_1) Schalter 560b

h.) D D' E $\phi_3$

i.) $\phi_2$

j.) $\phi_5$

k.) U_CDS_OUT $U_{1,diff}$

$t/\mu s$

1.240  2.165  3.090  4.015  4.940  5.865  6.790  7.715  8.640

F  G

FIG 8

FIG 9

FIG 10

EP 2 263 103 B1

47

FIG 11A

EP 2 263 103 B1

I

229                      229                 229

70a        70b         70a       70b

t(w.E.)

72                    72

II

229     229     229     229     229

t(w.E.)

70b     70a     70b     70a

FIG 11B

FIG 12

Aussenden eines Strahlungspulses mit einer gepulsten Strahlungsquelle, die ausgebildet ist, um in einem zeitlich zusammenhängenden Strahlungspulszeitraum, einen Strahlungspuls mit einer Pulsdauer tp, die kürzer ist, als der Strahlungspulszeitraum zu senden und in einem zeitlich zusammenhängenden Dunkelzeitraum keinen Strahlungspuls zu senden.    —810

Erfassen unterschiedlicher Strahlungsmengen mit einer Erfassungseinrichtung, die ausgebildet ist, um in zwei überlappenden Erfassungszeiträumen, während des Strahlungszeitraumes Reflexionen des Strahlungspulses an einer Objektoberfläche und Hintergrundstrahlung aufzunehmen und/oder während des Dunkelzeitraumes eine Hintergrundstrahlung aufzunehmen.    —820

Ermitteln eines Signals, das von dem zu messenden Abstand abhängt, basierend auf den erfassten Strahlungsmengen.    —830

## FIG 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19833207 A1
- EP 104366 B1

- WO 2007031102 A1